(19) **Europäisches Patentamt / European Patent Office / Office européen des brevets**

(11) **EP 2 063 090 B1**

(12) **EUROPEAN PATENT SPECIFICATION**

(45) Date of publication and mention
of the grant of the patent:
**08.01.2014 Bulletin 2014/02**

(51) Int Cl.:
*F02D 41/02* (2006.01)     *F01N 3/023* (2006.01)

(21) Application number: **08169891.2**

(22) Date of filing: **25.11.2008**

(54) **Control apparatus for internal combustion engine**

Steuervorrichtung für einen Verbrennungsmotor

Appareil de contrôle pour moteur à combustion interne

(84) Designated Contracting States:
**DE FR GB IT**

(30) Priority: **26.11.2007   JP 2007304835**

(43) Date of publication of application:
**27.05.2009   Bulletin 2009/22**

(73) Proprietor: **TOYOTA JIDOSHA KABUSHIKI KAISHA**
**Toyota-shi, Aichi-ken, 471-8571 (JP)**

(72) Inventor: **Yoshioka, Mamoru**
**Toyota-shi,**
**Aichi 471-8571 (JP)**

(74) Representative: **TBK**
**Bavariaring 4-6**
**80336 München (DE)**

(56) References cited:
**EP-A- 0 758 713     EP-A- 1 510 671**
**EP-A- 1 953 358     WO-A-02/086301**

**Description**

BACKGROUND OF THE INVENTION

Field of the Invention

The present invention relates to a control apparatus for an internal combustion engine including a particulate collection filter and a three-way catalyst in an exhaust passage.

Description of the Related Art

Conventionally, there has been known a control apparatus for an internal combustion engine which collects particulates (particulate matter (PM); i.e., nano-particulates such as SOF and soot) discharged from a diesel engine, by use of a particulate collection filter (particulate filter) disposed in an exhaust passage, and, when a predetermined condition is satisfied, regenerates the particulate collection filter by burning particulates collected by the particulate collection filter. One of such conventional control apparatuses is configured such that it detects an air-fuel ratio upstream of the particulate collection filter and an air-fuel raio downstream of the particulate collection filter, determines on the basis of the detected air-fuel ratios whether or not the particulate collection filter is being regenerated (whether or not the collected particulates is burning), and changes over the operation mode of an engine on the basis of the results of the determination (see, for example, Japanese Patent Application Laid-Open (*kokai*) No. JP 2005-240719 A).

In order to burn particulates collected by a particulate collection filter, the particulate collection filter must be high in temperature, and oxygen must be supplied to the particulate collection filter. The above-described conventional control apparatus is applied to a diesel engine in which a gas mixture to be supplied to the engine is very lean. Therefore, oxygen for burning particulates is sufficiently supplied to the particulate collection filter. Thus, the above-described conventional control apparatus elevates the temperature of the particulate collection filter by, for example, delaying the timing of fuel injection, increasing the amount of injected fuel, or decreasing the amount of intake air by means of an intake throttle valve, to thereby burn the collected particulates.

In recent years, in order to reduce the amount of particulates discharged from a gasoline engine, disposing a particulate collection filter in an exhaust passage of the gasoline engine has been considered. Meanwhile, in a general gasoline engine, in order to reduce the amount of unburned substances (HC, CO, etc.) discharged to the atmosphere and the amount of nitrogen oxides ($NO_x$) discharged to the atmosphere, a three-way catalyst is provided in the exhaust passage, and the amount of fuel is controlled such that the air-fuel ratio of a gas mixture to be supplied to the engine (hereinafter also referred to as the "air-fuel ratio of the engine") becomes equal to an air-fuel ratio close to a stoichiometric air-fuel ratio.

As described above, oxygen must be supplied to the particulate collection filter in order to regenerate the particulate collection filter (in order to burn particulates). However, when the air-fuel ratio of the engine is controlled to an air-fuel ratio near the stoichiometric air-fuel ratio, oxygen is hardly supplied to the particulate collection filter. In particular, in the case where an upstream catalyst, which is a three-way catalyst, is provided upstream of the particulate collection filter, oxygen is consumed and stored by the upstream catalyst, so that the amount of oxygen flowing into the particulate collection filter becomes very small. Accordingly, in order to regenerate the particulate collection filter in the gasoline engine, oxygen must be supplied to the particulate collection filter by controlling the air-fuel ratio of the engine to a lean-side air-fuel ratio in relation to (compared to) the stoichiometric air-fuel ratio (hereinafter referred to as a "lean air-fuel ratio"). However, setting the air-fuel ratio of the engine to a lean air-fuel ratio irrespective of the state of the three-way catalyst may cause a case where "a large amount of nitrogen oxides, which are discharged from the engine when the air-fuel ratio of the engine is a lean air-fuel ratio, cannot be removed by the three-way catalyst, and thus, a large amount of nitrogen oxides may be discharged to the atmosphere."

Document WO 2002/086301 A discloses a control apparatus for a Diesel engine having a particulate collection filter in an exhaust passage, and a downstream catalyst which is a three-way catalyst.

Document EP 1 953 358 A discloses a control apparatus for a Diesel engine having a catalyst which is downstream of a particulate collection filter.

SUMMARY OF THE INVENTION

Accordingly, the object of the present invention is to provide a control apparatus for an internal combustion engine (gasoline engine) including a particulate collection filter and a three-way catalyst in an exhaust passage, the control apparatus being capable of regenerating the particulate collection filter (burning particulates collected by the particulate collection filter), without increasing the discharge amount of nitrogen oxides.

The above object is solved by a control apparatus for an internal combustion engine having the features of claim 1. Advantageous further developments are subject matter of the dependent claims.

This control apparatus for an internal combustion engine according to the present invention comprises a particulate collection filter, a downstream catalyst, reduced-state determination means, and air-fuel-ratio control means.

The particulate collection filter is disposed in an exhaust passage of the internal combustion engine. In the case where the internal combustion engine is a multi-cylinder internal combustion engine, the particulate collection filter is interposed in an exhaust passage at a location downstream of a merging portion of an exhaust manifold connected to the cylinders (the merging portion is a portion where branch portions connected to the cylinders merge together). The control apparatus may comprise an upstream catalyst, which is a three-way catalyst and has an oxygen storage function and which is disposed in the exhaust passage at a location upstream of the particulate collection filter (however, downstream of the merging portion of the exhaust manifold).

The downstream catalyst is disposed in the exhaust passage at a location downstream of the particulate collection filter. The downstream catalyst is a three-way catalyst and has an oxygen storage function.

The reduced-state determination means determines whether or not the downstream catalyst (the state of the downstream catalyst) has reached a "reduced state in which the downstream catalyst can remove at least a predetermined amount (a predetermined amount or more) of nitrogen oxides ($NO_x$)." Such a "reduced state" can be said to be a state in which the amount of oxygen stored in the downstream catalyst is smaller than the maximum oxygen storage amount of the downstream catalyst by a certain amount (for example, a first predetermined amount), and, the downstream catalyst can store oxygen molecules taken from the nitrogen oxides even when the predetermined amount of nitrogen oxides flow into the downstream catalyst.

The air-fuel-ratio control means controls the averaged air-fuel ratio of a gas mixture (gas mixture containing air and fuel) to be supplied to the engine to a "first air-fuel ratio" within a "predetermined air-fuel ratio range including the stoichiometric air-fuel ratio." This control is also called "near stoichiometric air-fuel ratio control." When the downstream catalyst is determined to have reached the reduced state, the air-fuel-ratio control means controls the averaged air-fuel ratio of the gas mixture to be supplied to the engine to a "second air-fuel ratio" which is "on the lean side in relation to (compared to) the first air-fuel ratio and on the lean side in relation to (compared to) the stoichiometric air-fuel ratio." This control is also called "filter regeneration control" and is executed over a predetermined period of time (filter generation period). When the averaged air-fuel ratio of the gas mixture to be supplied to the engine is controlled to the second air-fuel ratio, excessive oxygen discharged from the engine is supplied to the particulate collection filter, and particulates collected by the particulate collection filter are burned. That is, the particulate collection filter is regenerated.

The above-described "first air-fuel ratio within a predetermined air-fuel ratio range including the stoichiometric air-fuel ratio" means an air-fuel ratio within the range of a so-called "window" of the downstream catalyst. This "window" is an air-fuel ratio range in which unburned substances (HC, CO) and nitrogen oxides ($NO_x$) can be removed simultaneously at respective high removal ratios (or high conversion ratios, high purifying efficiency) equal to or greater than a predetermined ratio. Therefore, according to the above-described control apparatus, unburned substances and nitrogen oxides discharged from the engine in an ordinary state are removed by means of the near stoichiometric air-fuel ratio control and the downstream catalyst (and, by means of the upstream catalyst, when provided).

The first air-fuel ratio is desirably an air-fuel ratio which falls within the predetermined air-fuel ratio range and is slightly shifted toward the rich side from the stoichiometric air-fuel ratio, because of the following reason. Whereas the "unburned substance removal ratio" of the three-way catalyst drops relatively gently even when the air-fuel ratio of the engine shifts slightly toward the rich side from the window range, the "nitrogen oxide removal ratio" of the three-way catalyst drops sharply when the air-fuel ratio of the engine shifts slightly toward the lean side from the window range.

As described above, oxygen must be supplied to the particulate collection filter in order to burn particulates collected by the particulate collection filter. In order to supply oxygen to the particulate collection filter, the engine must be operated to discharge excessive oxygen by means of setting the averaged air-fuel ratio of the gas mixture to be supplied to the engine to an air-fuel ratio (the second air-fuel ratio) shifted toward the lean side from the stoichiometric air-fuel ratio. However, when the averaged air-fuel ratio of the gas mixture to be supplied to the engine is an air-fuel ratio shifted toward the lean side from the stoichiometric air-fuel ratio, a large amount of nitrogen oxides are discharged from the engine.

In view of the above, the control apparatus of the present invention determines whether or not the downstream catalyst has reached the "reduced state in which the downstream catalyst can remove the predetermined amount of nitrogen oxides." When the downstream catalyst is determined to have reached the "reduced state," the control apparatus controls the averaged air-fuel ratio of the gas mixture to be supplied to the engine to an air-fuel ratio (the second air-fuel ratio) which is on the lean side in relation to (or compared to) the stoichiometric air-fuel ratio. As a result, oxygen is supplied to the particulate collection filter, whereby particulates collected by the particulate collection filter burn, and thus, the particulate collection filter is regenerated. Moreover, nitrogen oxides discharged from the engine are removed (reduced) by the "downstream catalyst in the reduced state." Accordingly, the control apparatus of the present invention can regenerate the particulate collection filter, without increasing the discharge amount of nitrogen oxides.

Further, in the case where the control apparatus includes a downstream air-fuel ratio sensor which is disposed in the exhaust passage to be located between the particulate collection filter and the downstream catalyst and which outputs an output value corresponding to an air-fuel ratio of a gas flowing through a region where the sensor is disposed, the air-fuel-ratio control means may be configured as follows.

That is, the air-fuel-ratio control means is configured to execute sub feedback control in order to execute the near stoichiometric air-fuel ratio control, in such a manner that, when the output value output from the downstream air-fuel ratio sensor is a value corresponding to a lean-side air-fuel ratio in relation to (or compared to) a downstream target air-fuel ratio set as the first air-fuel ratio, the air-fuel-ratio control means changes the air-fuel ratio of the gas mixture to be supplied to the engine to a further rich-side air-fuel ratio; and, when the output value output from the downstream air-fuel ratio sensor is a value corresponding to a rich-side air-fuel ratio in relation to (or compared to) the downstream target air-fuel ratio, the air-fuel-ratio control means changes the air-fuel ratio of the gas mixture to be supplied to the engine to a further lean-side air-fuel ratio.

The expression of "changes the air-fuel ratio of the gas mixture to be supplied to the engine to a further rich-side air-fuel ratio" means to change the air-fuel ratio of the gas mixture to be supplied to the engine to an air-fuel ratio which is shifted toward the rich side from the air-fuel ratio of the gas mixture supplied to the engine at that point in time. That is, the expression means to shift the air-fuel ratio of the gas mixture to be supplied to the engine toward richer side. The expression of "changes the air-fuel ratio of the gas mixture to be supplied to the engine to a further lean-side air-fuel ratio" means to change the air-fuel ratio of the gas mixture to be supplied to the engine to an air-fuel ratio which is shifted toward the lean side from the air-fuel ratio of the gas mixture supplied to the engine at that point in time. That is, the expression means to shift the air-fuel ratio of the gas mixture to be supplied to the engine toward leaner side.

By virtue of this configuration, the sub feedback control for realizing the near stoichiometric air-fuel ratio control is executed over a portion or the entirety of a period in which the downstream catalyst is determined to have not yet reached the reduced state. Upon execution of this sub feedback control, the averaged air-fuel ratio of the gas flowing into the downstream catalyst falls within the range of the window of the downstream catalyst more reliably, so that unburned substances and nitrogen oxides are removed efficiently.

Further, the air-fuel-ratio control means is configured to execute lean maintaining control so as to execute (or realize) the filter regeneration control when the downstream catalyst is determined to have reached the reduced state. In the lean maintaining control, even when the output value output from the downstream air-fuel ratio sensor is a value corresponding to a lean-side air-fuel ratio in relation to (or compared to) the downstream target air-fuel ratio, the air-fuel-ratio control means maintains the averaged air-fuel ratio of the gas mixture to be supplied to the engine at the second air-fuel ratio, without changing the air-fuel ratio of the gas mixture to be supplied to the engine to a further rich-side air-fuel ratio.

In this case, the air-fuel ratio of the gas mixture to be supplied to the engine may be always controlled to the second air-fuel ratio, which is shifted toward the lean side from the stoichiometric air-fuel ratio. Alternatively, the air-fuel ratio of the gas mixture to be supplied to the engine may be alternately controlled to rich-side and lean-side air-fuel ratios in relation to (or compared to) the second air-fuel ratio such that the average thereof is controlled to the second air-fuel ratio.

By virtue of this configuration, when the downstream catalyst is determined to have reached the reduced state, the lean maintaining control is executed, whereby oxygen is supplied to the particulate collection filter. As a result, particulates collected by the particulate collection filter burn, and thereby, the particulate collection filter is regenerated. Further, a large amount of nitrogen oxides, which are discharged from the engine as a result of the air-fuel ratio of the gas mixture to be supplied to the engine being maintained at an "air-fuel ratio shifted toward the lean side from the stoichiometric air-fuel ratio", are removed (reduced) by the downstream catalyst having reached the reduced state. Accordingly, the control apparatus of the present invention can regenerate the particulate collection filter, without increasing the discharge amount of nitrogen oxides.

In this case, in order to execute the filter regeneration control, the air-fuel-ratio control means is desirably configured to stop the above-described sub feedback control.

Further, when the control apparatus includes the above-described downstream air-fuel ratio sensor, preferably, the air-fuel-ratio control means is configured to continue the filter regeneration control up to a point in time when the output value output from the downstream air-fuel ratio sensor becomes equal to a value corresponding to a lean-side air-fuel ratio in relation to (or compared to) the stoichiometric air-fuel ratio after the output value has become equal to a value corresponding to the stoichiometric air-fuel ratio after start of the filter regeneration control.

When the filter regeneration control is started, oxygen is supplied to the particulate collection filter, and particulates start to burn within the particulate collection filter. As a result, the particulates burning within the particulate collection filter consume oxygen, and no oxygen flows out of the particulate collection filter. Therefore, the output value output from the downstream air-fuel ratio sensor becomes equal to a value corresponding to the stoichiometric air-fuel ratio. That is, the fact that the output value output from the downstream air-fuel ratio sensor coincides with a value corresponding to the stoichiometric air-fuel ratio after a point in time when the filter regeneration control has been started means that the particulates may be burning (the particulate collection filter may be in the middle of regeneration). When the particulates are burning as mentioned above, oxygen is not supplied to the downstream catalyst, so that the state of the downstream catalyst (the reducing capacity of the downstream catalyst for removing nitrogen oxides) hardly changes. When substantially all the particulates have burned afterward, oxygen supplied to the particulate collection filter is not consumed within the particulate collection filter, and flows out of the particulate collection filter. As a result, the output value output from the downstream air-fuel ratio sensor becomes equal to a value corresponding to a lean-side air-fuel ratio in relation to (or compared to) the stoichiometric air-fuel ratio.

In view of the above, the present control apparatus continues the filter regeneration control at least up to a point in time when the output value output from the downstream air-fuel ratio sensor becomes equal to a value corresponding to an air-fuel ratio shifted toward the lean side from the stoichiometric air-fuel ratio by a predetermined amount (that point in time will be referred to as the "lean inversion time") after the output value has become equal to a value corresponding to the stoichiometric air-fuel ratio after start of the filter regeneration control. In other words, the present control apparatus stops the filter regeneration control at a predetermined point in time after that "lean inversion time." By virtue of this configuration, it becomes possible to prevent the filter regeneration control from being stopped even when particulates to be burned remain within the particulate collection filter and the downstream catalyst is still in a state in which it can sufficiently remove nitrogen oxides. Further, it is possible to prevent the filter regeneration control (the lean maintaining control) from being continued unnecessarily, which would otherwise cause nitrogen oxides to flow into the downstream catalyst in an excessive amount or an amount in excess of the nitrogen oxide removal capacity (the reducing capacity) of the downstream catalyst. Accordingly, discharge of a large amount of nitrogen oxides can be avoided.

Incidentally, the reduced-state determination means may be configured to obtain a "first cumulative value" corresponding to a cumulative value of a "reduction component excessive amount" obtained by subtracting, from an "amount of reduction components," which are unburned substances discharged from the engine to the exhaust passage, an "amount of oxidation components" which are discharged from the engine and oxidize the reduction components, and be configured to determine on the basis of the first cumulative value whether or not the downstream catalyst has reached the reduced state.

The amount of oxygen stored in the downstream catalyst (hereinafter referred to as the "oxygen storage amount of the downstream catalyst") decreases as reduction components (components which take oxygen from oxidation components) flow into the downstream catalyst in an excessive amount as compared with the oxidation components (components capable of supplying oxygen to the reduction components which are unburned substances). As the oxygen storage amount of the downstream catalyst decreases, the downstream catalyst can store more oxygen, and thus, can reduce (remove) a larger amount of nitrogen oxides. Therefore, the determination as to whether or not the downstream catalyst has reached the reduced state can be readily made by obtaining the "first cumulative value" corresponding to the "cumulative value of the reduction component excessive amount" and by determining the state of the downstream catalyst on the basis of the first cumulative value as described above.

In the case where the control apparatus of the present invention comprises fuel cut means for stopping supply of fuel to the engine when the engine enters a predetermined fuel-cut operating state, preferably, the reduced-state determination means is configured to obtain the first cumulative value whose cumulative calculation is started at "predetermined first accumulation start time" after a "fuel-cut end time" at which the stoppage of supply of fuel to the engine by the fuel cut means is canceled and the supply of fuel to the engine is resumed, determine whether or not the first cumulative value has become equal to or greater than a first predetermined value, and determine that the downstream catalyst has reached the reduced state when the first cumulative value is determined to have become equal to or greater than the first predetermined value.

When the engine enters a fuel-cut operating state, in which the supply of fuel to the engine is stopped, a large amount of oxygen is discharged from the engine. As a result, in general, the oxygen storage amount of the downstream catalyst reaches the maximum oxygen storage amount (or an amount near the maximum oxygen storage amount). Therefore, the "first cumulative value" having been being calculated from the "predetermined first accumulation start time" after a point in time when the fuel cut state ends (i.e., after the fuel-cut end time) becomes a value corresponding to a decrease amount of the oxygen storage amount of the downstream catalyst. Therefore, the determination as to whether or not the downstream catalyst has reached the reduced state can be readily made by determining whether or not the first cumulative value obtained in the above-described manner has become equal to or greater than the first predetermined value. It should be noted that, in the case where the engine includes the above-described upstream catalyst, the first cumulative value becomes a value corresponding to a decrease amount of the oxygen storage amount from the sum of the oxygen storage amount of the upstream catalyst and the oxygen storage amount of the downstream catalyst. In this case, the oxygen storage amount of the upstream catalyst first reaches "0" and the oxygen storage amount of the downstream catalyst then starts to decrease. Consequently, the first cumulative value becomes a value corresponding to a reduction amount of the oxygen storage amount of the downstream catalyst.

In the case where the control apparatus is configured to determine "whether or not the downstream catalyst has reached the reduced state" by use of the first cumulative value having been being calculated from the predetermined first accumulation start time, preferably, the air-fuel-ratio control means controls the averaged air-fuel ratio of the gas mixture to be supplied to the engine to an air-fuel ratio shifted toward the rich side from the stoichiometric air-fuel ratio in at least a "post fuel cut period," which is a period between the "fuel cut end time" and a "time when the first cumulative value becomes equal to or greater than the first predetermined value."

By virtue of this configuration, the oxygen storage amount of the downstream catalyst can be decreased within a short period of time after the end of the fuel cut. Accordingly, after a relatively short period of time has elapsed following the fuel cut end time, even if nitrogen oxides flow into the downstream catalyst, the downstream catalyst can remove the nitrogen oxides. Moreover, since the downstream catalyst can be caused to reach the above-described reduced state within a relatively short period of time after the end of the fuel cut, the particulate collection filter can be regenerated (filter regeneration control can be started) early.

In the case where the control apparatus is configured to control, in the post fuel cut period, the averaged air-fuel ratio of the gas mixture to be supplied to the engine to an air-fuel ratio shifted toward the rich side from the stoichiometric air-fuel ratio, and includes a downstream air-fuel ratio sensor which is disposed in the exhaust passage to be located between the particulate collection filter and the downstream catalyst and which outputs an output value corresponding to an air-fuel ratio of a gas flowing through a region where the sensor is disposed, preferably, the air-fuel-ratio control means is configured as follows.

In the post fuel cut period, the air-fuel-ratio control means selects, as a post fuel cut target air-fuel ratio, either of an "air-fuel ratio which falls within the predetermined air-fuel ratio range and is shifted toward the rich side from the stoichiometric air-fuel ratio" and an "air-fuel ratio which falls outside the predetermined air-fuel ratio range and is shifted toward the rich side from the stoichiometric air-fuel ratio."

Further, the air-fuel-ratio control means is configured to execute "post fuel cut feedback control" in such a manner that, when the output value output from the downstream air-fuel ratio sensor is a value corresponding to a lean-side air-fuel ratio in relation to (or compared to) the post fuel cut target air-fuel ratio, the air-fuel-ratio control means changes the air-fuel ratio of the gas mixture to be supplied to the engine to a further rich-side air-fuel ratio; and, when the output value output from the downstream air-fuel ratio sensor is a value corresponding to a rich-side air-fuel ratio in relation to (or compared to) the post fuel cut target air-fuel ratio, the air-fuel-ratio control means changes the air-fuel ratio of the gas mixture to be supplied to the engine to a further lean-side air-fuel ratio.

By virtue of this configuration, in a period between the fuel cut end time and a time when the first cumulative value becomes equal to or greater than the first predetermined value (i.e., in the above-mentioned post fuel cut period), the averaged air-fuel ratio of the gas mixture to be supplied to the engine is accurately controlled to an air-fuel ratio shifted toward the rich side from the stoichiometric air-fuel ratio (the post fuel cut target air-fuel ratio) on the basis of the output value of the downstream air-fuel ratio sensor. Accordingly, the filter regeneration control can be started within a relatively short period of time after the fuel cut end time.

In this case, preferably, the post fuel cut target air-fuel ratio is set to an air-fuel ratio which falls within the predetermined air-fuel ratio range and is shifted toward the rich side from the stoichiometric air-fuel ratio by a predetermined amount, and the first air-fuel ratio is set to be equal to the post fuel cut target air-fuel ratio.

In other words, the air-fuel-ratio control means employs, as the first air-fuel ratio, an air-fuel ratio range which falls within the range of the window of the downstream catalyst and is shifted toward the rich side from the stoichiometric air-fuel ratio, and feedback-controls (sub feedback controls) the air-fuel ratio of the gas mixture to be supplied to the engine on the basis of the first air-fuel ratio and the output value of the downstream air-fuel ratio sensor such that the averaged air-fuel ratio of the gas mixture coincides with the first air-fuel ratio in (a portion or the entirety of) a period which includes the post fuel cut period but excludes a period in which the filter regeneration control is executed.

By virtue of this configuration, the first air-fuel ratio is set to an air-fuel ratio which falls within the predetermined air-fuel ratio range and is slightly shifted toward the rich side from the stoichiometric air-fuel ratio. Therefore, even when the air-fuel ratio of the engine shifts slightly toward the lean side from the window range, discharge of a large amount of nitrogen oxides can be avoided.

In the case where the control apparatus includes an upstream catalyst which is a three-way catalyst and which is disposed in the exhaust passage to be located upstream of the particulate collection filter, preferably, the reduced-state determination means sets the first accumulation start time to the fuel cut end time, obtains the maximum oxygen storage amount of the upstream catalyst, and determines the first predetermined value such that the first predetermined value becomes greater, as the obtained maximum oxygen storage amount of the upstream catalyst becomes greater.

When fuel cut operation is performed, in general, the oxygen storage amount of the upstream catalyst reaches the maximum oxygen storage amount of the upstream catalyst (or an amount near the maximum oxygen storage amount). Therefore, after the fuel cut end time, excessive reduction components discharged from the engine are first oxidized (consumed) by the upstream catalyst. The amount of excessive reduction components consumed by the upstream catalyst depends on the maximum oxygen storage amount of the upstream catalyst. When the oxygen storage amount of the upstream catalyst becomes substantially "0" afterward, the reduction components pass through the particulate collection filter and flow into the downstream catalyst, whereby the state of the downstream catalyst starts to change toward the above-described reduced state. Therefore, the amount of excessive reduction components which flow into the downstream catalyst, out of the amount of excessive reduction components indicated by the first cumulative value calculated with the first accumulation start time which is set to the fuel cut end time, changes depending on the maximum oxygen storage amount of the upstream catalyst.

Therefore, the determination as to whether the downstream catalyst has reached the above-described reduced condition can be accurately made by determining the first predetermined value such that the greater the maximum oxygen storage amount of the upstream catalyst, the greater the first predetermined value.

Meanwhile, in the case where the air-fuel ratio control means is configured to control, in the post fuel cut period, the averaged air-fuel ratio of the gas mixture to be supplied to the engine to an air-fuel ratio shifted toward the rich side from the stoichiometric air-fuel ratio; and the control apparatus further includes:

a downstream air-fuel ratio sensor which is disposed in the exhaust passage to be located between the particulate collection filter and the downstream catalyst and which outputs an output value corresponding to an air-fuel ratio of a gas flowing through a region where the sensor is disposed, and

an upstream catalyst which is a three-way catalyst and which is disposed in the exhaust passage to be located upstream of the particulate collection filter,

the reduced-state determination means preferably sets the first accumulation start time to a "rich inversion time"; i.e., a point in time when the output value output from the downstream air-fuel ratio sensor has first become a value corresponding to a rich-side air-fuel ratio in relation to (or compared to) the stoichiometric air-fuel ratio (an air-fuel ratio shifted toward the rich side from the stoichiometric air-fuel ratio by a predetermined amount which includes "0") after the "fuel cut end time."

In general, when the fuel cut operation is performed, the oxygen storage amount of the upstream catalyst reaches the maximum oxygen storage amount of the upstream catalyst (or an amount near the maximum oxygen storage amount). Therefore, even if the averaged air-fuel ratio of the gas mixture to be supplied to the engine is controlled to an air-fuel ratio shifted toward the rich side from the stoichiometric air-fuel ratio during the post fuel cut period, the reduction components do not flow into the downstream catalyst until the oxygen storage amount of the upstream catalyst becomes substantially "0." Thus, the "point in time when excessive reduction components start to flow into the downstream catalyst" within the post fuel cut period changes depending on the maximum oxygen storage amount of the upstream catalyst.

Meanwhile, the above-described rich inversion time is a point in time when the oxygen storage amount of the upstream catalyst reaches substantially "0" and a point in time when excessive reduction components start to flow into the downstream catalyst. Accordingly, the determination as to whether the downstream catalyst has reached the reduced condition can be accurately made on the basis of the first cumulative value by, as in the above-described configuration, adopting the "rich inversion time" as the point in time when accumulation of excessive reduction components is started (the first accumulation start time), irrespective of the maximum oxygen storage amount of the upstream catalyst.

In the above-described control apparatus for an internal combustion engine of the present invention, preferably, the air-fuel-ratio control means is configured such that, from a predetermined second accumulation start time after start of the filter regeneration control, the air-fuel-ratio control means obtains a "second cumulative value" corresponding to a cumulative value of an "oxidation component excessive amount" which is obtained by subtracting, from an "amount of oxidation components" discharged from the engine to the exhaust passage, an "amount of reduction components," which are unburned substances discharged from the engine and reduce the oxidation components, and ends the filter regeneration control when the obtained second cumulative value becomes equal to or greater than a second predetermined value.

In the case where the upstream catalyst is not provided, the second cumulative value, which is the cumulative value of the "oxidation component excessive amount" from the second accumulation start time, corresponds to an amount of oxidation components having flowed into the particulate collection filter. In the case where the upstream catalyst is provided, the second cumulative value corresponds to the sum of the amount of oxidation components having flowed into the particulate collection filter and an amount of oxidation components required to increase the oxygen storage amount of the upstream catalyst up to the maximum oxygen storage amount of the upstream catalyst. Thus, the second cumulative value is a quantity related to the amount of oxidation components flowing into the particulate collection filter, and, therefore, is quantity corresponding to the amount of particulates burned in the particulate collection filter.

Accordingly, by virtue of the above-described configuration, when an amount of particulates corresponding to the second cumulative value has been burned, the filter regeneration control can be stopped. In other words, excessive continuation of the filter regeneration control can be avoided by appropriately setting the above-mentioned second predetermined value, which is to be compared with the second cumulative value. That is, it is possible to prevent nitrogen oxides from flowing into the downstream catalyst in an amount exceeding the nitrogen oxide removal capacity of the downstream catalyst due to the filter regeneration control. As a result, it is possible to prevent a large amount of nitrogen oxides from being discharged into the atmosphere.

In this case, preferably, the air-fuel-ratio control means sets the second accumulation start time to a point in time when the filter regeneration control is started.

By virtue of this, an "amount of excessive oxidation components" flowing into the particulate collection filter (when the upstream catalyst is provided, into both the upstream catalyst and the particulate collection filter) from the point in time when the filter regeneration control is started can be obtained as the "second cumulative value."

In the case where the second accumulation start time is set to the point in time when the filter regeneration control is started, and the control apparatus includes the above-described upstream catalyst, preferably, the air-fuel-ratio control means is configured to obtain the maximum oxygen storage amount of the upstream catalyst, and determine the second predetermined value such that the second predetermined value becomes larger as the obtained maximum oxygen storage amount of the upstream catalyst is greater.

When the filter regeneration control is started, the downstream catalyst is in the above-described reduced state. At that time, the oxygen storage amount of the upstream catalyst is substantially "0." Accordingly, a "point in time when supply of oxygen to the particulate collection filter is started" after start of the filter regeneration control is a point in time when a time period required for the oxygen storage amount of the upstream catalyst to reach its maximum oxygen storage amount is elapsed after the start of the filter regeneration control. In other words, the "point in time when supply of oxygen to the particulate collection filter is started" after start of the filter regeneration control changes depending on the maximum oxygen storage amount of the upstream catalyst. Accordingly, the "amount of reduction components consumed by the downstream catalyst during the filter regeneration control" depends on the maximum oxygen storage amount of the upstream catalyst and the amount of particulates burned in the particulate collection filter.

Therefore, as in the above-described configuration, if the second predetermined value is set such that the second predetermined value is larger as the maximum oxygen storage amount of the upstream catalyst becomes greater, the "amount of excessive oxidation components" supplied to both the particulate collection filter and the downstream catalyst can be controlled to a desired amount irrespective of the maximum oxygen storage amount of the upstream catalyst. As a result, an appropriate amount of particulates can be burned, and it is possible to avoid a situation that "nitrogen oxides flows into the downstream catalyst in an amount exceeding the nitrogen oxide removal capacity of the downstream catalyst, and thus a large amount of nitrogen oxides is discharged into the atmosphere."

In the case where the control apparatus includes the upstream catalyst and the downstream air-fuel ratio sensor, instead of setting the second accumulation start time to the point in time when the filter regeneration control is started, it is preferable that the air-fuel-ratio control means set the second accumulation start time to the "lean inversion time," which is a point in time when the output value output from the downstream air-fuel ratio sensor has first become a value corresponding to an air-fuel ratio shifted toward the lean side from the stoichiometric air-fuel ratio by a predetermined amount, after the start of the filter regeneration control.

As described above, the "point in time when supply of oxygen to the particulate collection filter is started" after start of the filter regeneration control changes depending on the maximum oxygen storage amount of the upstream catalyst. Meanwhile, the point in time when supply of oxygen to the downstream catalyst is started generally coincides with the "lean inversion time." This lean inversion time is also close to a point in time when the oxygen storage amount of the upstream catalyst has substantially reached its maximum oxygen storage amount.

Therefore, when the "lean inversion time" is set to a point in time when accumulation of excessive oxidation components is started (the second accumulation start time) as in the above-described configuration, the "amount of excessive oxidation components" supplied to the downstream catalyst can be controlled to a desired amount irrespective of the maximum oxygen storage amount of the upstream catalyst. As a result, it is possible to prevent nitrogen oxides from flowing into the downstream catalyst in an amount exceeding the nitrogen oxide removal capacity of the downstream catalyst. That is, the filter regeneration control can be ended at a point in time before a large amount of nitrogen oxides is discharged into the atmosphere. In other words, the particulate collection filter can be regenerated without increasing the amount of discharged nitrogen oxides.

In such a control apparatus, preferably, the air-fuel-ratio control means is configured to obtain, as the second cumulative value, a value corresponding to a cumulative value of intake air amount of the engine from the second accumulation start time.

During the filter regeneration control, the averaged air-fuel ratio of the gas mixture to be supplied to the engine is controlled to the second air fuel ratio shifted toward the lean side from the stoichiometric air-fuel ratio. Accordingly, the amount of excessive oxidation components discharged from the engine can be considered to be generally proportional to the intake air amount of the engine. Therefore, as in the above-described configuration, the second cumulative value can be easily obtained by accumulating the intake air amount of the engine from the second accumulation start time.

The control apparatus for an internal combustion engine of the present invention may be configured so as to perform main feedback control and sub feedback control.

That is, the control apparatus for an internal combustion engine of the present invention may comprise:

an upstream catalyst which is a three-way catalyst disposed in an exhaust passage of the internal combustion engine;
a particulate collection filter disposed in the exhaust passage at a location downstream of the upstream catalyst;
a downstream catalyst which is a three-way catalyst disposed in the exhaust passage at a location downstream of the particulate collection filter;
an upstream air-fuel ratio sensor which is disposed in the exhaust passage at a location upstream of the upstream catalyst and which outputs an output value corresponding to an air-fuel ratio of a gas flowing through a region where the upstream air-fuel ratio sensor is disposed;
a downstream air-fuel ratio sensor which is disposed in the exhaust passage at a location between the particulate collection filter and the downstream catalyst and which outputs an output value corresponding to an air-fuel ratio of a gas flowing through a region where the downstream air-fuel ratio sensor is disposed;
reduced-state determination means for determining whether or not the downstream catalyst has reached a reduced state in which the downstream catalyst can remove a predetermined amount of nitrogen oxides;
main feedback control means for executing main feedback control in response to an instruction;
sub feedback control means for executing sub feedback control in response to an instruction; and
instruction means for supplying instructions to the main feedback control means and the sub feedback control means.

In this case, the main feedback control is air-fuel-ratio feedback control for changing the air-fuel ratio of the gas mixture to be supplied to the engine on the basis of the output value output from the upstream air-fuel ratio sensor such that the air-fuel ratio indicated by the output value output from the upstream air-fuel ratio sensor coincides with (or becomes equal to) an upstream target air-fuel ratio.

Further, the sub feedback control is air-fuel-ratio sub feedback control which is performed in accordance with an instruction in such a manner that, when the output value output from the downstream air-fuel ratio sensor is a value corresponding to a lean-side air-fuel ratio with respect to (or in relation to) the downstream target air-fuel ratio, which is an air-fuel ratio shifted toward the rich side from the stoichiometric air-fuel ratio by a predetermined amount, the air-fuel ratio of the gas mixture to be supplied to the engine is changed to a further rich-side air-fuel ratio; and, when the output value output from the downstream air-fuel ratio sensor is a value corresponding to a rich-side air-fuel ratio with respect to (or in relation to) the downstream target air-fuel ratio, the air-fuel ratio of the gas mixture to be supplied to the engine is changed to a further lean-side air-fuel ratio.

The instruction means supplies instructions to the main feedback control means and the sub feedback control means such that

(1) until the downstream catalyst is determined to have reached the reduced state, the upstream target air-fuel ratio is set to the stoichiometric air-fuel ratio, and the main and sub feedback controls are executed to thereby execute "ordinary feedback control;" and

(2) after a point in time when the downstream catalyst is determined to have reached the reduced state, "filter regeneration control" is executed over a predetermined period of time in such a manner that the upstream target air-fuel ratio is set to a lean air-fuel ratio, which is an air-fuel ratio shifted toward the lean side from the stoichiometric air-fuel ratio, the main feedback control is executed, and the sub feedback control is stopped.

By virtue of the filter regeneration control, oxygen is supplied to the particulate collection filter, and particulates collected by the particulate collection filter are burned.

According to the above-described configuration, by means of the "ordinary feedback control" in which the main and sub feedback controls are executed, a transitional change in air-fuel ratio is absorbed by the main feedback control, and the averaged air-fuel ratio of the gas mixture to be supplied to the engine is caused to coincide with an "air-fuel ratio shifted toward the rich side from the stoichiometric air-fuel ratio by a predetermined amount (this air-fuel ratio is desirably an air-fuel ratio within the range of the window of the downstream catalyst)." As a result, unburned substances and nitrogen oxides are satisfactorily removed by the upstream catalyst and the downstream catalyst. Further, even when the air-fuel ratio of the engine temporarily shifts toward the lean side to some degree and a large amount of nitrogen oxides are discharged from the engine, these nitrogen oxides can be removed, because the averaged air-fuel ratio of the engine deviates toward the rich side from the stoichiometric air-fuel ratio, and the upstream catalyst and the downstream catalyst are in respective states in which they can remove the nitrogen oxides. As a result, discharge of a large amount of nitrogen oxides into the atmosphere can be avoided.

In addition, during the ordinary feedback control, excessive reduction components flow into the upstream catalyst and the downstream catalyst. Therefore, even when the oxygen storage amount of the downstream catalyst increases due to, for example, performance of fuel cut operation, the downstream catalyst reaches the reduced state when a predetermined time elapses after the fuel cut is ended.

After a point in time when the downstream catalyst is determined to have reached the reduced state, the upstream target air-fuel ratio is set to an air-fuel ratio (lean air-fuel ratio) shifted toward the lean side from the stoichiometric air-fuel ratio, and, then, the main feedback control is executed, and the sub feedback control is stopped. That is, the filter regeneration control is executed. Accordingly, a large amount of oxygen is discharged from the engine and is supplied to the particulate collection filter, whereby particulates collected by the particulate collection filter are burned. At that time, nitrogen oxides discharged from the engine are removed (reduced) by the "downstream catalyst in the reduced state." Accordingly, this control apparatus can regenerate the particulate collection filter without increasing the amount of discharged nitrogen oxides.

In this case, the reduced-state determination means is preferably configured such that, after a "predetermined first accumulation start time" during the ordinary feedback control, the reduced-state determination means obtains "first cumulative value" corresponding to a cumulative value of a "reduction component excessive amount" obtained by subtracting, from an "amount of reduction components (unburned substances) which are discharged from the engine to the exhaust passage," an "amount of oxidation components which are discharged from the engine and oxidize the reduction components"; determines whether or not the first cumulative value has become equal to or greater than a first predetermined value; and determines that the downstream catalyst has reached the reduced state when the first cumulative value is determined to have become equal to or greater than the first predetermined value.

As described above, during the ordinary feedback control, excessive reduction components are discharged from the engine. Accordingly, the determination as to whether or not the downstream catalyst has reached the reduced state can be readily made, by obtaining the "first cumulative value" corresponding to the "cumulative value of the reduction component excessive amount" after a predetermined accumulation start time (first accumulation start time) during the ordinary feedback control, and further by determining the state of the downstream catalyst on the basis of the first cumulative value.

Moreover, preferably, this control apparatus includes fuel cut means for stopping supply of fuel to the engine when the engine enters (or a state of the engine becomes) a predetermined fuel-cut operating state;

the instruction means is configured to supply the instructions to the main feedback control means and the sub feedback control means such that the ordinary feedback control is executed after the "fuel cut end time," at which the stoppage of supply of fuel to the engine by the fuel cut means is canceled and the supply of fuel to the engine is resumed; and the reduced-state determination means sets the first accumulation start time to

(1) the fuel cut end time or
(2) the rich inversion time, which is a point in time when the output value output from the downstream air-fuel ratio sensor has first become a value corresponding to a rich-side air-fuel ratio with respect to (or in relation to) the stoichiometric air-fuel ratio after the fuel cut end time.

When fuel cut operation is performed, in general, the oxygen storage amounts of the upstream catalyst and the downstream catalyst reach their maximum oxygen storage amounts (or respective amounts near the maximum oxygen storage amounts). Further, since the ordinary feedback control is executed after the fuel cut end time, excessive reduction components are discharged from the engine.

Accordingly, (1) the first cumulative value calculated from its accumulation start time which is set at the fuel cut end time represents a reduction amount of the oxygen storage amounts of the upstream catalyst and the downstream catalyst, both disposed in the exhaust passage. Therefore, the first cumulative value is a value related to a reduction amount of the oxygen storage amount of the downstream catalyst (in other words, the reduction capacity of the downstream catalyst). Accordingly, on the basis of the first cumulative value obtained in the above manner, the determination as to whether or not the downstream catalyst has reached the reduced state can be made more accurately.

Further, (2) the first cumulative value calculated from its accumulation start time which is set at the "rich inversion time" more accurately represents the reduction amount of the oxygen storage amount of the downstream catalyst irrespective of the maximum storage amount of the upstream catalyst. Note that the rich inversion time is a point in time when the output value output from the downstream air-fuel ratio sensor has first become a value corresponding to a rich-side air-fuel ratio with respect to (or in relation to) the stoichiometric air-fuel ratio after the fuel cut end time. Accordingly, on the basis of the "first cumulative value" having been being calculated after the "rich inversion time," the determination as to whether or not the downstream catalyst has reached the reduced state can be made with further accuracy.

Incidentally, the reduced-state determination means is preferably configured such that, in the case where the first cumulative value is obtained when the averaged air-fuel ratio of the engine is controlled to a predetermined air-fuel ratio shifted toward the rich side from the stoichiometric air-fuel ratio, the reduced-state determination means obtains, as the first cumulative value, a value corresponding to a cumulative value of the intake air amount of the engine from the first accumulation start time.

In the case where the averaged air-fuel ratio of the engine is controlled to a predetermined air-fuel ratio shifted toward the rich side from the stoichiometric air-fuel ratio (for example, the first air-fuel ratio shifted toward the rich side from the stoichiometric air-fuel ratio, or the post fuel-cut target air-fuel ratio, or the downstream target air-fuel ratio which is an air-fuel ratio shifted toward the rich side from the stoichiometric air-fuel ratio by a predetermined amount), the amount of excessive reduction components can be considered to be generally proportional to the intake air amount of the engine. Accordingly, by virtue of the above-described configuration, the first cumulative value can be easily obtained.

Further, the control apparatus for an internal combustion engine of the present invention can be said to be a control apparatus for an internal combustion engine which comprises:

an upstream catalyst which is a three-way catalyst disposed in an exhaust passage of the internal combustion engine;
a particulate collection filter disposed in the exhaust passage at a location downstream of the upstream catalyst;
a downstream catalyst which is a three-way catalyst disposed in the exhaust passage at a location downstream of the particulate collection filter;
reduced-state determination means for determining whether or not the downstream catalyst has reached a reduced state in which the downstream catalyst can remove a predetermined amount of nitrogen oxides;
rich control means for controlling the air-fuel ratio of the gas mixture to be supplied to the engine such that the averaged air-fuel ratio of the gas mixture to be supplied to the engine becomes a week rich air-fuel ratio deviating toward the rich side from the stoichiometric air-fuel ratio, when the downstream catalyst is determined to have not yet reached the reduced state; and
lean control means for controlling the air-fuel ratio of the gas mixture  to be supplied to the engine such that the averaged air-fuel ratio of the gas mixture to be supplied to the engine becomes the lean side air-fuel ratio with respect to (or in relation to) the stoichiometric air-fuel ratio, when the downstream catalyst is determined to have reached the reduced state.

BRIEF DESCRIPTION OF DRAWINGS

FIG. 1 is a schematic diagram of an internal combustion engine to which a control apparatus (first control apparatus) according to a first embodiment of the present invention is applied;
FIG. 2 is a schematic configurational diagram of the internal combustion engine shown in FIG. 1;
FIG. 3 is a graph showing a relation between air-fuel ratio and removal ratios (purifying efficiency) of unburned components and nitrogen oxides of an upstream catalyst and a downstream catalyst shown in FIG. 1;
FIG. 4 is a graph showing a relation between air-fuel ratio and output voltage of an upstream air-fuel ratio sensor shown in FIG. 1;
FIG. 5 is a graph showing a relation between air-fuel ratio and output voltage of a downstream air-fuel ratio sensor (oxygen concentration sensor) shown in FIG. 1;
FIG. 6 is a flowchart showing a routine executed by a CPU of the first control apparatus;
FIG. 7 is a time chart used for describing operation of the first control apparatus;
FIG. 8 is a functional block diagram of the first control apparatus at the time when the first control apparatus executes air-fuel ratio control;
FIG. 9 is a functional block diagram of base-correction-value  calculation means shown in FIG. 8;
FIG. 10 is a conceptual diagram showing operating regions for which base correction values calculated by the base-correction-value calculation means shown in FIG. 8 are stored;
FIG. 11 is a flowchart showing a routine executed by the CPU of the first control apparatus so as to calculate a final fuel injection amount and instruct injection;
FIG. 12 is a flowchart showing a routine executed by the CPU of the first control apparatus so as to calculate a main feedback correction value;
FIG. 13 is a flowchart showing a routine executed by the CPU of the first control apparatus so as to calculate a sub feedback correction value;
FIG. 14 is a flowchart showing a routine executed by the CPU of the first control apparatus so as to calculate a base correction value;
FIG. 15 is a flowchart showing a routine executed by the CPU of the first control apparatus so as to determine a main feedback target value;
FIG. 16 is a flowchart showing a routine executed by the CPU of the first control apparatus so as to calculate cumulative air amount;
FIG. 17 is a flowchart showing a feedback condition determination routine executed by the CPU of the first control apparatus;
FIG. 18 is a flowchart showing a threshold determination routine executed by the CPU of a control apparatus (second control apparatus) according to a second embodiment of the present invention;
FIG. 19 is a flowchart showing a routine executed by the CPU of a control apparatus (third control apparatus) according to a third embodiment of the present invention;

FIG. 20 is a flowchart showing a routine executed by the CPU of the third control apparatus so as to set a particulate-burning completion flag;

FIG. 21 is a time chart used for describing operation of the third control apparatus;

FIG. 22 is a flowchart showing a portion of a routine executed by the CPU of the third control apparatus;

FIG. 23 is a flowchart showing a routine executed by the CPU of a control apparatus (fourth control apparatus) according to a fourth embodiment of the present invention;

FIG. 24 is a flowchart showing a routine executed by the CPU of the fourth control apparatus so as to calculate a post inversion cumulative air amount; and

FIG. 25 is a time chart used for describing operation of the fourth control apparatus.

DESCRIPTION OF THE PREFERRED EMBODIMENTS

Embodiments of a control apparatus for an internal combustion engine according to the present invention will be described with reference to the drawings.

First embodiment:

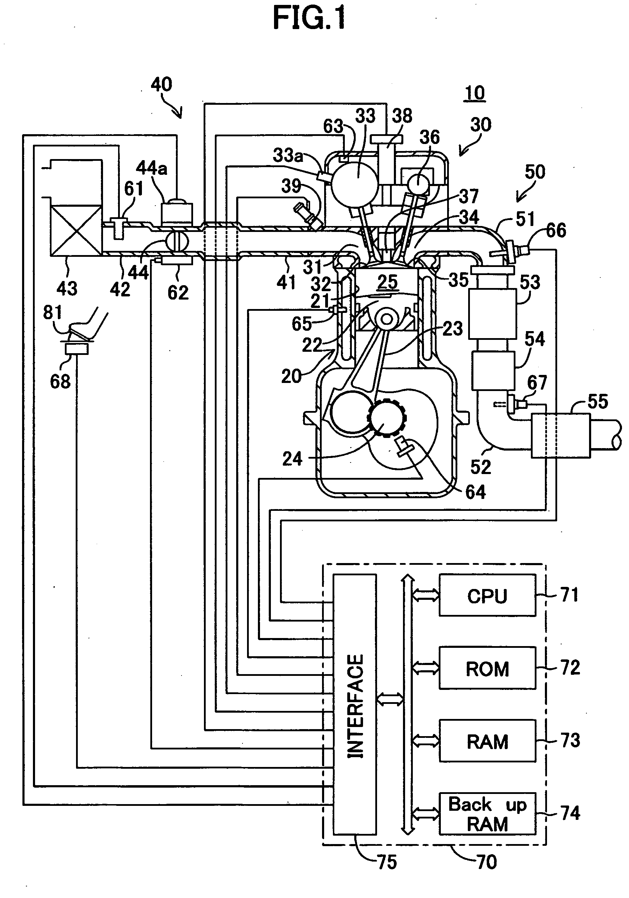

FIG. 1 schematically shows the configuration of a system configured such that a control apparatus for an internal combustion engine according to a first embodiment (hereinafter also referred to as the "first control apparatus") is applied to a spark-ignition multi-cylinder (e.g., 4-cylinder) internal combustion engine (gasoline engine) 10. This internal combustion engine 10 includes a cylinder block section 20 including a cylinder block, a cylinder block lower-case, an oil pan, etc.; a cylinder head section 30 fixed on the cylinder block section 20; an intake system 40 for supplying gasoline gas mixture to the cylinder block section 20; and an exhaust system 50 for discharging exhaust gas from the cylinder block section 20 to the exterior of the engine.

The cylinder block section 20 includes cylinders 21, pistons 22, connecting rods 23, and a crankshaft 24. Each of the pistons 22 reciprocates within the corresponding cylinder 21. The reciprocating motion of the piston 22 is transmitted to the crankshaft 24 via the respective connecting rod 23, whereby the crankshaft 24 is rotated. The cylinder 21 and the head of the piston 22 form a combustion chamber 25 in cooperation with the cylinder head section 30.

The cylinder head section 30 includes intake ports 31 communicating with the combustion chambers 25; intake valves 32 for opening and closing the intake ports 31; a variable intake timing unit 33 including an intake cam shaft for driving the intake valves 32 and continuously changing the phase angle of the intake cam shaft; an actuator 33a of the variable intake timing unit 33; exhaust ports 34 communicating with the combustion chambers 25; an exhaust valves 35 for opening and closing the exhaust ports 34; an exhaust cam shaft 36 for driving the exhaust valves 35; spark plugs 37; an igniters 38 each including an ignition coil for generating a high voltage to be applied to each of the spark plug 37; and injectors (fuel injection means) 39 for injecting fuel into the intake ports 31. In response to an injection instruction signal, the injector 39, serving as the fuel injection means, injects fuel of an amount corresponding to an instruction injection amount contained in the injection instruction signal.

The induction system 40 includes an intake manifold 41; an intake pipe (intake duct) 42, an air filter 43, a throttle valve 44, and a throttle valve actuator 44a.

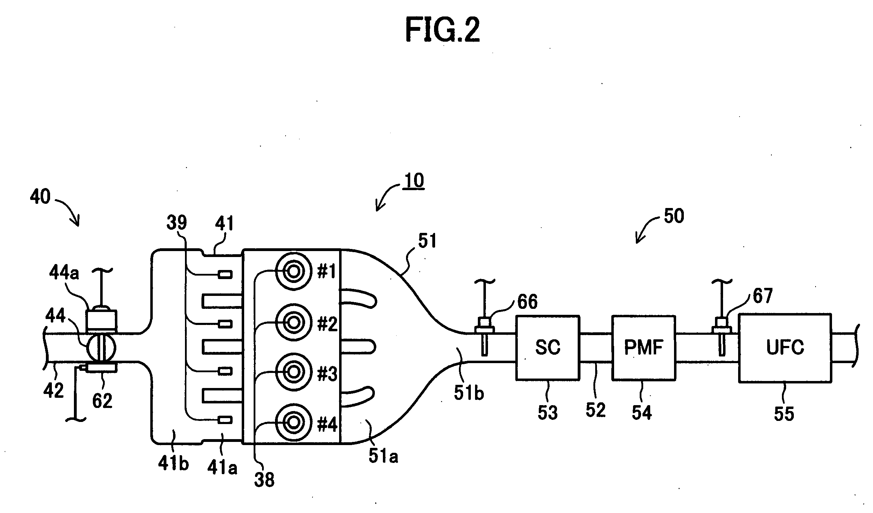

The intake manifold 41 is connected to the intake ports 31 of the combustion chambers 25 of the cylinders. More specifically, as shown in FIG. 2, the intake manifold 41 includes a plurality of branch portions 41 a each of which is connected to each of the intake ports, and a surge tank portion 41 b into which the branch portions 41 a merge. As shown in FIGS. 1 and 2, the intake pipe 42 is connected to the surge tank portion 41 b. The intake manifold 41 and the intake pipe 42 constitute an intake passage.

The air filter 43 shown in FIG. 1 is provided at an end portion of the intake pipe 42. The throttle valve 44 is rotatably supported on the intake pipe 42, and is rotated so as to change the opening cross sectional area of the intake passage formed by the intake pipe 42. The throttle valve actuator (throttle valve drive means) 44a comprises a DC motor, and rotates the throttle valve 44 in response to an instruction signal.

The exhaust system 50 includes an exhaust manifold 51, an exhaust pipe 52, an upstream catalyst 53, a particulate collection filter 54, and a downstream catalyst 55.

As shown in FIG. 1, the exhaust manifold 51 is connected to the exhaust ports 34 of the combustion chambers 25 of the cylinders. More specifically, as shown in FIG. 2, the exhaust manifold 51 includes a plurality of branch portions 51 a each of which is connected to each of the exhaust ports, and a merging portion 51 b into which the branch portions 51 a merge. The exhaust pipe 52 is connected to the merging portion 51 b of the exhaust manifold 51. The exhaust manifold 51 and the exhaust pipe 52 constitute an exhaust passage way. However, in the present specification, an exhaust passage formed by the branch portions 51 b of the exhaust manifold 51 and the exhaust pipe 52 will be referred to as the "exhaust passage."

The upstream catalyst 53 is a three-way catalyst which includes a noble (precious) metal which is catalytic

substance and ceria ($CeO_2$) which has an oxygen storing/discharging function (also simply referred to as an "oxygen storage function" or an "02 storage function"), both of which are carried by a carrier formed of ceramic. The upstream catalyst 53 is disposed (interposed) in the exhaust pipe 52. In other words, the upstream catalyst 53 is disposed in the exhaust passage at a location downstream of the merging portion of the exhaust passage (the merging portion 51 b of the exhaust manifold 51). The upstream catalyst 53 is also referred to as a start catalytic converter (SC) or a first catalyst.

The particulate collection filter 54 is a well known particulate filter formed of ceramic, and collects particulates discharged from the engine 10. The particulate collection filter 54 is disposed (interposed) in the exhaust passage (exhaust pipe 52) at a location downstream of the upstream catalyst 53. The particulate collection filter 54 is also referred to as a particulate matter filter (PMF).

Like the upstream catalyst 53, the downstream catalyst 55 is a three-way catalyst which includes and carries by a carrier formed of ceramic a noble metal (catalytic substance) and ceria ($CeO_2$) which has an oxygen storage function. The downstream catalyst 55 is disposed (interposed) in the exhaust passage (exhaust pipe 52) at a location downstream of the particulate collection filter 54. That is, in the exhaust passage, the upstream catalyst 53, the particulate collection filter 54, and the downstream catalyst 55 are successively disposed in series from the upstream side toward the downstream side. The downstream catalyst 55 is also referred to as a second catalyst or an under floor catalytic converter (UFC) because it is disposed below the floor of the vehicle.

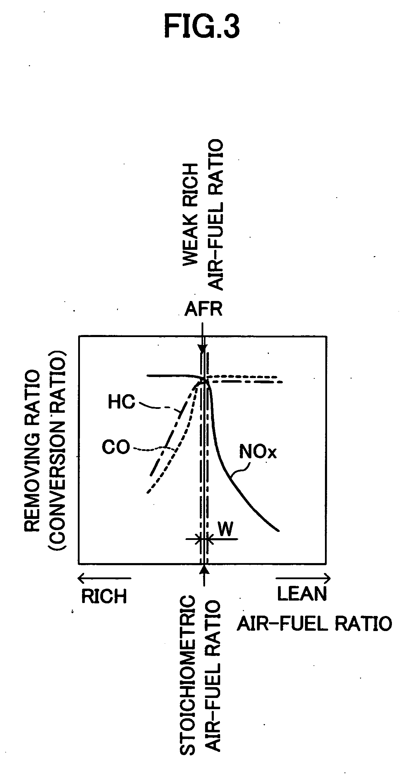

As shown in FIG. 3, the three-way catalyst constituting each of the upstream catalyst 53 and the downstream catalyst 55 has characteristics (catalytic function) of oxidizing unburned substances (HC, CO, etc.) and reducing nitrogen oxides ($NO_x$) so as to efficiently remove (purify) these harmful components when the air-fuel ratio of a gas flowing into the three-way catalyst falls within the range of a so-called "window W."

Further, by virtue of the oxygen storage function, the three-way catalyst can remove HC, CO, and $NO_x$ even when the air-fuel ratio of the gas deviates from the stoichiometric air-fuel ratio to a certain degree. That is, when the air-fuel ratio of the engine deviates toward the lean side from the stoichiometric air-fuel ratio and the gas flowing into the three-way catalyst contains a large amount of $NO_x$, the catalyst takes oxygen molecules from the $NO_x$ (reduces the $NO_x$), and stores the taken oxygen molecules. Such state can be expressed as a "state in which the three-way catalyst substantially holds a reducing agent (reduction component)." Further, when the air-fuel ratio of the engine deviates toward the rich side from the stoichiometric air-fuel ratio and the gas flowing into the three-way catalyst contains a large amount of unburned substances such as HC and CO (reduction components), the three-way catalyst supplies the stored oxygen molecules to these unburned substances to thereby oxidize (remove or purify) these components. Such state can be expressed as a "state in which the three-way catalyst substantially holds an oxidizing agent (oxidation components)."

Further, as shown in FIG. 1, this system includes a hot-wire air flowmeter 61; a throttle position sensor 62; a cam position sensor 63; a crank position sensor 64; a water temperature sensor 65, an upstream air-fuel ratio sensor 66, a downstream air-fuel ratio sensor 67, and an accelerator opening sensor 68.

The hot-wire air flowmeter 61 detects the mass flow rate of intake air flowing through the intake pipe 42, and outputs a signal representing the mass flow rate (an amount of air taken by the engine 10 per unit time; intake air flow rate) Ga.

The throttle position sensor 62 detects the opening of the throttle valve 44, and outputs a signal representing the throttle valve opening TA.

The cam position sensor 63 outputs one pulse every time the intake cam shaft rotates from a predetermined angle by 90 degrees, further rotates by 90 degrees, and further rotates by 180 degrees. This signal is also referred to as a G2 signal.

The crank position sensor 64 outputs a signal which includes a narrow pulse generated every time the crank shaft 24 rotates 10 degrees and a wide pulse generated every time crank shaft 24 rotates 360 degrees. The pulses output from the crank position sensor 64 are converted to a signal representing an engine rotational speed NE by an electric controller 70, which will be described later. Further, the electric controller 70 obtains the crank angle (absolute crank angle) of the engine 10 on the basis of the signals from the cam position sensor 63 and the crank position sensor 64.

The water temperature sensor 65 detects the temperature of cooling water of the engine 10, and outputs a signal representing the cooling water temperature THW.

As shown in FIG. 2, the upstream air-fuel ratio sensor 66 is disposed at the exhaust manifold 51 or the exhaust pipe 52 (that is, in the exhaust passage) so as to be located between the merging portion 51 b of the exhaust manifold 51 and the upstream catalyst 53. The upstream air-fuel ratio sensor 66 outputs an output value corresponding to an air-fuel ratio of exhaust gas (to-be-detected gas) flowing through a region of the exhaust passage where the upstream air-fuel ratio sensor 66 is disposed.

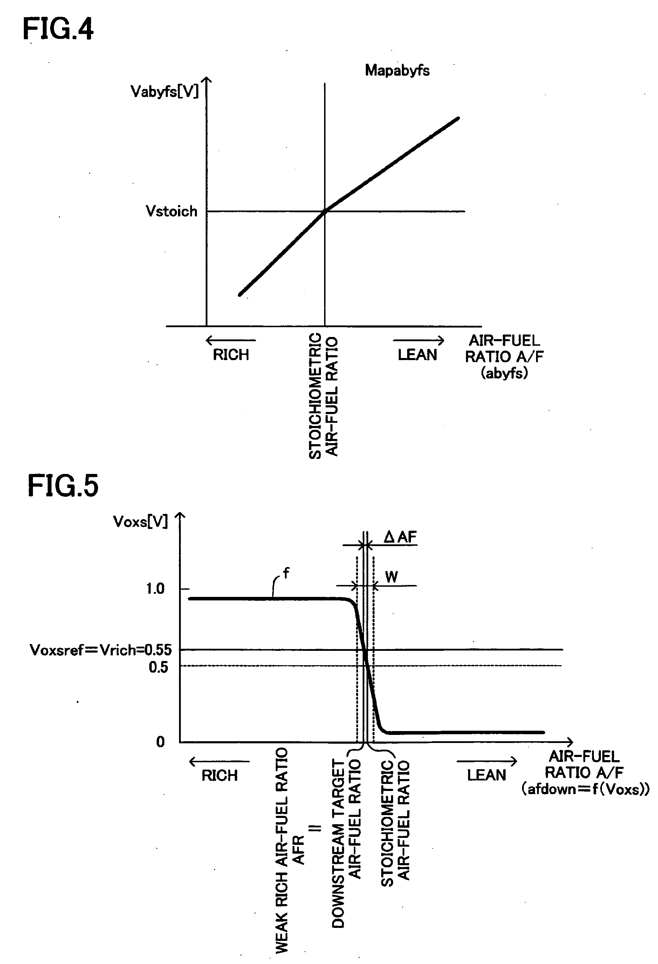

More specifically, the upstream air-fuel ratio sensor 66 is a limiting-current-type oxygen concentration sensor. As shown in FIG. 4, the upstream air-fuel ratio sensor 66 outputs an output value Vabyfs, which is a voltage corresponding to the air-fuel ratio A/F of the to-be-detected gas (accordingly, the air-fuel ratio of a gas mixture supplied to the engine). This output value Vabyfs coincides with a value Vstoich when the air-fuel ratio of the to-be-detected gas is the stoichiometric air-fuel ratio. The output value Vabyfs increases as the air-fuel ratio of the to-be-detected gas becomes larger (changes toward the lean side).

The electric controller 70 described later stores a table (map) Mapabyfs shown in FIG. 4, and detects an air-fuel ratio (obtains a detected air-fuel ratio) by applying an actual output value Vabyfs to the table. The upstream air-fuel ratio sensor 66 has a detection response delay characteristic such that, even when the air-fuel ratio of the gas having reached the upstream air-fuel ratio sensor 66 (i.e., the to-be-detected gas) changes stepwise with respect to time, the output value Vabyfs changes gradually. More specifically, when the air-fuel ratio of the gas having reached the upstream air-fuel ratio sensor 66 is treated as an input signal and the value of the air-fuel ratio based on the output value Vabyfs of the upstream air-fuel ratio sensor 66 and the table Mapabyfs is treated as an output signal, the output signal is very similar to a signal obtained by performing low-pass filter processing (for example, first-order lag processing and second-order lag process, including so-called "blunting processing") on the input signal.

As shown in FIG. 2, the downstream air-fuel ratio sensor 67 is disposed at the exhaust pipe 52 (the exhaust passage) so as to be located between the particulate collection filter 54 and the downstream catalyst 55. The downstream air-fuel ratio sensor 67 outputs an output value corresponding to an air-fuel ratio of exhaust gas (to-be-detected gas) flowing through a region of the exhaust passage where the downstream air-fuel ratio sensor 67 is disposed.

More specifically, the downstream air-fuel ratio sensor 67 is an electromotive-force-type (concentration-cell-type) oxygen concentration sensor. Therefore, the downstream air-fuel ratio sensor 67 will be also referred to as the oxygen concentration sensor 67. As shown in FIG. 5, the downstream air-fuel ratio sensor 67 outputs an output value Voxs, which is a voltage sharply changing in the vicinity of the stoichiometric air-fuel ratio. That is, the downstream air-fuel ratio sensor 67 outputs about 0.1 V when the air-fuel ratio of the to-be-detected gas considerably deviates toward the lean side from the stoichiometric air-fuel ratio, about 0.9 V when the air-fuel ratio of the to-be-detected gas considerably deviates toward the rich side from the stoichiometric air-fuel ratio, and 0.5 V when the air-fuel ratio of the to-be-detected gas coincides with the stoichiometric air-fuel ratio. Further, the downstream air-fuel ratio sensor 67 outputs a voltage which sharply drops (changes from about 0.9 V toward about 0.1 V) as the air-fuel ratio of the to-be-detected gas alters from the rich side to the lean side as far as the air-fuel ratio of the to-be-detected gas is an air-fuel ratio close to the stoichiometric air-fuel ratio (air-fuel ratio substantially corresponding to the window W of the three-way catalyst). Notably, an air-fuel ratio afdown within the downstream side of the upstream catalyst 53 (hereinafter referred to as the "downstream air-fuel ratio afdown") based on the output value Voxs of the downstream air-fuel ratio sensor 67 can be obtained by use of a function f which represents the relation between the output value Voxs and the downstream air-fuel ratio afdown shown in FIG. 5; i.e., afdown = f(Voxs).

Referring back to FIG. 1, the accelerator opening sensor 68 detects an operation amount of an accelerator pedal 81 operated by a driver, and outputs a signal representing the operation amount Accp of the accelerator pedal 81.

The electric controller 70 is a microcomputer, which includes the following mutually bus-connected elements: a CPU 71; ROM 72 in which routines (programs) to be executed by the CPU 71, tables (lookup tables, maps), constants, and the like are stored in advance; RAM 73 in which the CPU 71 temporarily stores data as needed; backup RAM 74, which stores data while power is held on and which retains the stored data even while power is held off; and an interface 75 including an AD converter.

The interface 75 is connected to the sensors 61 to 68. Signals from the sensors 61 to 68 are supplied to the CPU 71 through the interface 75. In accordance with instructions from the CPU 71, the interface 75 sends out drive signals (instruction signals) to the actuator 33a of the variable intake timing unit 33, the igniters 38, the injectors 39, the throttle valve actuator 44a, etc.

(Outline of air-fuel ratio control)

Next will be described the outline of air-fuel ratio control performed by the first control apparatus configured as described above. The first control apparatus executes or performs air-fuel ratio control (i.e., by fuel injection amount control) including main feedback control, sub feedback control, fuel cut control, etc.

<Outline of main feedback control>

When main feedback control conditions are satisfied, the first control apparatus performs feedback control (main feedback control) to control the air-fuel ratio of the gas mixture to be supplied to the engine in such a manner that the upstream air-fuel ratio abyfs obtained on the basis of the output value Vabyfs of the upstream air-fuel ratio sensor 66 coincides with (or becomes equal to) an upstream target air-fuel ratio abyfr (main feedback target value). In ordinary state, the upstream target air-fuel ratio abyfr is set to the stoichiometric air-fuel ratio. At the time of particulate-collection-filter regeneration control (filter regeneration control), which will be described later, the upstream target air-fuel ratio abyfr is set to an air-fuel ratio shifted toward the lean side from (or within the range of leaner than) the stoichiometric air-fuel ratio (a lean air-fuel ratio within the lean side comparing to the window W; the second air-fuel ratio). In other cases (for example, at the time of catalyst overheat protection, etc.), the upstream target air-fuel ratio abyfr is set to an air-fuel ratio shifted toward the rich side from the stoichiometric air-fuel ratio. The main feedback control conditions will be described later.

<Outline of sub feedback control>

When sub feedback control conditions are satisfied, the first control apparatus performs feedback control (sub feedback control) to control the air-fuel ratio of the gas mixture to be supplied to the engine in such a manner that the output value Voxs of the downstream air-fuel ratio sensor 67 coincides with (or becomes equal to) a downstream target value Voxsref corresponding to a downstream target air-fuel ratio. As shown in FIG. 5, this downstream target value Voxsref is set to a value (for example, Voxsref = Vrich = 0.55 V) which the downstream air-fuel ratio sensor 67 is supposed to output when the air-fuel ratio of a gas (to-be-detected gas) passing through the position where the downstream air-fuel ratio sensor 67 is disposed is an air-fuel ratio corresponding to an air-fuel ratio AFR which is shifted toward the rich side from (or AFR which is richer than) the stoichiometric air-fuel ratio by a predetermined slight amount ΔAF. Thus, the average (center; median) of the air-fuel ratio of the gas mixture to be supplied to the engine 10; i.e., the air-fuel ratio of the gas flowing into the downstream catalyst 55 is caused to coincide with the air-fuel ratio AFR slightly shifted toward the rich side from the stoichiometric air-fuel ratio (hereinafter also referred to as a "weak rich air-fuel ratio AFR"). As shown in FIG. 3, this weak rich air-fuel ratio AFR is an air-fuel ratio which falls within the range of the window W and is slightly shifted toward the rich side from the stoichiometric air-fuel ratio. Notably, the sub feedback control conditions will be described later. Further, air-fuel ratio control in which the main feedback control is executed with the upstream target air-fuel ratio abyfr set to the stoichiometric air-fuel ratio and the sub feedback control is executed with the downstream target value Voxsref set to the value Vrich corresponding to the weak rich air-fuel ratio AFR will be also referred to as  "air-fuel ratio weak rich control" or "near stoichiometric air-fuel ratio control."

<Fuel cut control>

When fuel cut (fuel supply stop) conditions are satisfied, the first control apparatus performs fuel cut control which stops injection of fuel (supply of fuel) from the injectors 39. When the fuel control is performed, the main feedback control and the sub feedback control are stopped. The fuel cut conditions are satisfied, for example, when the accelerator pedal operation amount Accp is "0" and the engine rotational speed NE is equal to or higher than a fuel-cut rotational speed NEFC. The fuel cut control performed when the above fuel cut conditions are satisfied is referred to as deceleration fuel cut which is executed when deceleration fuel cut conditions are satisfied. The deceleration fuel cut ends (the fuel cut conditions become unsatisfied), for example, when the accelerator pedal operation amount Accp increases from "0," or the engine rotational speed NE becomes equal to or lower than a fuel-cut-end rotational speed NEFK, during the fuel cut (in a period in which the fuel cut conditions are satisfied). When the fuel cut ends, the fuel injection (fuel supply) is resumed. The fuel-cut-end rotational speed NEFK is lower than the fuel-cut rotational speed NEFC. Resumption (or restart) of the fuel injection after completion of the fuel cut control will be referred as "fuel cut end (or return from fuel cut)."

<Particulate collection filter regeneration control>

The particulate collection capacity of the particulate collection filter 54 lowers as the amount of particulates collected by the particulate collection filter 54 increases. In contrast, when particulates collected by the particulate collection filter 54 are burned within the particulate collection filter 54, the particulate collection capacity of the particulate collection filter 54 is recovered (i.e. becomes higher). That is, the particulate collection filter 54 can be regenerated. In order to burn the particulates collected by the particulate collection filter 54,

(1) the interior of the particulate collection filter 54 must be high in temperature; and
(2) oxygen must be supplied to the particulate collection filter 54.

In general, when a gasoline engine operated at an air-fuel ratio close to the stoichiometric air-fuel ratio is in an ordinary operating state (operating states excluding an operating state immediately after startup), the temperature of the interior of the particulate collection filter 54 is sufficiently high for burning the particulates collected by the particulate collection filter 54. Meanwhile, when the fuel cut control is performed, air including a large amount of oxygen is discharged from the engine 10. Therefore, when the fuel cut control is continuously executed over a predetermined period of time or more, the oxygen storage amount OSA1 of the upstream catalyst 53 reaches the maximum oxygen storage amount Cmax1 of the upstream catalyst 53, and thereafter, oxygen starts to flow out of (from) the upstream catalyst 53. The oxygen flowing out of the upstream catalyst 53 flows into the particulate collection filter 54. As a result, the particulates collected by the particulate collection filter 54 are burned within the particulate collection filter 54 and the particulate collection filter 54 is regenerated, because the temperature of the interior of the particulate collection filter 54 is high and oxygen is supplied to the particulate collection filter 54. However, since the frequency and/or duration of the fuel cut control change(s) depending on the manner of operation of the engine 10, it is not appropriate to expect that the particulate collection filter 54 is always regenerated by the fuel cut control only.

Conceivably, it is effective to forcedly set the air-fuel ratio of the engine 10 to a lean air-fuel ratio when the fuel cut control is not executed, so as to cause the engine 10 to discharge a relatively large amount of oxygen, to thereby supply oxygen to the particulate collection filter 54 (in order to burn particulates so as to regenerate the particulate collection filter 54).

In order to supply oxygen to the particulate collection filter 54 through setting the air-fuel ratio of the engine to a lean air-fuel ratio, first, the oxygen storage amount OSA1 of the upstream catalyst 53 must be increased to reach the maximum oxygen storage amount Cmax1 of the upstream catalyst 53 in order cause oxygen to flow out of the upstream catalyst 53. However, if the oxygen storage amount OSA1 of the upstream catalyst 53 has reached the maximum oxygen storage amount Cmax1 of the upstream catalyst 53 and the air-fuel ratio of the engine is a lean air-fuel ratio outside the window W, the upstream catalyst 53 cannot remove $NO_x$ effectively. Further, since the air-fuel ratio of the engine is set to a lean air-fuel ratio, a large amount of Nox is discharged from the engine.

At that time, if the oxygen storage amount OSA2 of the downstream catalyst 55 is smaller than the maximum oxygen storage amount Cmax2 of the downstream catalyst 55 by a certain amount, the downstream catalyst 55 has a $NO_x$ removal capacity and can remove the $NO_x$ flowing out of the upstream catalyst 53. In contrast, when the oxygen storage amount OSA2 of the downstream catalyst 55 has reached the maximum oxygen storage amount Cmax2 of the downstream catalyst 55 or is close to the maximum oxygen storage amount Cmax2, the downstream catalyst 55 cannot remove $NO_x$ satisfactorily, and thus, a large amount of $NO_x$ may be discharged into the atmosphere.

In view of the above, the first control apparatus includes reduced-state determination means for determining whether or not the downstream catalyst 55 is in a "reduced state in which the downstream catalyst 55 can remove (or purify) a predetermined amount of nitrogen oxides (nitrogen oxide removable state)," and changes the air-fuel ratio of the engine to a lean air-fuel ratio so as to regenerate the particulate collection filter 54, only when the downstream catalyst 55 is determined to have reached the "reduced state."

More specifically, when the downstream catalyst 55 is determined to have reached the "reduced state," the first control apparatus stops the sub feedback control, and executes the main feedback control after setting the upstream target air-fuel ratio abyfr to a "predetermined lean air-fuel ratio aflean" shifted toward the lean side from (or aflean leaner than, i.e., aflean larger than) the stoichiometric air-fuel ratio. This control will be referred to as "air-fuel ratio lean control," "particulate-collection-filter regeneration control (filter regeneration control)," or "lean continuing control." By virtue of this control, oxygen is supplied from the engine 10 to the particulate collection filter 54 via the upstream catalyst 53. Thus, particulates burn within the particulate collection filter 54, and thus, the particulate collection filter 54 is regenerated. Further, in this case, $NO_x$ discharged from the engine 10 is removed by the downstream catalyst 55 which have already reached the above-described reduced state. Accordingly, the first control apparatus can regenerate the particulate collection filter 54 without increasing the discharge amount of $NO_x$.

<Principle of reduced-state determination>

The above-described reduced-state determination means is configured to obtain a first cumulative value corresponding to a cumulative value ($\Sigma(A-B)$) of a "reduction component excessive amount (A-B)" obtained by subtracting, from an "amount A of reduction components which are unburned substances (HC, CO, etc.)" discharged from the engine 10 to the exhaust passage, an "amount B of oxidation components which oxidize the reduction components" and which are discharged from the engine 10 to the exhaust passage, and determine on the basis of the first cumulative value whether or not the downstream catalyst 55 has reached the above-described "reduced state."

More specifically, the averaged air-fuel ratio of the engine is controlled to the "weak rich air-fuel ratio" by the above-described sub feedback control. Therefore, when the sub feedback control is executed, the intake air amount Ga of the engine per unit time is proportional to the above-mentioned "reduction component excessive amount." In view of this, the reduced-state determination means executes the sub feedback control after the fuel cut end, and obtains, as the "first cumulative value" corresponding to the cumulative value of the reduction component excessive amount, the cumulative value of the intake air amount Ga of the engine after the fuel cut end. Then, the reduced-state determination means determines whether or not the first cumulative value has become equal to or greater than a first predetermined value, and determines that the downstream catalyst 55 has reached the "reduced state" when the first cumulative value is determined to have become equal to or greater than the first predetermined value.

<General flow of control>

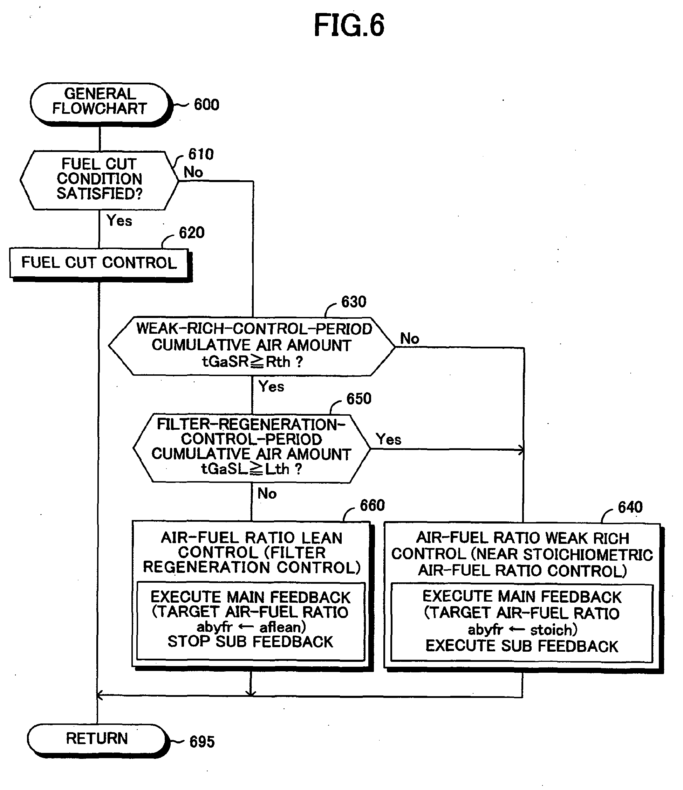

The CPU 71 of the first control apparatus performs the above-described various controls in accordance with the procedure shown by a general flowchart of FIG. 6. The CPU 71 repeatedly performs the procedure shown in FIG. 6 at predetermined intervals. In the following description, it is assumed that both the upstream air-fuel ratio sensor 66 and the downstream air-fuel ratio sensor 67 have been activated.

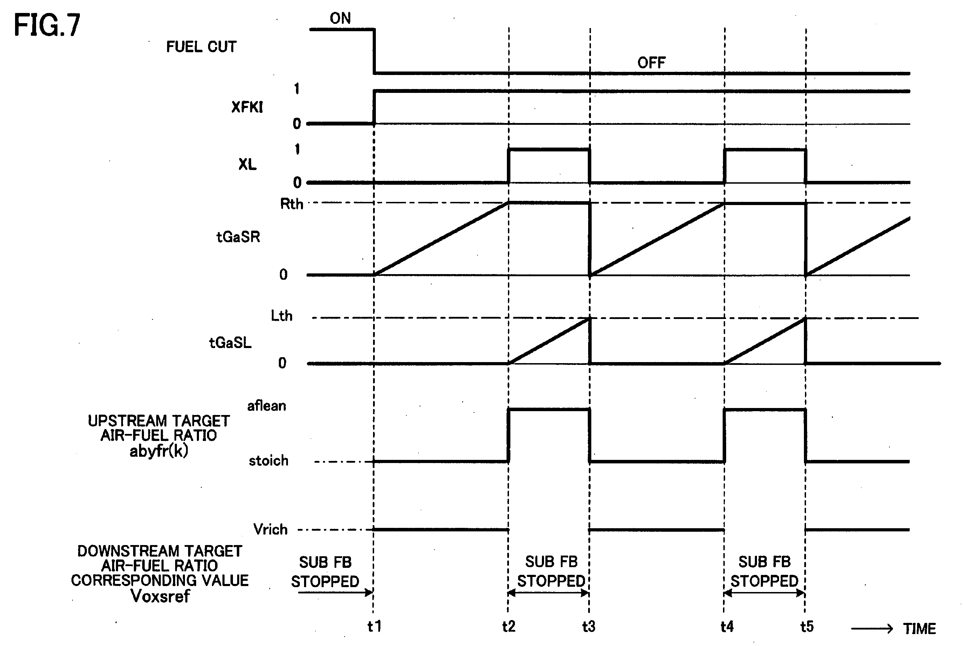

More specifically, when a predetermined timing is reached, the CPU 71 starts processing from step 600 and proceeds to step 610 so as to determine whether or not the above-described fuel cut conditions (deceleration fuel cut conditions) are satisfied. If the fuel cut conditions are satisfied, the CPU 71 makes a "Yes" determination in step 610, and proceeds to step 620 so as to perform the fuel cut operation (stop fuel injection). This state is a state before time t1 of a time chart shown in FIG. 7. Subsequently, the CPU 71 proceeds to step 695 so as to end the current execution of the present routine.

If the fuel cut conditions become unsatisfied at time t1, the CPU 71 makes a "No" determination when it proceeds to step 610. Therefore, the CPU 71 proceeds to step 630 so as to determine whether or not a "weak-rich-control-period cumulative air amount (cumulative air amount at the time of the near stoichiometric air-fuel ratio control) tGaSR" has become greater than a first predetermined value (first threshold) Rth, which is a filter-regeneration-control start threshold.

The weak-rich-control-period cumulative air amount tGaSR is a cumulative value of the intake air amount Ga in the period of the above-described "air-fuel ratio weak rich control (near stoichiometric air-fuel ratio control) in which the air-fuel ratio of the engine is controlled to an "air-fuel ratio slightly shifted toward the rich side from the stoichiometric air-fuel ratio (weak rich air-fuel ratio AFR)." Note that the weak-rich-control-period cumulative air amount tGaSR is set to "0" during the fuel cut control. The weak-rich-control-period cumulative air amount tGaSR is the above-described first cumulative value corresponding to the "cumulative value of the reduction component excessive amount," and has been obtained by an unillustrated routine.

The present point in time (immediately after time t1) is immediately after the fuel cut ends (immediately after the fuel supply is resumed, and immediately after the fuel cut end). Accordingly, the weak-rich-control-period cumulative air amount (first cumulative value) tGaSR is smaller than the filter-regeneration-control start threshold (first predetermined value) Rth. Therefore, the CPU 71 makes a "No" determination in step 630, and proceeds to step 640 so as to execute the air-fuel ratio weak rich control (near stoichiometric air-fuel ratio control). In actuality, the CPU 71 executes the above-described main and sub feedback controls. Under this state, the upstream target air-fuel ratio abyfr of the main feedback control is set to the stoichiometric air-fuel ratio stoich, and the downstream target value Voxsref is set to the value Vrich corresponding to the weak rich air-fuel ratio AFR.

As shown in FIG. 3, this weak rich air-fuel ratio AFR is an air-fuel ratio which falls within the range of the window W and is slightly shifted toward the rich side from (or slightly richer than) the stoichiometric air-fuel ratio. Accordingly, during the air-fuel ratio weak rich control, the upstream catalyst 53 and the downstream catalyst 55 can remove HC, CO, and $NO_x$ at a considerably high removal effciency. It should be noted that, since the weak rich air-fuel ratio AFR is on the rich side with respect to (or in relation to) the stoichiometric air-fuel ratio stoich, the air-fuel ratio weak rich control causes the engine 10 to discharge excessive reduction components.

Accordingly, if this state continues, the oxygen storage amount OSA1 of the upstream catalyst 53 decreases to "0," and the oxygen storage amount OSA2 of the downstream catalyst 55 then decreases from the maximum oxygen storage amount Cmax2 of the downstream catalyst 55 by a predetermined amount. At the same time, the weak-rich-control-period cumulative air amount (first cumulative value) tGaSR gradually increases, and thus, becomes equal to or greater than the filter-regeneration-control start threshold (first predetermined value) Rth at time t2. In other words, the filter-regeneration-control start threshold Rth is set to a value which is reached by the weak-rich-control-period cumulative air amount (first cumulative value) tGaSR, when the downstream catalyst 55 has entered a state in which it can remove the predetermined amount of $NO_x$.

Accordingly, at time t2, the CPU 71 makes a "Yes" determination in step 630 subsequent to steps 600 and 610, and proceeds to step 650 so as to determine whether or not a filter-regeneration-control-period cumulative air amount (second cumulative value) tGaSL" becomes equal to or larger than a filter-regeneration-control completion threshold (second threshold; second predetermined value) Lth.

The filter-regeneration-control-period cumulative air amount tGaSL is a cumulative value of the intake air amount Ga in the period of the above-described "filter regeneration control (air-fuel ratio lean control) in which the air-fuel ratio of the engine is controlled to an "air-fuel ratio (lean air-fuel ratio) on the lean side with respect to (in relation to) the stoichiometric air-fuel ratio." It should be noted that, the filter-regeneration-control-period cumulative air amount tGaSL is set to "0" during the fuel cut control (and when the air-fuel ratio weak rich control is started). The filter-regeneration-control-period cumulative air amount tGaSL corresponds to a cumulative value ($\Sigma(C-D)$) of an "oxidation component excessive amount (C-D)" obtained by subtracting, from an "amount C of oxidation components discharged from the engine 10 to the exhaust passage," an "amount D of reduction components (unburned substance) which reduce the oxidation components and which are discharged from the engine." The filter-regeneration-control-period cumulative air amount tGaSL is also referred to as the "second cumulative value," and has been obtained by an unillustrated routine.

The present point in time (time t2) is immediately after the point in time when the weak-rich-control-period cumulative air amount tGaSR has become equal to or greater than the filter-regeneration-control start threshold Rth after the fuel cut control, and the filter-regeneration-control-period cumulative air amount tGaSL is "0." Accordingly, the filter-regeneration-control-period cumulative air amount tGaSL is smaller than the filter-regeneration-control completion threshold Lth. Therefore, the CPU 71 makes a "No" determination in step 650, and proceeds to step 660 in order to execute the filter regeneration control (particulate-collection-filter regeneration control). That is, the CPU 71 executes the "air-fuel ratio lean control" in which the sub feedback control is stopped, and the upstream target air-fuel ratio abyfr of the main feedback control is set to the predetermined lean air-fuel ratio aflean.

With this control, excessive oxygen is discharged from the engine 10. Therefore, when a predetermined time has elapsed, the oxygen storage amount OSA1 of the upstream catalyst 53 reaches the maximum oxygen storage amount Cmax1 of the upstream catalyst 53, and oxygen starts to flow out of the upstream catalyst 53. As a result, oxygen is supplied to the particulate collection filter 54, whereby particulates burn within the particulate collection filter 54, and the particulate collection filter 54 is regenerated. At that point in time, the downstream catalyst 55 is maintained in the above-described "reduced state." That is, the oxygen storage amount OSA2 of the downstream catalyst 55 is smaller than the maximum oxygen storage amount Cmax2 of the downstream catalyst 55 by a certain amount. Accordingly, $NO_x$ discharged from the engine 10 is removed by the downstream catalyst 55.

If this state continues, the oxygen storage amount OSA2 of the downstream catalyst 55 increases. Simultaneously, the weak-rich-control-period cumulative air amount tGaSR is maintained at the filter-regeneration-control start threshold Rth, and the filter-regeneration-control-period cumulative air amount tGaSL gradually increases. Accordingly, when a predetermined time has elapsed and time t3 has come, the oxygen storage amount OSA2 of the downstream catalyst 55 reaches an amount which is smaller than the maximum oxygen storage amount Cmax2 of the downstream catalyst 55 by a "considerable amount," and the "filter-regeneration-control-period cumulative air amount tGaSL" becomes equal to or greater than the filter-regeneration-control completion threshold Lth. In other words, the filter-regeneration-control completion threshold Lth is set to a "value which is reached by the filter-regeneration-control-period cumulative air amount tGaSL" when the oxygen storage amount OSA2 of the downstream catalyst 55 becomes an amount which is smaller than the maximum oxygen storage amount Cmax2 by the "considerable amount" before reaching the maximum oxygen storage amount Cmax2 of the downstream catalyst 55.

Accordingly, at time t3, the CPU 71 makes a "Yes" determination in step 650 subsequent to steps 600, 610, and 630, and proceeds to step 640 so as to resume the air-fuel ratio weak rich control. At that time, the weak-rich-control-period cumulative air amount tGaSR and the filter-regeneration-control-period cumulative air amount tGaSL are each set (reset) to "0." Accordingly, after time t3, the weak-rich-control-period cumulative air amount tGaSR again increases from "0."

Thereafter, when a predetermined time has elapsed and time t4 has come, the weak-rich-control-period cumulative air amount tGaSR becomes equal to or greater than the filter-regeneration-control start threshold Rth, and the filter-regeneration-control-period cumulative air amount tGaSL becomes a value (= 0) which is smaller than the filter-regeneration-control completion threshold Lth. Accordingly, the CPU 71 proceeds to step 660 so as to execute the filter regeneration control again. When a predetermined time has further elapsed and time t5 has come, the filter-regeneration-control-period cumulative air amount tGaSL becomes equal to or greater than the filter-regeneration-control completion threshold Lth. Therefore, the CPU 71 proceeds to step 640 so as to execute the air-fuel ratio weak rich control again.

As described above, the first control apparatus can regenerate the particulate collection filter periodically, while removing $NO_x$ by the downstream catalyst 55.

(Details of air-fuel ratio control)

Next, the details of the air-fuel ratio control will be described.

The first control apparatus controls the air-fuel ratio of the engine in accordance with the output value Voxs of the downstream air-fuel-ratio sensor 67 in such a manner that the output value Voxs of the downstream air-fuel-ratio sensor 67 becomes equal to a downstream target value Voxsref (= Vrich = 0.55 V) corresponding to the "weak rich air-fuel ratio AFR," which serves as the downstream target air-fuel ratio. That is, the first control apparatus executes the above-described "sub feedback control" on the basis of the output value Voxs of the downstream air-fuel-ratio sensor 67.

Meanwhile, since the upstream catalyst 53 has an oxygen storage function, an air-fuel ratio change at the upstream side of the upstream catalyst 53 appears as an air-fuel ratio change at the downstream side of the upstream catalyst 53 after a predetermined delay time has elapsed. Accordingly, transitional air-fuel ratio changes cannot be suppressed by the sub feedback control only. In view of this, the above-described main feedback control is executed on the basis of the output value Vabyfs of the upstream air-fuel ratio sensor 66 so as to suppress the transitional air-fuel ratio changes. The first control apparatus performs the air-fuel ratio control by use of a plurality of means to be described below, in order to prevent occurrence of interference between the main feedback control and the sub feedback control.

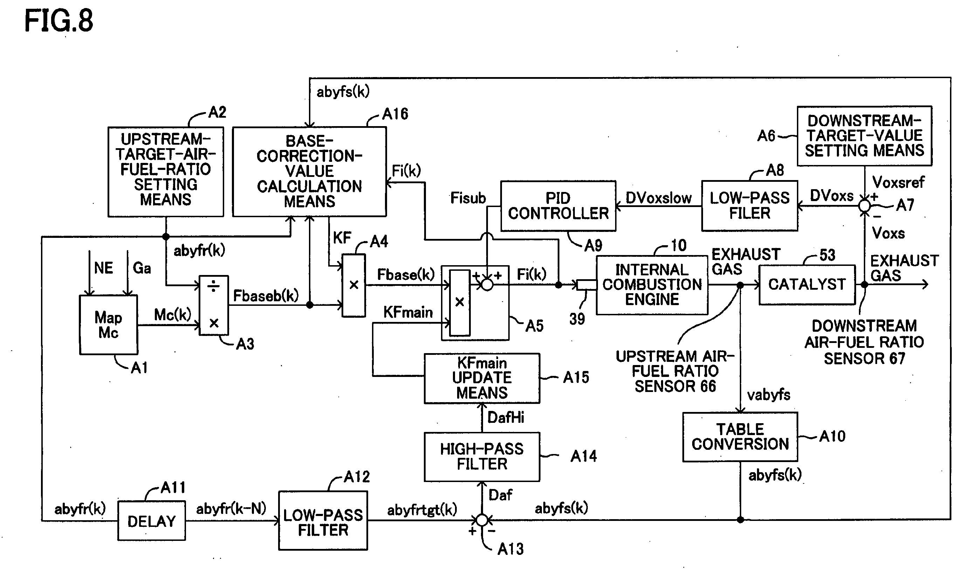

That is, the control apparatus includes a plurality of means, etc. shown in FIG. 8, which is a functional block diagram. Hereinafter, the control apparatus will be described with reference to FIG. 8.

<Calculation of post-correction-base fuel injection amount>

Cylinder-intake-air-amount calculation means A1 calculates a cylinder intake air amount Mc(k), which is the amount of air taken into a cylinder which is in a current intake stroke (hereinafter referred to as the "present intake stroke"), on the basis of the intake air flow rate Ga measured by the air flowmeter 61, the engine rotational speed NE obtained on the basis of the output of the crank position sensor 64, and a table MapMc stored in the ROM 72. It should be noted that the suffix (k) added to a value represents or means that the value is regarding the present intake stroke. The cylinder intake air amount Mc(k) is stored in the RAM 73 with a relationship with each intake stroke of each cylinder. It should be noted that the cylinder intake air amount Mc(k) may be obtained by use of a known air amount estimation model (air model) modeled after the behavior of air within the intake passage of the engine 10.

Upstream-target-air-fuel-ratio setting (determining) means A2 determines the upstream target air-fuel ratio abyfr(k) on the basis of operating conditions of the internal combustion engine 10, such as the engine rotational speed NE and the accelerator pedal operation amount Accp (load of the engine). The upstream target air-fuel ratio abyfr(k) is a value which servers as a basis of a target value of the detected air-fuel ratio abyfs obtained from the output value of the upstream air-fuel ratio sensor 66. For example, the upstream target air-fuel ratio abyfr(k)is set to a rich air-fuel ratio before completion of warming up of the internal combustion engine 10, and is set to a predetermined lean air-fuel ratio aflean when the above-described "particulate-collection-filter regeneration control" is executed after the warming up. In other cases, except for special cases (e.g., the case where the upstream catalyst 53 is protected from its overheat), the upstream target air-fuel ratio abyfr(k) is set to the stoichiometric air-fuel ratio. The upstream target air-fuel ratio abyfr(k) is stored in the RAM 73 with a relationship with each intake stroke of each cylinder.

As shown in Equation (1) described below, prior-correction-base-fuel-injection-amount calculation means A3 calculates a base fuel injection amount Fbaseb(k), which is a fuel injection amount for the present intake stroke for rendering the air-fuel ratio of the engine equal to the upstream target air-fuel ratio abyfr(k), by dividing the cylinder intake air amount Mc(k) --- obtained by the cylinder-intake-air-amount calculation means A1 --- by the upstream target air-fuel ratio abyfr(k) set by the upstream-target-air-fuel-ratio setting means A2. Since the base fuel injection amount Fbaseb(k) is a base fuel injection amount before being corrected by a base correction value KF, which will be described later, etc., the base fuel injection amount Fbaseb(k) is referred to as a prior-correction-base fuel injection amount Fbaseb(k). The prior-correction-base fuel injection amount Fbaseb(k) is stored in the RAM 73 with a relationship with each intake stroke of each cylinder.

$$Fbaseb(k) = Mc(k)/abyfr(k) \qquad (1)$$

Post-correction-base-fuel-injection-amount calculation means A4 obtains an post-correction-base fuel injection amount Fbase(k) (= KF·Fbaseb(k)) by multiplying the prior-correction-base fuel injection amount Fbaseb(k) for the present time, which is obtained by the prior-correction-base-fuel-injection-amount calculation means A3, by a base correction amount KF, which is obtained by base-correction-amount calculation means A16 and which is stored in the backup RAM 74. The base-correction-amount calculation means A16 for calculating the base correction amount KF will be described in detail later.

In the above manner, the first control apparatus obtains the post-correction-base fuel injection amount Fbase(k) by making use of the cylinder-intake-air-amount calculation means A1, the upstream-target-air-fuel-ratio setting means A2, the prior-correction-base-fuel-injection-amount calculation means A3, the post-correction-base-fuel-injection-amount calculation means A4, and the base-correction-amount calculation means A16.

<Calculation of final fuel injection amount>

As shown Equation (2) described below, final-fuel-injection-amount calculation means A5 obtains a final fuel injection amount Fi(k) by adding a sub feedback correction value Fisub, obtained by a PID controller A9 which will be described later, to the product (= Fbase(k)·KFmain) of the post-correction-base fuel injection amount Fbase(k) (= KF·Fbaseb(k)) and a main feedback correction value KFmain, obtained by a main-feedback-correction-value update means A15 which will be described later. The final fuel injection amount Fi(k) is stored in the RAM 73 with a relationship with each intake stroke of each cylinder.

$$Fi(k) = (KF \cdot Fbaseb(k)) \cdot KFmain + Fisub$$

$$= Fbase(k) \cdot KFmain + Fisub \qquad (2)$$

As described above, the first control apparatus obtains the final fuel injection amount Fi(k) by correcting the post-correction-base fuel injection amount Fbase(k) on the basis of the main feedback correction value KFmain and the sub feedback correction value Fisub by the final-fuel-injection-amount calculation means A5. Further, the first control apparatus sends an injection instruction signal to the injector 39 of a cylinder which will start the present intake stroke to cause the injector 39 to inject fuel of the final fuel injection amount Fi(k). In other words, the injection instruction signal includes information regarding the final fuel injection amount Fi(k) as an instruction injection amount.

<Calculation of sub feedback correction value>

Downstream-target-value setting means A6 outputs the downstream target value Voxsref. The downstream target value Voxsref is set to the value Vrich (e.g., 0.55 V) corresponding to the above-described weak rich air-fuel ratio AFR. It should be noted that the downstream-target-value setting means A6 may be configured so as to change the downstream target value Voxsref on the basis of operating conditions of the internal combustion engine 10, such as the engine rotational speed NE and the accelerator pedal operation amount Accp (load of the engine), similarly to the upstream-target-air-fuel-ratio setting means A2.

Output deviation calculation means A7 obtains an output deviation DVoxs in accordance with Equation (3) described below; i.e., by subtracting the output value Voxs of the downstream air-fuel-ratio sensor 67 at the present point in time (specifically, a point in time when present injection of fuel of Fi(k) is instructed), from the downstream target value Voxsref at the present point in time set by the downstream target value setting means A6. The output deviation calculation means A7 outputs the obtained output deviation DVoxs to low pass filter A8.

$$DVoxs = Voxsref - Voxs \qquad (3)$$

The low-pass filter A8 is a first-order digital filter. A transfer function A8(s), which represents the characteristics of the low-pass filter A8, is represented by Equation (4) described below. In Equation (4), s represents a Laplace operator, and $\tau 1$ is a time constant. The low-pass filter A8 substantially prohibits passage of high-frequency components whose frequencies are equal to or higher than the frequency $(1/\tau 1)$. The low-pass filter A8 receives the value of the output deviation DVoxs, and outputs to the PID controller A9 a low-pass-filter passed output deviation DVoxslow, which is a value obtained by subjecting the output deviation DVoxs to the low-pass filter processing.

$$A8(s) = 1/(1 + \tau 1 \cdot s) \qquad (4)$$

The PID controller A9 obtains the sub feedback correction amount Fisub in accordance with Equation (5) described below; i.e., by performing proportional plus integral plus derivative processing (PID processing) for the low-pass-filter passed output deviation DVoxslow.

$$Fisub = Kp \cdot DVoxslow + Ki \cdot SDVoxslow + Kd \cdot DDVoxslow \qquad (5)$$

In Equation (5), Kp is a preset proportional gain (proportional constant), Ki is a preset integral gain (integral constant), and Kd is a preset derivative gain (derivative constant). Further, SDVoxslow is a value obtained through integration of the low-pass-filter passed output deviation DVoxslow with respect to time, and DDVoxslow is a value obtained through differentiation of the low-pass-filter passed output deviation DVoxslow with respect to time. By the above-described procedure, the sub feedback correction amount Fisub is obtained.

As is apparent from the above description, the downstream-target-value setting means A6, the Output deviation calculation means A7, the low-pass filer A8, and the PID controller A9 constitute sub-feedback-correction-value calculation means.

<Main feedback control and calculation of main feedback correction value>

As described previously, the upstream catalyst 53 has a catalytic function and an oxygen storage function. Therefore, among variations in the air-fuel ratio of exhaust gas at the upstream side of the upstream catalyst 53, a "high frequency component having a relatively high frequency (a high frequency component whose frequency is equal to or higher than the above-described frequency (l/τ1))" and a "low frequency component having a relatively low frequency and a relatively small amplitude (a low frequency component whose frequency is not higher than the above-described frequency (1/τ1) and whose deviation from the stoichiometric air-fuel ratio is relatively small)" are absorbed by the catalytic function and the oxygen storage function of the upstream catalyst 53, and hardly appear as variations in the air-fuel ratio of exhaust gas at the downstream side of the upstream catalyst 53.

Accordingly, compensation for "an abrupt change of the air-fuel ratio in a transitional operating state" in which, for example, the air-fuel ratio of the exhaust gas greatly varies at a high frequency equal to or higher than the frequency (1/τ1), cannot be performed by the sub feedback control. Therefore, in order to perform the compensation for "an abrupt change of the air-fuel ratio in a transitional operating state" without fail, the main feedback control based on the output value Vabyfs of the upstream air-fuel ratio sensor 66 must be performed.

Meanwhile, among variations in the air-fuel ratio of exhaust gas on the upstream side of the upstream catalyst 53, a "low frequency component having a relatively low frequency and a relatively large amplitude (a low frequency component whose frequency is not higher than the above-described frequency (1/τ1) and whose deviation from the stoichiometric air-fuel ratio is relatively large)" is not absorbed by the upstream catalyst 53. Therefore, such a variation in the air-fuel ratio of exhaust gas at the upstream side of the upstream catalyst 53 appears, with a predetermined delay, as a variation in the air-fuel ratio of exhaust gas at the downstream side of the upstream catalyst 53. As a result, in some cases, the output value Vabyfs of the upstream air-fuel-ratio sensor 66 and the output value Voxs of the downstream air-fuel-ratio sensor 67 indicate air-fuel ratios having deviated from an air-fuel ratio near the stoichiometric air-fuel ratio in opposite directions. In such a case, the main feedback control and the sub feedback control try to correct the air-fuel ratio of the gas mixture to be supplied to the engine in opposite directions, and thus, these controls may interfere with each other during the air-fuel ratio control.

In view of the foregoing, for the main feedback control, the first control apparatus uses a "value which is obtained by eliminating, from the output value Vabyfs of the upstream air-fuel-ratio sensor 66," "low frequency components whose frequencies are not greater than a predetermined frequency (in the present embodiment, the frequency (1/τ1)) and which may otherwise appear as variations in the air-fuel ratio on the downstream side of the upstream catalyst 53," among respective frequency components of variation in the output value Vabyfs of the upstream air-fuel-ratio sensor 66. In the present example, the value which is used in the main feedback control and corresponds to the output value Vabyfs of the upstream air-fuel-ratio sensor 66 is a "value DafHi obtained by performing high-pass filter processing" on a "deviation Daf between the target air-fuel ratio abyfrtgt for main feedback control and the detected air-fuel ratio abyfs(k) obtained on the basis of the output value Vabyfs(k) of the upstream air-fuel-ratio sensor 66." As a result of executing the main feedback control on the basis of this value DafHi, the above-described interference in the air-fuel ratio control can be avoided. More specifically, the main feedback correction value obtained as a result of the main feedback control is obtained as described below.

Table conversion means A10 obtains a detected air-fuel ratio abyfs(k) (air-fuel ratio detected by the upstream air-fuel-ratio sensor 66 at the present point in time) on the basis of the output value Vabyfs of the upstream air-fuel-ratio sensor 66 and with reference to the table Mapabyfs shown in FIG. 4, which shows the relation between air-fuel ratio A/F and the output value Vabyfs of the upstream air-fuel-ratio sensor 66.

Target-air-fuel-ratio delay means A11 reads out from the RAM 73 an upstream target air-fuel ratio abyfr at the point in time N strokes before the present point in time, among the upstream target air-fuel ratio abyfr(s) determined by the upstream-target-air-fuel-ratio setting means A2 and stored in the RAM 73 while being related to the intake stroke of each cylinder; and sets the read upstream target air-fuel ratio abyfr as an upstream target air-fuel ratio abyfr(k-N). Here, the suffix (k-N) added to a value shows or means that the value is a value corresponding to an intake stroke which is N strokes (in a four-cylinder engine, N.180° CA (CA: crank angle)) before the present intake stroke. The upstream target air-fuel ratio abyfr(k-N) is the upstream target air-fuel ratio which was used for calculating the prior-correction-base fuel injection amount Fbaseb(k-N) (= Mc(k-N)/abyfr(k-N) of a cylinder which started the intake stroke N strokes before the present point in time (see the above-described Equation (1)).

The value N changes depending on the displacement of the internal combustion engine 10, the distance between the combustion chamber 25 and the upstream air-fuel-ratio sensor 66, and other factors. The reason why the upstream target air-fuel ratio abyfr(k-N) at the point in time N strokes before the present point in time is used for calculation of the main feedback correction value is that the gas mixture which contains fuel injected from the injector 39 and has been burned in the combustion chamber 25 takes a dead time L1 corresponding to N strokes to reach the upstream air-fuel-ratio sensor 66. Notably, the value N is desirably changed to decrease as the engine rotational speed NE increases and as the load of the engine (e.g., the cylinder intake air amount Mc) increases.

A low-pass filter A12 performs low-pass filter processing on the upstream target air-fuel ratio abyfr(k-N) which is the upstream target air-fuel ratio at the point in time N strokes before the present point in time. The the upstream target air-fuel ratio abyfr(k-N) is output from the target-air-fuel-ratio delay means A11. A low-pass filter A12 thereby calculates the target air-fuel ratio for main feedback control (target air-fuel ratio for upstream-side feedback control) abyfrtgt(k). The target air-fuel ratio for main feedback control abyfrtgt(k) will be simply referred to as an "MFB target air-fuel ratio abyfrtgt(k)". As described above, the MFB target air-fuel ratio abyfrtgt(k) is a value corresponding to (based on) the upstream target air-fuel ratio abyfr(k-N) having been determined by the upstream-target-air-fuel-ratio setting means A2.

This low-pass filter A12 is a first-order digital filter. The transfer characteristic A12(s) of the low-pass filter A12 is represented by Equation (6) described below. In Equation (6), s represents a Laplace operator, and $\tau$ is a time constant (parameter regarding responsiveness). By virtue of this characteristic, the low-pass filter A12 substantially prohibits passage of high-frequency components whose frequencies are equal to or higher than the frequency (1/$\tau$).

$$A12(s) = 1/(1 + \tau \cdot s) \qquad (6)$$

As described above, if the air-fuel ratio of the gas having reached the upstream air-fuel ratio sensor 66 is treated as an input signal and the air-fuel ratio obtained on the basis of the output value Vabyfs of the upstream air-fuel ratio sensor 66 is treated as an output signal, the output signal is very similar to a signal which is obtained by performing low-pass filter processing (for example, first-order lag processing and second-order lag process, including so-called "blunting processing") on the input signal. As a result, the MFB target air-fuel ratio abyfrtgt(k) generated by the low-pass filter A12 becomes a value which is supposed to be actually output by the upstream air-fuel ratio sensor 66 when exhaust gas, which has a desired air-fuel ratio corresponding to the upstream target air-fuel ratio abyfr(k-N), has reached the upstream air-fuel ratio sensor 66.

Upstream-air-fuel-ratio-deviation calculation means A13 obtains an air-fuel ratio deviation Daf in accordance with Equation (7) described below; i.e., by subtracting "the detected air-fuel ratio abyfs(k) at the present point in time obtained by the table conversion means A10" from the "MFB target air-fuel ratio abyfrtgt(k) output from the low-pass filter A12." This air-fuel ratio deviation Daf is a quantity which represents a deviation, from the target air-fuel ratio, of the air-fuel ratio of the gas mixture supplied to the cylinder at a point in time N strokes before the present point in time.

$$Daf = abyfrtgt(k) - abyfs(k) \qquad (7)$$

A high-pass filter A14 is a first-order filter. A transfer function A14(s), which represents the characteristics of the high-pass filter A14 is represented by Equation (8) described below. In Equation (8), s represents a Laplace operator, and $\tau1$ is a time constant. The time constant $\tau1$ is the same as the time constant $\tau1$ of the low-pass filter A8. The high-pass filter A14 substantially prohibits passage of low-frequency components whose frequencies are equal to or lower than the frequency (1/$\tau1$).

$$A14(s) = \{1 - 1/(1 + \tau1 \cdot s) \qquad (8)$$

The high-pass filter A14 receives the air-fuel ratio deviation Daf obtained by the upstream-air-fuel-ratio-deviation calculation means A13, and outputs "the deviation DafHi for main feedback control", which is a value obtained by performing high-pass filter processing on the air-fuel ratio deviation Daf in accordance with the characteristic equation represented by Equation (8).

Main-feedback-correction-value update means A15 performs proportional processing on "the deviation DafHi for main feedback control," which is the output value of the high-pass filter A14. That is, the main-feedback-correction-value update means A15 obtains the main feedback correction value KFmain by multiplying "the deviation DafHi for main feedback control" by a proportional gain GpHi. As shown in Equation (2), this main feedback correction value KFmain is used for obtaining the final fuel injection amount Fi(k).

It should be noted that the main-feedback-correction-value update means A15 may obtain the main feedback correction value KFmain in accordance with Equation (9) described below; i.e., by performing proportional plus integral processing (PI processing) on "the deviation DafHi for main feedback control", which is the output value of the high-pass filter A14.

$$KFmain = (Gphi \cdot DafHi + Gihi \cdot SDafHi) \cdot KFB \qquad (9)$$

In the above Equation (9), Gphi is a preset proportional gain (proportional constant), and Gihi is a preset integral gain (integral constant). SDafHi is a value obtained through integration of "the deviation DafHi for main feedback control" with respect to time. In the present example, the coefficient KFB is "1." However, the coefficient KFB may be changed in accordance with the engine rotational speed NE, the cylinder intake air amount Mc, etc.

As is apparent from the above, the upstream-target-air-fuel-ratio setting means A2, the table conversion means A10, the target-air-fuel-ratio delay means A11, the low-pass filter A12, the upstream-air-fuel-ratio-deviation calculation means A13, the high-pass filter A14, and the main-feedback-correction-value update means A15 constitute main-feedback-correction-value calculation means.

As described above, in the first control apparatus, the main feedback control system and the sub feedback control system are connected, in parallel and individually, to the system for calculating the prior-correction-base fuel injection amount Fbaseb. That is, the first control apparatus performs the sub feedback control on the basis of a value obtained by adding the sub feedback correction value Fisub to the product of the post-correction-base fuel injection amount Fbase and the main feedback correction value KFmain, independently from the main feedback control performed on the basis of a value obtained by multiplying the post-correction-base fuel injection amount Fbase by the main feedback correction value KFmain. Further, as described above, "the deviation DafHi for main feedback control" is a value which is obtained by performing high-pass filer processing on the air-fuel ratio deviation Daf by the high-pass filter A14 and which reflects an air-fuel ratio variation which does not appear at the downstream side of the upstream catalyst 53. Accordingly, the main feedback correction value KFmain and the sub feedback correction value Fisub do not correct variations of the air-fuel ratio of the gas mixture to be supplied to the engine, in a manner in which correction inference occurs.

In addition, the main feedback control suppresses an abrupt change of air-fuel ratio in a transitional operating state, and the sub feedback control eliminates a "slow deviation of air-fuel ratio which appears as a variation of air-fuel ratio at the downstream side of the upstream catalyst 53."

Moreover, the sub feedback control can prevent the "averaged air-fuel ratio of the gas mixture to be supplied to the engine" from deviating from the window W, the deviation being caused due to a detection error associated with the averaged air-fuel ratio, which is caused by "the shift of the characteristics of the upstream air-fuel ratio sensor 66," "the position where the upstream air-fuel ratio sensor 66 is disposed," etc..

<Calculation of base correction value>

As described above, the PID controller A9 calculates the sub feedback correction value Fisub by performing proportional plus integral plus derivative processing (PID processing) on the low-pass-filter passed output deviation DVoxslow. However, a change in the air-fuel ratio of the engine 10 appears as a change in the air-fuel ratio of the exhaust gas downstream of the upstream catalyst 53 with a slight delay due to influences of the oxygen storage function of the upstream catalyst 53, etc.

Accordingly, in the case where a steady-state error caused by the detection accuracy of the air flow meter and the estimation accuracy of the air-amount estimation model increases relatively sharply due to, for example, an abrupt change of the operating region, excessiveness or insufficiency of the fuel injection amount caused by the steady-state error cannot be compensated immediately by the sub feedback control only.

Meanwhile, in the main feedback control which is not influenced by the delay due to the oxygen storage function, the high-pass filter processing by the high-pass filter A14 substantially achieves a function equivalent to derivative processing (D processing). Accordingly, in the main feedback control in which the value having passed through the high-pass filter A14 is used as an input value of the main-feedback-correction-value update means A15, even in the case where the main-feedback-correction-value update means A15 is configured to obtain the main feedback correction value KFmain by performing integral processing, the main-feedback-correction-value update means A15 cannot calculate the main feedback correction value KFmain which contains a substantial integral term. Therefore, the main feedback control cannot compensate the steady-state error of the fuel injection amount due to the detection inaccuracy of the air flow meter and the estimation inaccuracy of the air-amount estimation model. As result, in the case where the operating region changes, the discharge mounts of HC, CO, and $NO_x$ may increase temporarily.

In view of the above, as shown in Equation (10) described below, the first control apparatus obtains a base correction value KF which is to correct the prior-correction-base fuel injection amount Fbaseb, obtains the post-correction-base fuel injection amount Fbase(k) by use of the base correction value KF, and further corrects the post-correction-base fuel injection amount Fbase(k) by the main feedback correction value KFmain as well as the sub feedback correction value Fisub (see the above-descried Equation (2)).

$$Fbaset(k-N) = KF \cdot Fbaseb(k-N) \qquad (10)$$

In Equation (10), Fbaset represents a true instruction injection amount required to obtain the target air-fuel ratio, and can be said to be the base fuel injection amount containing no error. In the following description, Fbaset will be referred to as a "true base fuel injection amount." This true base fuel injection amount Fbaset(k-N) is calculated by Equation (11) described below.

$$Fbaset(k-N) = (abyfs(k) \cdot Fi(k-N)/abyfr(k-N) \qquad (11)$$

Equation (11) will be described further. As described above, the detected air-fuel ratio abyfs(k) at the present point in time is an air-fuel ratio resulting from injection of fuel on the basis of the final fuel injection amount Fi(k-N). Accordingly, abyfs(k)·Fi(k-N), which is the numerator of the right side of Equation (11) represents the cylinder air amount at the time when the final fuel injection amount Fi(k-N) was determined. Therefore, as shown in Equation (11), the true base fuel injection amount Fbaset(k-N) is calculated by dividing the cylinder air amount (abyfs(k)·Fi(k-N) at the time when the final fuel injection amount Fi(k-N) was determined by the upstream target air-fuel ratio abyfr(k-N) at the time when the final fuel injection amount Fi(k-N) was determined.

Meanwhile, the prior-correction-base fuel injection amount Fbaseb(k) used in Equation (10) is obtained in accordance with the above-described Equation (1), which is described below again.

$$Fbaseb(k) = Mc(k)/abyfr(k) \qquad (1)$$

Thus, the first control apparatus obtains the base correction amount KF in accordance with the following Equation (12), which is obtained from Equations (1), (10), and (11), and stores the obtained base correction amount KF in the memory, while relating it to the operating region at the time when the base correction amount KF was calculated. Each of the operating region is defined based on, for example, the cylinder intake air amount Mc.

$$\begin{aligned} KF &= Fbaset(k-N)/Fbaseb(k-N) \\ &= ((abyfs(k) \cdot Fi(k-N))/abyfr(k-N))/ \\ &\quad (Mc(k-N)/abyfr(k-N)) \qquad (12) \end{aligned}$$

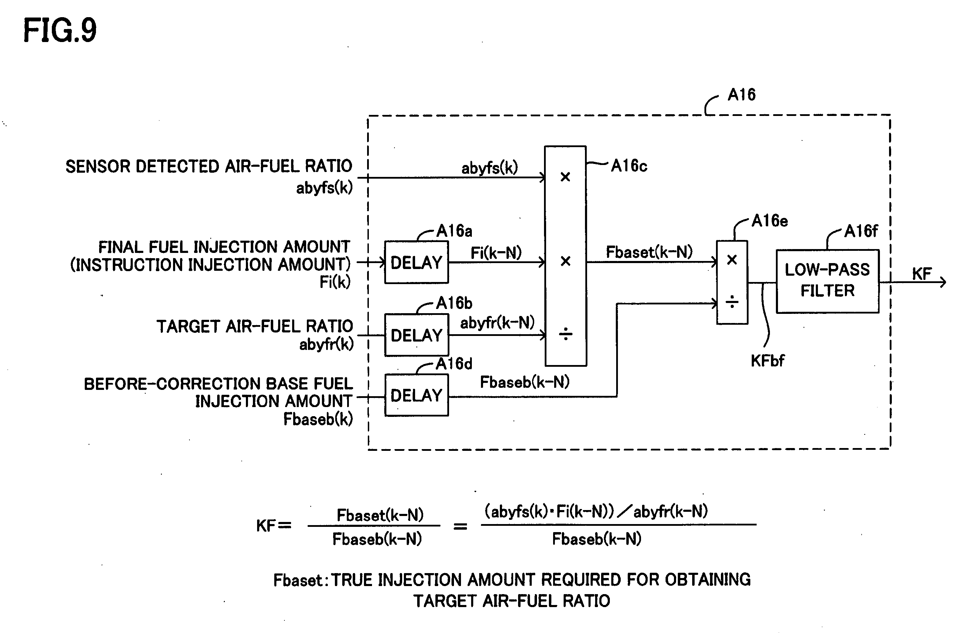

Next, an actual method of calculating the base correction value KF will be described with reference to FIG. 9, which is a detailed functional block diagram of the base-correction-value calculation means A16. The base-correction-value calculation means A16 includes various means A16a to A16f.

Final-fuel-injection-amount delay means A16a obtains the final fuel injection amount Fi(k-N) at a point in time N strokes before the present point in time by delaying the final fuel injection amount Fi(k) of the present time. In actuality, the final-fuel-injection-amount delay means A16a reads the final fuel injection amount Fi(k-N) from the RAM 73.

Target-air-fuel-ratio delay means A16b obtains the upstream target air-fuel ratio abyfr(k-N) at a point in time N strokes before the present point in time by delaying the upstream target air-fuel ratio abyfr(k) of the present time. In actuality, the target-air-fuel-ratio delay means A16b reads the upstream target air-fuel ratio abyfr(k-N) from the RAM 73.

True-base-fuel-injection-amount calculation means A16c obtains the true base fuel injection amount Fbaset(k-N) at a point in time N strokes before the present point in time in accordance with Equation (11) (Fbaset (k -N) = (abyfs(k)·Fi(k-N)/abyfr(k-N)).

Prior-correction-base-fuel-injection-amount delay means A16d obtains the prior-correction-base fuel injection amount Fbaseb(k-N) at a point in time N strokes before the present point in time by delaying the prior-correction-base fuel injection amount Fbaseb(k) of the present time.

In actuality, the prior-correction-base-fuel-injection-amount delay means A16d reads the prior-correction-base fuel injection amount Fbaseb(k-N) from the RAM 73.

Before-filtering-base-correction-value calculation means A16e calculates a before-filtering base correction value KFbf by dividing the true base fuel injection amount Fbaset(k-N) by the prior-correction-base fuel injection amount Fbaseb(k-N) in accordance with an equation (KFbf = Fbaset(k-N)/Fbaseb(k-N)) based on the above-described Equation (12).

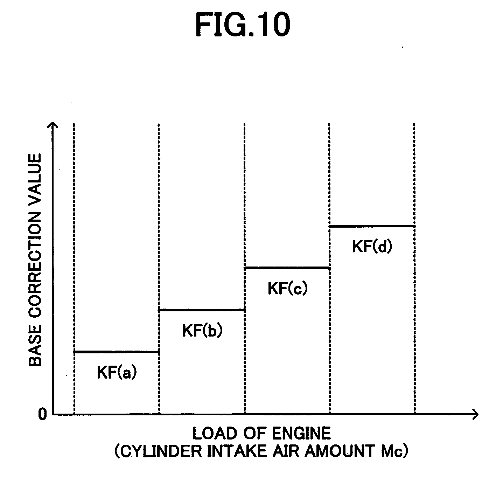

A low-pass filter A16f obtains the base correction value KF by performing low-pass filter processing on the before-filtering base correction value KFbf. This low-pass filter processing is performed in order to stabilize the base correction value KF (in order to remove noise components superimposed on the before-filtering base correction value KFbf). The base correction value KF obtained in this manner is memorized / stored in the RAM 73 and the backup RAM 74, while being related to an operating region to which the operating state belongs, the operating state being N strokes before the present point in time. Notably, as shown in FIG. 10, the operating region to which the base correction value KF is related is defibed based on the load (the cylinder intake air amount Mc, the accelerator pedal operation amount Accp, etc.) of the engine 10. The operating region may be defined based on both the engine rotational speed NE and the load the engine.

As described above, every time the timing for calculating the final fuel injection amount Fi(k) comes, the base-correction-value calculation means A16 updates the base correction amount KF by making use of the means A16a to A16f. In addition, as shown in FIG. 8, the base-correction-value calculation means A16 reads out the base correction value KF from the backup RAM 74, the value KF corresponding to an operating region to which the operating state of the engine 10 belongs at the time of calculating the final fuel injection amount Fi(k), and give the read base correction value KF to the post-correction-base-fuel-injection-amount calculation means A4. As a result, the steady-state error of the fuel injection amount (the steady-state error of the prior-correction-base fuel injection amount) is compensated rapidly.


(Actual operation)


Next, the actual operation of the first control apparatus will be described. In the following description, for convenience of description, "MapX(a1, a2, ...)" represents a table for obtaining a value X by using a1, a2, ... as arguments. Further, in the case where the value of an argument is the detection value of a sensor, the present value of a sensor is applied to the value of the argument.


<Calculation of the final fuel injection amount Fi(k)>


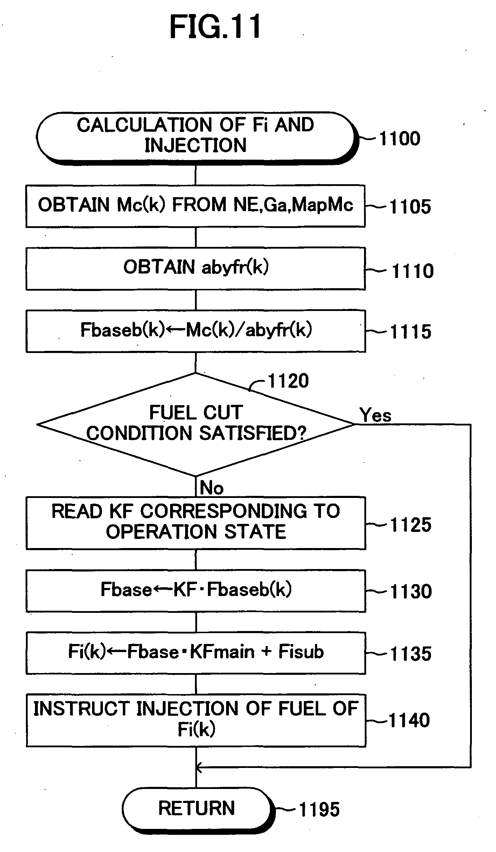

The CPU 71 repeatedly executes the routine shown by a flowchart in FIG. 11 and adapted to calculate the final fuel injection amount Fi to instruct fuel injection, every time the crank angle of each cylinder reaches a predetermined crank angle before its intake top dead center (e.g., BTDC 90° CA). Accordingly, when the crank angle of an arbitrary cylinder reaches the predetermined crank angle, the CPU 71 starts the processing from step 1100, successively performs processings of steps 1105 to 1115 described below, and then proceeds to step 1120.

Step 1105: the CPU 71 estimates and determines the cylinder intake air amount Mc(k) of the present time, which flows into a cylinder (hereinafter may be referred to as the "fuel injection cylinder") which is about to start the present intake stroke, on the basis of a table MapMc(NE, Ga).

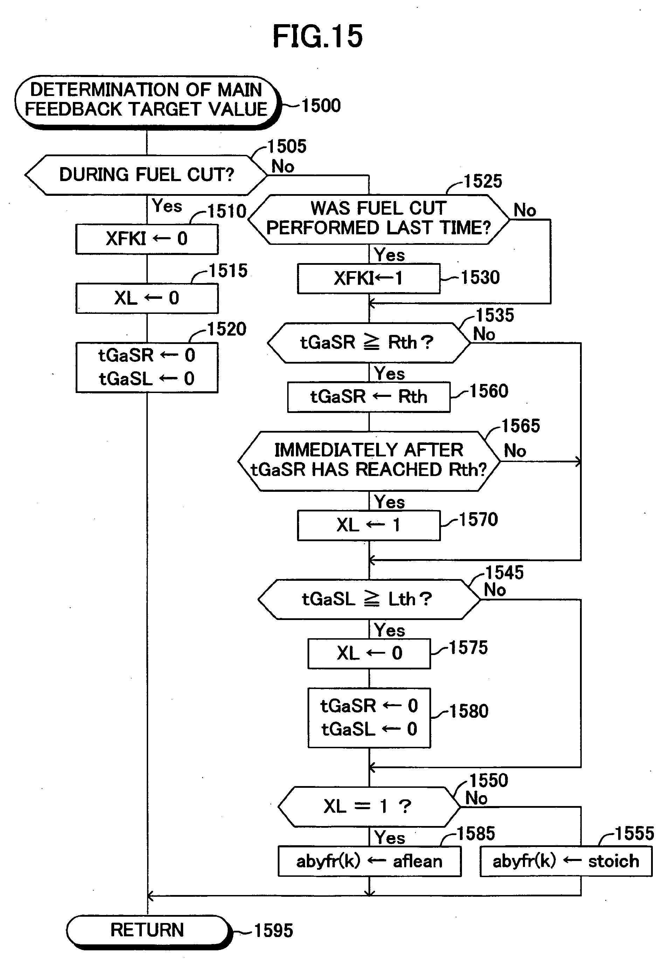

Step 1110: the CPU 71 obtains the upstream target air-fuel ratio abyfr(k) of the presnt time, which has been separately determined by a routine of FIG. 15, which will be described later. The upstream target air-fuel ratio abyfr(k) is stored in the RAM 73, while being related to the intake stroke of each cylinder.

Step 1115: the CPU 71 calculates the prior-correction-base fuel injection amount Fbaseb(k) by dividing the cylinder intake air amount Mc(k) by the upstream target air-fuel ratio abyfr(k). The prior-correction-base fuel injection amount Fbaseb(k) is stored in the RAM 73, while being related to the intake stroke of each cylinder.

Next, the CPU 71 proceeds to step 1120 so as to determine whether or not the current operation conditions satisfy fuel cut conditions (the above-described deceleration fuel cut conditions). If the fuel cut conditions are satisfied, the CPU 71 makes a "Yes" determination in step 1120, and proceeds directly to step 1195 so as to end the current execution of the present routine. In this case, since step 1140 for instructing fuel injection is not executed, fuel injection is stopped (fuel cut control is performed).

Meanwhile, if the fuel cut conditions are not satisfied at the time of the determination in step 1120, the CPU 71 makes a "No" determination in step 1120, successively performs the processings of steps 1125 to 1140 described below, and then proceeds to step 1195 so as to end the current execution of the present routine.

Step 1125: the CPU 71 reads from the backup RAM 74 a base correction value KF corresponding to an operating region to which the operating state belongs at the present point in time, among the base correction values KF which are calculated by a routine described later and are stored in the backup RAM 74 for the respective operating regions. It should be noted that, when the main feedback control conditions are not satisfied, a value "1" is set to the base correction value KF irrespective of the operating state.

Step 1130: the CPU 71 stores, as the post-correction-base fuel injection amount Fbase, a value obtained by multiplying the prior-correction-base fuel injection amount Fbaseb(k) by the base correction value KF which was read out in step 1125.

Step 1135: the CPU 71 obtains the final fuel injection amount Fi(k) of the present time in accordance with the above-described Equation (2); i.e., by adding the sub feedback correction value Fisub to the product of the post-correction-base fuel injection amount Fbase and the main feedback correction value KFmain which has been obtained by a routine which will be described later.

Step 1140: the CPU 71 generates an injection instruction to the injector 39 of the fuel injection cylinder in such a manner that fuel of the final fuel injection amount Fi(k) is injected from the injector 39.

By virtue of the above-described procedure, the prior-correction-base fuel injection amount Fbaseb is obtained on the basis of the upstream target air-fuel ratio abyfr(k) and the cylinder intake air amount Mc(k) of the present time; and the post-correction-base fuel injection amount Fbase is obtained based on the prior-correction-base fuel injection amount Fbaseb and the base correction value KF. Further, the post-correction-base fuel injection amount Fbase is corrected by use of the main feedback correction value KFmain and the sub feedback correction value Fisub, whereby the final fuel injection amount Fi is obtained; and the injector 39 of the fuel injection cylinder is instructed to inject fuel of the final fuel injection amount Fi.

<Calculation of the main feedback correction value>

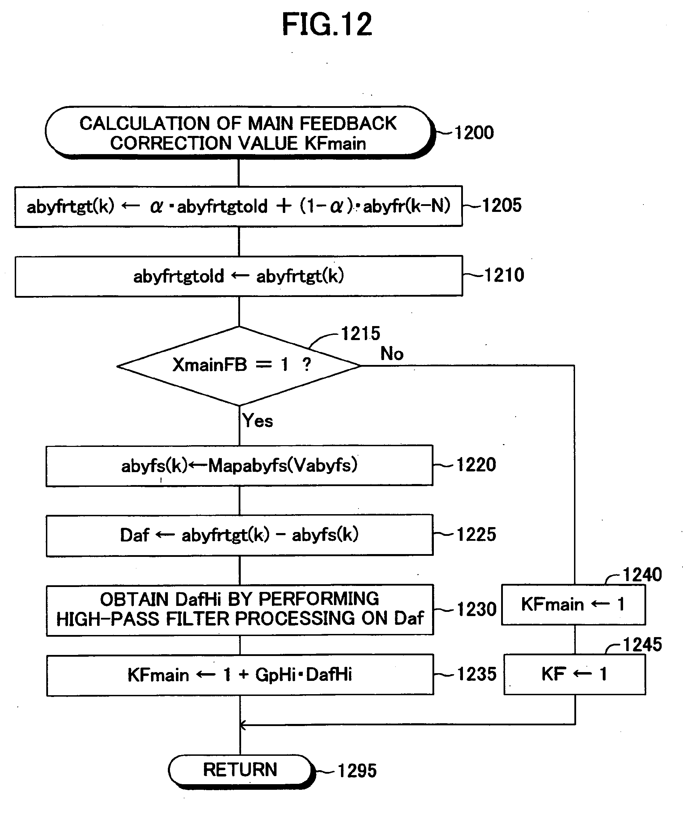

Next, operation for calculating the main feedback correction value KFmain will be described. Every time an execution period $\Delta t$ (constant) elapses, the CPU 71 repeatedly executes a routine shown in FIG. 12 in the form of a flowchart. Accordingly, at predetermined timing, the CPU 71 starts the processing from step 1200, successively performs processings of steps 1205 and 1210 described below, and then proceeds to step 1215. Notably, the execution period $\Delta t$ is set to be shorter than the time interval between successive two injection instructions which are generated when the engine rotational speed NE is the assumed maximum engine rotational speed.

Step 1205: the CPU 71 obtains the MFB target air-fuel ratio abyfrtgt(k) in accordance with a simplified low-pass filter equation (abyfrtgt(k) = $\alpha$·abyfrtgtold + (1-$\alpha$)·abyfr(k-N)) described in the block of step 1205. This processing corresponds to the processing of the above-described target-air-fuel-ratio delay means A11 and low-pass filter A12. Here, the $\alpha$ is a constant which is greater than 0 but smaller than 1 and which is set in accordance with the time constant $\tau$ of the low-pass filter A12. The abyfrtgtold represents the "MFB target air-fuel ratio abyfrtgt calculated when the present routine was executed last time," which is set in the next step 1210. The abyfrtgtold will be referred to as a "previous MFB target air-fuel ratio (previous target air-fuel ratio for main feedback control)." The abyfr(k-N) represents the upstream target air-fuel ratio abyfr at the point in time N strokes before the present point in time.

Step 1210: for execution of the present routine next time, the CPU 71 stores the MFB target air-fuel ratio abyfrtgt(k) calculated in step 1205 in a storage area for storing the previous MFB target air-fuel ratio abyfrtgtold.

Next, the CPU 71 proceeds to step 1215 and determines whether or not the value of a main-feedback-control-condition satisfaction flag XmainFB is "1." In a routine which will be described later, the value of the main-feedback-control-condition satisfaction flag XmainFB is set to "1" when the main feedback control conditions are satisfied, and set to "0" when the main feedback control conditions are not satisfied. Further, the value of the main-feedback-control-condition satisfaction flag XmainFB is set to "0" by an initialization routine executed when an unillustrated ignition key switch is turned on. Here, the value of the main-feedback-control-condition satisfaction flag XmainFB is assumed to be "1." In such a case, the CPU 71 successively performs steps 1220 to 1235 described below, and then proceeds to step 1295 so as to end the current execution of the present routine.

Step 1220: the CPU 71 obtains the detected air-fuel ratio abyfs(k) at the present point in time by converting the output value Vabyfs of the upstream air-fuel ratio sensor 66 at the present point in time by use of the table Mapabyfs (Vabyfs) shown in FIG. 4.

Step 1225: the CPU 71 obtains the air-fuel ratio deviation Daf in accordance with an equation described in the block of step 1225, which is the same as the above-described Equation (7); i.e., by subtracting the detected air-fuel ratio abyfs(k) of this time from the MFB target air-fuel ratio abyfrtgt(k).

Step 1230: the CPU 71 obtains the deviation for main feedback control DafHi by performing high-pass filter processing on the air-fuel ratio deviation Daf, the high-pass filter processing having characteristics represented by the above-described Equation (8). This processing corresponds to the processing by the above-described high-pass filer A14.

Step 1235: the CPU 71 obtains the main feedback correction value KFmain by adding "1" to the product of the deviation for main feedback control DafHi and the proportional gain GpHi.

On the other hand, if the value of the main-feedback-control-condition satisfaction flag XmainFB is "0," the CPU 71 proceeds from step 1215 to step 1240 so as to successively perform the processings of steps 1240 and 1245, and then proceeds to step 1295 to end the current execution of the present routine.

Step 1240: the CPU 71 sets the main feedback correction value KFmain to "1."

Step 1245: the CPU 71 sets the base correction value KF to "1."

As described above, when the main feedback control conditions are not satisfied (XmainFB = 0), update of the main feedback correction value KFmain is stopped, and the main feedback correction value KFmain is set to "1." Therefore, the main feedback control is stopped (the reflection of the main feedback correction value KFmain in the final fuel injection amount Fi is stopped). Further, since the base correction amount KF is set to "1" when the main feedback control conditions are not satisfied, reflection of the base correction value KF in the final fuel injection amount Fi is stopped.

<Calculation of the sub feedback correction value>

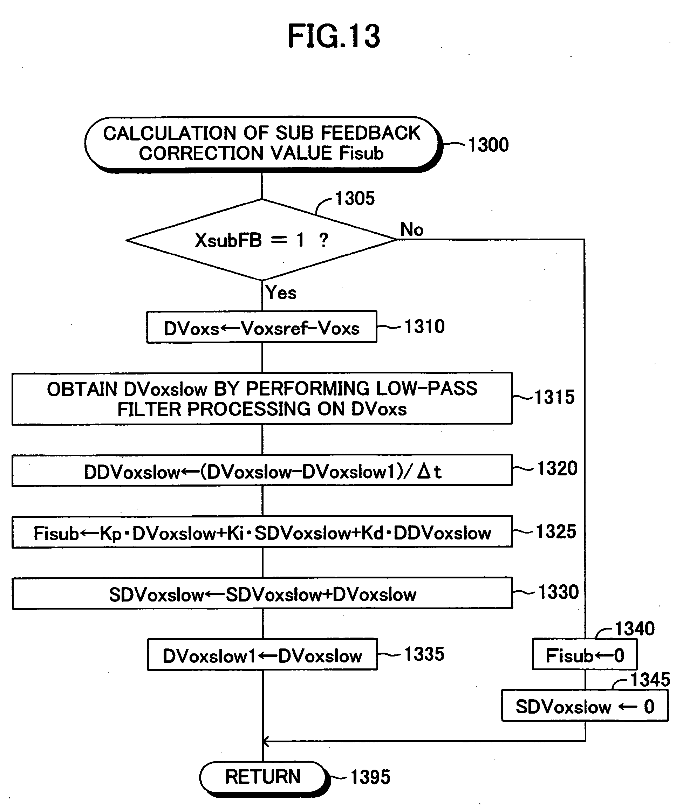

Next, operation for calculating the sub feedback correction value Fisub will be described. Every time a predetermined period of time elapses, the CPU 71 repeatedly executes a routine shown in FIG. 13 in the form of a flowchart. Accordingly, at predetermined timing, the CPU 71 starts the processing from step 1300, and proceeds to step 1305 so as to determine whether or not the value of a sub-feedback-control-condition satisfaction flag XsubFB is "1."

In a routine wich will be described later, the value of the sub-feedback-control-condition satisfaction flag XsubFB is set to "1" when the sub feedback control conditions are satisfied, and set to "0" when the sub feedback control conditions are not satisfied. Further, the value of the sub-feedback-control-condition satisfaction flag XsubFB is set to "0" by the unillustrated initialization routine. Here, the value of the sub-feedback-control-condition satisfaction flag XsubFB is assumed to be "1." In this case, the CPU 71 successively performs steps 1310 to 1335 described below, and then proceeds to step 1395 to end the current execution of the present routine.

Step 1310: the CPU 71 obtains the output deviation DVoxs in accordance with an equation shown in the block of step 1310, which is the same as the above-described Equation (3); i.e., by subtracting the output value Voxs of the downstream air-fuel ratio sensor 67 at the present point in time from the downstream target value Voxsref. It should be noted that, as described before, the downstream target value Voxsref has been set to Vrich corresponding to the weak rich air-fuel ratio AFR.

Step 1315: the CPU 71 obtains the low-pass-filter passed output deviation DVoxslow by performing low-pass filter processing on the output deviation DVoxs, the low-pass filter processing having characteristics represented by the above-described Equation (4).

Step 1320: the CPU 71 obtains a differentiated value DDVoxslow of the low-pass-filter passed output deviation DVoxslow in accordance with Equation (13) described below. In Equation (13), the DVoxslow1 represents the previous value of the "low-pass-filter passed output deviation DVoxslow" which has been updated in step 1335 (described later) at the time of previous execution of the present routine. The $\Delta t$ is the execution interval of the present routine.

$$DDVoxslow = (DVoxslow - DVoxslow1)/\Delta t \qquad (13)$$

Step 1325: the CPU 71 obtains the sub feedback correction value Fisub in accordance with an equation shown in the block of step 1325, which is the same as the above-described Equation (5).

Step 1330: the CPU 71 obtains a new integral value SDVoxslow of the low-pass-filter passed output deviation DVoxslow by adding the low-pass-filter passed output deviation DVoxslow obtained in above-described step 1315 to the integral value SDVoxslow of the low-pass-filter passed output deviation DVoxslow at that point in time.

Step 1335: the CPU 71 stores the low-pass-filter passed output deviation DVoxslow obtained in the above-described step 1315 in a storage area for storing the previous value DVoxslow1 of the low-pass-filter passed output deviation DVoxslow.

On the other hand, if it is determined that the value of the sub-feedback-control-condition satisfaction flag XsubFB is "0" in step 1305, the CPU 71 makes a "No" determination in step 1305, and proceeds to step 1340 so as to set the sub feedback correction value Fisub to "0." Subsequently, in step 1345, the CPU 71 sets the integral value SDVoxslow of the low-pass-filter passed output deviation DVoxslow to "0," and then proceeds to step 1395 to end the current execution of the present routine.

As described above, when the sub feedback control conditions are not satisfied (XsubFB = 0), the sub feedback correction value Fisub is set to "0." Therefore, the air-fuel ratio feedback control in accordance with the output Voxs of the downstream air-fuel ratio sensor 67 is not performed.

<Calculation and memorization/storage of the base correction value>

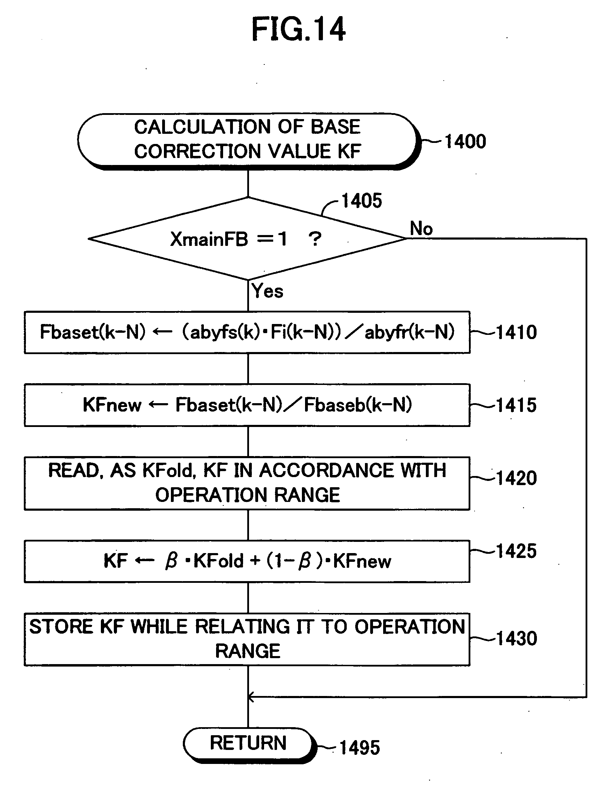

Prior to the execution of the routine shown in FIG. 11, the CPU 71 repeatedly executes a routine shown in FIG. 14 in the form of a flowchart. Accordingly, at predetermined timing, the CPU 71 starts the processing from step 1400, and proceeds to step 1405 so as to determine whether or not the value of the main-feedback-control-condition satisfaction flag XmainFB is "1." Here, the value of the main-feedback-control-condition satisfaction flag XmainFB is assumed to be "1." In this case, the CPU 71 successively performs steps 1410 to 1430 described below, and then proceeds to step 1495 so as to end the current execution of the present routine.

Step 1410: the CPU 71 calculates the true base fuel injection amount Fbaset(k-N) at a point in time N strokes before the present point in time in accordance with an equation described in the block of step 1410, which is the same as the above-described equation (11); i.e., by dividing "the product of the detected air-fuel ratio abyfs(k) at the present point in time and the final fuel injection amount Fi(k-N) at the point in time N strokes before the present point in time" by "the upstream target air-fuel ratio abyfr(k-N) at the point in time N strokes before the present point in time." It should be noted that both the final fuel injection amount Fi(k-N) at the point in time N strokes before the present point in time and the upstream target air-fuel ratio abyfr(k-N) at the point in time N strokes before the present point in time are read out from the RAM 73.

Step 1415: the CPU 71 calculates a present-time value KFnew (before-filtering base correction value KFbf), which will become the base for the base correction value KF, which is calculated, in accordance with an equation described in the block of step 1415, the equation being the same as the above-described equation (12). That is the CPU 71 calculates a present-time value KFnew by dividing the true base fuel injection amount Fbaset(k-N) at the point in time N strokes before the present point in time, calculated in step 1410, by the prior-correction-base fuel injection amount Fbaseb(k-N) at the point in time N strokes before the present point in time.

It should be noted that the prior-correction-base fuel injection amount Fbaseb(k-N) at the point in time N strokes before the present point in time is read out from the RAM 73.

Step 1420: the CPU 71 reads out, from the backup RAM 74, the base correction value KF corresponding to the operating region to which the operating state of the engine 10 belongs at the point in time N strokes before the present point in time. This read-out base correction value KF is referred to as an old base correction value KFold.

Step 1425: the CPU 71 calculates a new base correction value KF (final base correction value KF) in accordance with a simplified low-pass filter equation (KF = β·KFold + (1 - β)·KFnew) described in the block of step 1425. It should be noted that the β is a constant greater than 0 but less than 1.

Step 1430: the CPU 71 memorizes / stores the base correction value KF obtained in step 1425 in a storage area within the backup RAM 74 corresponding to the operating region to which the operating state of the engine 10 belonged at the point in time N strokes before the present point in time.

In this manner, in the case where the value of the main-feedback-control-condition satisfaction flag XmainFB is "1," the base correction value KF is updated and stored.

On the other hand, when the value of the main-feedback-control-condition satisfaction flag XmainFB is "0," the CPU 71 makes a "No" determination in step 1405, and proceeds directly to step 1495 so as to end the current execution of the present routine. In this case, update of the base correction value KF and the processing for memorizing/storing the base correction value KF into the backup RAM 74 are not performed.

<Calculation of the upstream target air-fuel ratio abyfr(k)>

Every time a predetermined period of time elapses, the CPU 71 executes a routine shown in FIG. 15 in the form of a flowchart from step 1500. Accordingly, at predetermined timing, the CPU 71 proceeds to step 1505 so as to determine whether or not the fuel cut control is currently performed. Here, it is assumed that the fuel cut control is being currently performed (see a period before time t1 of FIG. 7). In this case, the CPU 71 makes a "Yes" determination in step 1505, successively performs the processings of step 1510 to step 1520 described below, and then proceeds to step 1595 so as to end the current execution of the present routine.

Step 1510: the CPU 71 sets the value of a fuel cut end flag XFKI to "0." The value of the fuel cut end flag XFKI is maintained at "0" during the fuel cut control, and set to "1" when the fuel cut control ends (see steps 1525 and 1530 described later). It should be noted that the value of the fuel cut end flag XFKI is set to "0" by the above-described unillustrated initialization routine, and is changed to "1" by an unillustrated routine when the main-feedback-control-condition satisfaction flag XmainFB, which is set to "0" by the initialization routine, is firstly changed from "0" to "1" after the startup of the engine 10.

Step 1515: the CPU 71 sets the value of a lean control flag (filter regeneration control flag) XL to "0." It should be noted that the value of the lean control flag XL is set to "0" by the above-described initialization routine.

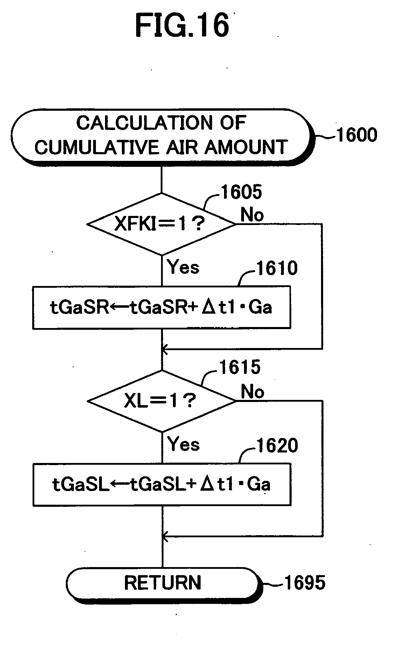

Step 1520: the CPU 71 sets the value of the weak-rich-control-period cumulative air amount tGaSR to "0" and sets the value of the filter-regeneration-control-period cumulative air amount tGaSL to "0." The weak-rich-control-period cumulative air amount tGaSR and the filter-regeneration-control-period cumulative air amount tGaSL are updated by a routine shown in FIG. 16 which will be described later.

The above-described steps 1510 to 1520 are repeatedly executed in a period in which the fuel cut control is being executed.

Thereafter, the fuel cut control ends at time t1 shown in FIG. 7. When the CPU 71 executes the processing of step 1505 immediately after that (time t1), the CPU 71 makes a "No" determination in step 1505, and proceeds to step 1525 so as to determine whether or not the fuel cut control was being executed when the present routine was executed last time.

Since the present point in time is immediately after the fuel cut control ends, the fuel cut control was being executed when the present routine was executed last time. Accordingly, the CPU 71 makes a "Yes" determination in step 1525, proceeds to step 1530 so as to set the value of the fuel cut end flag XFKI is set to "1," and then proceeds to step 1535. It should be noted that if the fuel cut control was not executed when the present routine was executed last time, the CPU 71 makes a "No" determination in step 1525, and proceeds directly to step 1535.

Incidentally, every time a predetermined period of time Δt1 elapses, the CPU 71 repeatedly executes a cumulative air amount calculation routine shown in FIG. 16 in the form of a flowchart. Accordingly, at predetermined timing, the CPU 71 starts the processing from step 1600, and proceeds to step 1605 so as to determine whether or not the value of the fuel cut end flag XFKI is "1."

If the value of the fuel cut end flag XFKI is "1" at this point in time, the CPU 71 proceeds to step 1610, and increases the value of the weak-rich-control-period cumulative air amount tGaSR by an amount (Ga·Δt1) which is the product of the predetermined period of time Δt1 and the intake air flow rate Ga detected by the air flow meter 61 at this point in time. Thereafter, the CPU 71 proceeds to step 1615. In contrast, if the value of the fuel cut end flag XFKI is "0," the CPU 71 makes a "No" determination at step 1605, and proceeds from step 1605 directly to step 1615.

Next, at step 1615, the CPU 71 determines whether or not the lean control flag XL is "1." If the value of the lean control flag XL is "1" at this poing in time, the CPU 71 proceeds to step 1620 to increase the value of the filter-regeneration-control-period cumulative air amount tGaSL by an amount (Ga·Δt1) which is the product of the predetermined period of time Δt1 and the intake air flow rate Ga detected by the air flow meter 61 at this point in time. Thereafter, the CPU 71 proceeds to step 1695 so as to end the current execution of the present routine. In contrast, if the value of the lean control flag XL is "0," the CPU 71 makes a "No" determination at step 1615, and proceeds from step 1615 directly to step 1695 so as to end the current execution of the present routine.

As described above, the weak-rich-control-period cumulative air amount tGaSR is increased by the amount (Ga·Δt1) every time Δt1 elapses when the value of the fuel cut end flag XFKI is "1"; and the filter-regeneration-control-period cumulative air amount tGaSL is increased by the amount (Ga·Δt1) every time Δt1 elapses when the lean control flag XL is "1."

Referring back to FIG. 15, when the CPU 71 proceeds to step 1535, it determines whether or not the weak-rich-control-period cumulative air amount tGaSR is equal to or greater than the filter-regeneration-control start threshold Rth. The present point in time is immediately after the fuel cut control ends (immediately after the fuel cut end). Therefore, the value of the weak-rich-control-period cumulative air amount tGaSR, which was set to "0" in step 1520, has not yet become equal to or greater than the filter-regeneration-control start threshold Rth.

Therefore, the CPU 71 makes a "No" determination at step 1535, and proceeds directly to step 1545 so as to determine whether or not the filter-regeneration-control-period cumulative air amount tGaSL is equal to or greater than the filter-regeneration-control completion threshold Lth. At this point in time, the value of the lean control flag XL is still "0" (it does not change after having been set to "0" at the above-described step 1515). Therefore, the filter-regeneration-control-period cumulative air amount tGaSL, which was set to "0" in the above-described step 1520, is not increased by the processing of step 1620 of FIG. 16. As a result, the filter-regeneration-control-period cumulative air amount tGaSL is certainly smaller than the filter-regeneration-control completion threshold Lth.

Accordingly, the CPU 71 makes a "No" determination at step 1545, and proceeds to step 1550 so as to determine whether or not the value of the lean control flag XL is "1." At the present point in time, the value of the lean control flag XL is still "0" (it does not change after having been set to "0" in the above-described step 1515). Therefore, the CPU 71 makes a "No" determination at step 1550, and proceeds to step 1555 so as to set the stoichiometric air-fuel ratio "stoich" to a storage area for storing the upstream target air-fuel ratio abyfr(k). Thereafter, the CPU 71 proceeds to step 1595, and ends the current execution of the present routine. As a result, as shown in a period after time t1 of FIG. 7, the upstream target air-fuel ratio abyfr(k) becomes the stoichiometric air-fuel ratio "stoich."

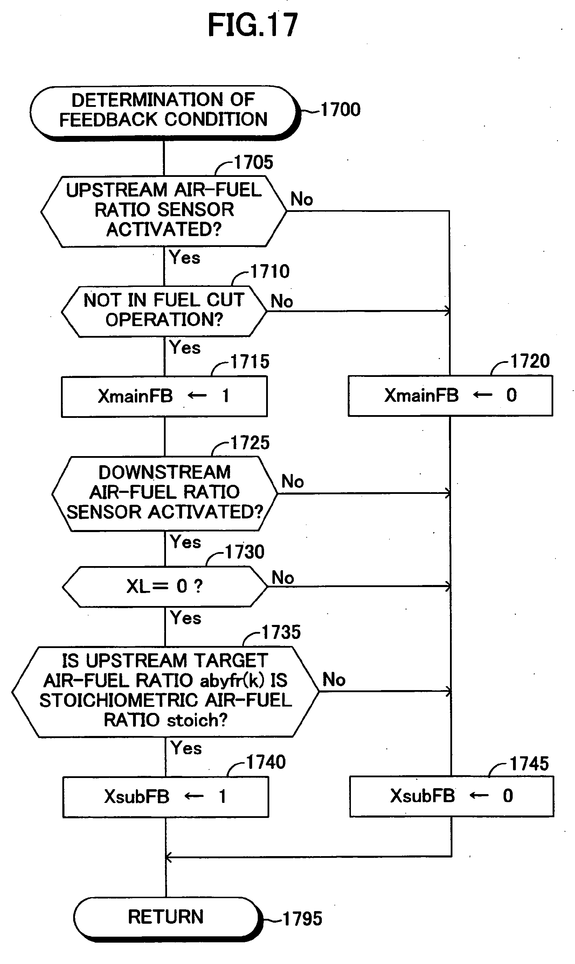

Further, every time a predetermined period of time elapses, the CPU 71 executes a routine shown in FIG. 17 in the form of a flowchart. When the main feedback control conditions are satisfied, the value of the main-feedback-control-condition satisfaction flag XmainFB is set to "1" at step 1715. When the main feedback control conditions are not satisfied, the value of the main-feedback-control-condition satisfaction flag XmainFB is set to "0" at step 1720. The main feedback control conditions are as follows.

(Main feedback control conditions)

The main feedback control conditions are satisfied when all the following conditions are satisfied.

· The upstream air-fuel ratio sensor 66 has been activated (see step 1705).
· The fuel cut control is not performed (see step 1710).

Similarly, when the sub feedback control conditions are satisfied, the value of the sub-feedback-control-condition satisfaction flag XsubFB is set to "1" in step 1740. When the sub feedback control conditions are not satisfied, the value of the sub-feedback-control-condition satisfaction flag XsubFB is set to "0" in step 1745. The sub feedback control conditions are as follows.

(Sub feedback control conditions)

The sub feedback control conditions are satisfied when all the following conditions are satisfied.

· The main feedback control conditions are satisfied (see steps 1705 and 1710).
· The downstream air-fuel ratio sensor 67 has been activated (see step 1725).
· The value of the lean control flag (filter regeneration control flag) XL is "0" (see step 1730).
· The upstream target air-fuel ratio abyfr(k) is the stoichiometric air-fuel ratio stoich (see step 1735).

It should be noted that the determination as to whether or not the upstream air-fuel ratio sensor 66 and the downstream air-fuel ratio sensor 67 have been activated can be made by detecting the resistances of the elements (solid electrolytes) of these air-fuel ratio sensors, and determining whether or not each of the detected element resistances is equal to or less than a predetermined value.

Here, the present point in time is after the fuel cut end (after time t1). Therefore, the value of the main-feedback-control-condition satisfaction flag XmainFB is set to "1" at step 1715. Meanwhile, the value of the lean control flag XL has been set to "0" in step 1515 of FIG. 15 during the fuel cut control. Further, the upstream target air-fuel ratio abyfr(k) has been set to the stoichiometric air-fuel ratio stoich at step 1555 of FIG. 15. Accordingly, the CPU 71 makes a "Yes" determination at each of steps 1725 to 1735 of FIG. 17, and proceeds to step 1740 so as to set the value of the sub-feedback-control-condition satisfaction flag XsubFB to "1."

As a result, the CPU 71 executes the main feedback control at steps 1220 to 1235 of FIG. 12, and executes the sub feedback control at steps 1310 to 1335 of FIG. 13. Accordingly, the air-fuel ratio of the engine (the averaged air-fuel ratio of the engine) is controlled to the above-described "weak rich air-fuel ratio AFR." That is, the above-described air-fuel ratio weak rich control is executed. Thus, reduction components (HC, CO, etc.) flow into the upstream catalyst 53, whereby oxygen which was stored by the upstream catalyst 53 during the fuel cut control is consumed, and the oxygen storage amount OSA1 gradually decreases to "0." During this period, the weak-rich-control-period cumulative air amount tGaSR gradually increases by the processing of step 1610.

When this state continues and time t2 shown in FIG. 7 comes, the oxygen storage amount OSA2 of the downstream catalyst 55 reaches a value smaller than the maximum storage amount Cmax2 of the downstream catalyst 55 by a predetermined amount. That is, the downstream catalyst 55 has been brought into the above-described "reduced state" in which the downstream catalyst 55 can reduce a predetermined amount of nitrogen oxides. Simultaneously, the weak-rich-control-period cumulative air amount tGaSR becomes equal to or greater than the filter-regeneration-control start threshold Rth. In this case, the CPU 71 makes a "Yes" determination when it proceeds to step 1535 of FIG. 15. Thus, the CPU 71 proceeds to step 1560, and sets the value of the weak-rich-control-period cumulative air amount tGaSR to the filter-regeneration-control start threshold Rth.

Next, the CPU 71 proceeds to step 1565 so as to determine whether or not the present point in time is immediately after the weak-rich-control-period cumulative air amount tGaSR has reached the filter-regeneration-control start threshold Rth. Since the present point in time is immediately after the weak-rich-control-period cumulative air amount tGaSR has reached the filter-regeneration-control start threshold Rth, the CPU 71 makes a "Yes" determination at step 1565, and proceeds to step 1570 so as to set the value of the lean control flag (filter regeneration control flag) XL to "1."

Next, the CPU 71 proceeds to step 1545. In this case, since the present point in time is immediately after the value of the lean control flag XL has been set to "1," the filter-regeneration-control-period cumulative air amount tGaSL, which was set to "0" in step 1520, has not yet become equal to or greater than the filter-regeneration-control completion threshold Lth (see steps 1615 and 1620 of FIG. 16). Accordingly, the CPU 71 makes a "No" determination at step 1545, and proceeds directly to step 1550.

In this case, the value of the lean control flag XL has been set to "1" at the above-described step 1570. Therefore, the CPU 71 makes a "Yes" determination at step 1550, and proceeds to step 1585 so as to set the above-described lean air-fuel ratio "aflean" to the storage area for storing the upstream target air-fuel ratio abyfr(k). Thereafter, the CPU 71 proceeds to step 1595, and ends the current execution of the present routine.

As a result, as shown in a period after time t2 of FIG. 7, the upstream target air-fuel ratio abyfr(k) becomes the lean air-fuel ratio "aflean." Further, the CPU 71 makes a "No" determination at step 1730 of FIG. 17, and proceeds to step 1745 so as to set the value of the sub-feedback-control-condition satisfaction flag XsubFB to "0." As a result, the CPU 71 makes a "No" determination at step 1305 of FIG. 13 to proceed to steps 1340 and 1345, whereby the sub feedback control is stopped.

By virtue of the above-described procedure, the averaged air-fuel ratio of the engine is controlled to the above-described "lean air-fuel ratio aflean." As a result, oxygen (and $NO_x$) flows into the upstream catalyst 53, so that the oxygen storage amount OSA1 of the upstream catalyst 53 having reached "0" during the air-fuel ratio weak rich control (from time t1 to time t2) increases gradually. Further, during this period, the filter-regeneration-control-period cumulative air amount tGaSL is increased gradually by the processing of step 1620 of FIG. 16.

When a predetermined period of time elapses in this state, the oxygen storage amount OSA1 of the upstream catalyst 53 reaches the maximum storage amount Cmax1, and oxygen from the engine 10 is supplied to the particulate collection filter 54 via the upstream catalyst 53. As a result, particulates burn within the particulate collection filter 54, and the particulate collection filter 54 is regenerated. Further, at this point in time, the downstream catalyst 55 substantially holds a considerable amount of a reduction agent (that is, the oxygen storage amount OSA2 of the downstream catalyst 55 is smaller than the maximum storage amount Cmax2 of the downstream catalyst 55 by a considerable amount. In other words, the downstream catalyst 55 has reached the "reduced state" in which the downstream catalyst 55 can remove (reduce) a predetermined amount of $NO_x$. Accordingly, a relatively large amount of $NO_x$ discharged from the engine 10 due to setting the averaged air-fuel ratio to the lean air-fuel ratio aflean is removed by the downstream catalyst 55.

When this state continues, the filter-regeneration-control-period cumulative air amount tGaSL is gradually increased by the processing of step 1620 of FIG. 16, while the weak-rich-control-period cumulative air amount tGaSR is maintained at the filter-regeneration-control start threshold Rth. Therefore, when a predetermined period has elapsed and time t3 has come, the filter-regeneration-control-period cumulative air amount tGaSL becomes equal to or greater than the filter-regeneration-control completion threshold Lth. In this case, the CPU 71 makes a "Yes" determination when it proceeds to step 1545 of FIG. 15. Thus, the CPU 71 proceeds to step 1575 so as to set the value of the lean control flag XL to "0." The CPU 71 then proceeds to step 1580 so as to set the value of the weak-rich-control-period cumulative air amount tGaSR to "0," and set the value of the filter-regeneration-control-period cumulative air amount tGaSL to "0."

As a result, since the value of the lean control flag XL becomes "0," the CPU 71 makes a "No" determination at step 1550, and proceeds to step 1555 so as to again store (set) the stoichiometric air-fuel ratio "stoich" in the storage area for storing the upstream target air-fuel ratio abyfr(k).
Thereafter, the CPU 71 proceeds to step 1595 to end the current execution of the present routine.

As a result of the above-described procedure, the CPU 71 makes a "Yes" determination at each of steps 1730 and 1735 of FIG. 17, and sets the value of the sub-feedback-control-condition satisfaction flag XsubFB to "1" at step 1740. Accordingly, as in the period between time t1 and time t2, the main feedback control and the sub feedback control are executed (the air-fuel ratio weak rich control is executed), whereby the averaged air-fuel ratio of the engine is controlled to the weak rich air-fuel ratio AFR.

Tereafter, the weak-rich-control-period cumulative air amount tGaSR, which was set to "0" at step 1580, is increased by the processing of step 1610 of FIG. 16. Accordingly, an operation similar to that in the period between time t1 and time t3 is repeated. As a result, the particulate collection filter 54 is periodically regenerated (see the period between time t2 and time t3 and the period between time t4 and time t5 of FIG. 7). Further, since the oxygen storage amount OSA2 of the downstream catalyst 55 does not reach the maximum oxygen storage amount Cmax2 of the downstream catalyst 55 during the filter regeneration control, $NO_x$ is effectively removed even during the filter regeneration control.

As described above, the first control apparatus includes reduced-state determination means (see step 630 of FIG. 6, step 1535 of FIG. 15, step 1610 of FIG. 16, etc.) for determining whether or not the downstream catalyst 55 has reached a reduced state in which the downstream catalyst 55 can remove a predetermined amount of nitrogen oxides. Further, the first control means includes air-fuel-ratio control means.

The air-fuel-ratio control means executes the near stoichiometric air-fuel ratio control (air-fuel ratio weak rich control), which controls the "averaged air-fuel ratio of the gas mixture" containing "air and fuel" to be supplied to the engine 10 to the "first air-fuel ratio (weak rich air-fuel ratio AFR) within a predetermined air-fuel ratio range (window W) that includes the stoichiometric air-fuel ratio." In addition, when it is determined that the downstream catalyst 55 has reached the reduced state, the air-fuel-ratio control means executes the "filter regeneration control" over a predetermined period of time. In the filter regeneration control, the air-fuel-ratio control means controls the "averaged air-fuel ratio of the gas mixture" to be supplied to the engine 10 to the "second air-fuel ratio (lean air-fuel ratio aflean) which is on the lean side with respect to (or in relation to) the first air-fuel ratio (the weak rich air-fuel ratio AFR) and on the lean side with respect to (or in relation to) to the stoichiometric air-fuel ratio" to thereby supply oxygen to the particulate collection filter 54 so as to burn particulates collected by the particulate collection filter 54.

As a result, oxygen is also supplied to the particulate collection filter 54 at timings other than the period of the fuel cut control. Accordingly, the particulates collected by the particulate collection filter 54 burn at appropriate timings, and thus, the particulate collection filter 54 is regenerated. Moreover, during the particulate collection filter 54 is being regenerated, nitrogen oxides discharged from the engine 10 are removed (reduced) by the "downstream catalyst 55 in the reduced state." Accordingly, the first control apparatus can regenerate the particulate collection filter, without increasing the discharge amount of nitrogen oxides.

It should be noted that the first air-fuel ratio is not necessarily an air-fuel ratio shifted toward the rich side from the stoichiometric air-fuel ratio, as long as the first air-fuel ratio falls within the "predetermined air-fuel ratio range (window W) , the range including the stoichiometric air-fuel ratio." It is preferable that the averaged air-fuel ratio of the gas mixture to be supplied to the engine be temporarily (preferably, periodically) set to an air-fuel ratio shifted toward the rich side from the stoichiometric air-fuel ratio, in order to cause the downstream catalyst 55 to reach the above-described reduced state. The timing at which the "averaged air-fuel ratio of the gas mixture" set to an air-fuel ratio shifted toward the rich side from the stoichiometric air-fuel ratio in order to cause the downstream catalyst 55 to reach the above-described reduced state may be a time when the cumulative value of the intake air amount after completion of the previous (last) filter regeneration control becomes equal to or greater than a predetermined value, a time when the cumulative value of operation time of the engine 10 after completion of the previous (last) filter regeneration control becomes equal to or greater than a predetermined value, or a like time.

Further, the first control apparatus includes the downstream air-fuel ratio sensor 67, and the air-fuel-ratio control means is configured to execute (or perform) the sub feedback control (see step 640 of FIG. 6, step 1135 of FIG. 11, FIG. 13, etc.) in order to execute (the near stoichiometric air-fuel ratio control (in order perform air-fuel ratio weak rich control), in such a manner that, when the output value Voxs output from the downstream air-fuel ratio sensor 67 is a value corresponding to a lean-side air-fuel ratio with respect to (or in relation to) the downstream target air-fuel ratio (an air-fuel ratio corresponding to the downstream target value Voxsref (= Vrich)) set as the first air-fuel ratio (weak rich air-fuel ratio AFR), the air-fuel-ratio control means changes the air-fuel ratio of the gas mixture to be supplied to the engine 10 to a further rich-side air-fuel ratio (i.e., richer side air-fuel ratio, smaller air-fuel ratio); and, when the output value output Voxs is a value corresponding to a rich-side air-fuel ratio with respect to (or in relation to) the downstream target air-fuel ratio, the air-fuel-ratio control means changes the air-fuel ratio of the gas mixture to be supplied to the engine 10 to a further lean-side air-fuel ratio (leaner-side air-fuel ratio, larger air-fuel ratio).

By virtue of the configuration above, when it is determined that the downstream catalyst 55 has not yet reached the above-described "reduced state," the sub feedback control for realizing the near stoichiometric air-fuel ratio control is executed. Therefore, the averaged air-fuel ratio of the gas flowing into the downstream catalyst 55 falls within the range of the window W of the downstream catalyst 55 more reliably, so that unburned substances and nitrogen oxides are removed efficiently. In addition, since the averaged air-fuel ratio of the engine is controlled to the "weak rich air-fuel ratio AFR," the downstream catalyst 55 reaches the above-described "reduced state" without fail when a certain period of time elapses.

It should be noted that the first control apparatus may stop the sub feedback control and set the upstream target air-fuel ratio abyfr to the weak rich air-fuel ratio AFR in order to execute the near stoichiometric air-fuel ratio control (air-fuel ratio weak rich control). Further, the first control apparatus may stop both the main feedback control and the sub feedback control and set only the upstream target air-fuel ratio abyfr to the weak rich air-fuel ratio AFR in order to execute the near stoichiometric air-fuel ratio control (air-fuel ratio weak rich control). Moreover, the first control apparatus may perform a so-called "post fuel cut injection-amount-increase control" in which the first control apparatus sets the air-fuel ratio of the gas mixture to be supplied to the engine to an air-fuel ratio shifted toward the rich side from the weak rich air-fuel ratio AFR (i.e., an air-fuel ratio which is smaller than the weak rich air-fuel ratio AFR), until a predetermined period of time elapses from a timing immediately after the fuel cut end, to thereby rapidly decrease the oxygen storage amount OSA1 and the oxygen storage amount OSA2.

Further, when it is determined that the downstream catalyst 55 has reached the above-described "reduced state," the air-fuel-ratio control means stops the sub feedback control so as to execute the filter regeneration control (see step 660 of FIG. 6, steps 1305, 1340, and 1345 of FIG. 13, steps 1535 and 1570 of FIG. 15, and steps 1730 and 1745 of FIG. 17). That is, the first control apparatus is configured to perform (or execute) lean maintaining control so as to maintain the averaged air-fuel ratio of the gas mixture to be supplied to the engine 10 at the second air-fuel ratio (lean air-fuel ratio aflean), without changing the air-fuel ratio of the gas mixture to be supplied to the engine 10 to a further rich-side air-fuel ratio, even when the output value Voxs output from the downstream air-fuel ratio sensor 67 becomes a value corresponding to a lean-side air-fuel ratio in relation to the downstream target air-fuel ratio AFR.

It should be noted that, in this case, as in the first control apparatus, the air-fuel ratio of the gas mixture to be supplied to the engine 10 may be alternately controlled to rich-side and lean-side air-fuel ratios with respect to (or in relation to) the second air-fuel ratio such that the average thereof is controlled to the second air-fuel ratio. Alternatively, the first control apparatus may stop not only the sub feedback control but also the main feedback control, and control the fuel injection amount such that the air-fuel ratio of the gas mixture to be supplied to the engine 10 always coincides with the second air-fuel ratio shifted toward the lean side from the stoichiometric air-fuel ratio.

By virtue of this configuration, when the downstream catalyst 55 is determined to have reached the "reduced state," the lean maintaining control is executed, whereby oxygen is supplied to the particulate collection filter 54. As a result, the particulate collection filter 54 is regenerated, and a large amount of nitrogen oxides discharged from the engine 10 are  removed (reduced) by the downstream catalyst 55 which has reached the reduced state.

Further, the reduced-state determination means of the first control apparatus is configured so as to obtain the first cumulative value (weak-rich-control-period cumulative air amount tGaSR) corresponding to a cumulative value ($\Sigma$(A-B)) of a "reduction component excessive amount (A-B)" obtained by subtracting an "amount B of oxidation components" discharged from the engine 10 to the exhaust passage, from an "amount A of reduction components" which are unburned substances discharged from the engine 10 to the exhaust passage, and determine on the basis of the first cumulative value tGaSR whether or not the downstream catalyst 55 has reached the above-described "reduced state" (see step 630 of FIG. 6 and step 1535 of FIG. 15). Accordingly, the determination as to whether or not the downstream catalyst 55 has reached the "reduced state" can be readily made.

Moreover, the first control apparatus includes fuel cut means (see steps 610 and 620 of FIG. 6, step 1120 of FIG. 11, etc.) for stopping the supply of fuel to the engine when the engine 10 enters a predetermined fuel-cut operating state. The reduced-state determination means determines whether or not the first cumulative value tGaSR whose cumulative calculation was started at the "fuel cut end" (which is considered to be one example of the "predetermined first accumulation start time" after the "fuel cut end time") has become equal to or greater than the first predetermined value (Rth) (see steps 630 of FIG. 6 and step 1535 of FIG. 15). Further, the reduced-state determination means is configured so as to determine that the downstream catalyst 55 has reached the "reduced state"  when it is determined that the first cumulative value tGaSR has become equal to or greater than the first predetermined value Rth (see steps 630 of FIG. 6, steps 1535 and 1565 of FIG. 15, steps 1605 and 1610 of FIG. 16).

In general, at the fuel cut end time, the oxygen storage amounts of the upstream catalyst 53 and the downstream catalyst 55 have reached their maximum oxygen storage amounts. Accordingly, the "first cumulative value tGaSR" having been being calculated from the "fuel cut end time" becomes a value corresponding to a decrease amount of the oxygen storage amount of the catalysts (that are the upstream catalyst 53 and the downstream catalyst 55) disposed in the exhaust passage. Therefore, the determination as to whether or not the downstream catalyst 55 has reached the "reduced state" can be readily made by determining whether or not the first cumulative value tGaSR having been being calculated from the "fuel cut end time" has become equal to or greater than the first predetermined value Rth.

Further, the air-fuel-ratio control means of the first control apparatus is configured so as to control (sub feedback control) the averaged air-fuel ratio of the gas mixture to be supplied to the engine 10 to an air-fuel ratio (weak rich air-fuel ratio AFR) shifted toward the rich side from the stoichiometric air-fuel ratio in at least a "post fuel cut period," which is a period between the "fuel cut end time" and a "time when the first cumulative value tGaSR becomes equal to or greater than the first predetermined value Rth."

By virtue of the configuration above, the oxygen storage amount of the downstream catalyst 55 can be decreased after the end of the fuel cut. Accordingly, even if nitrogen oxides flow into the downstream catalyst 55  after a certain period of time has elapsed from the fuel cut end time, the downstream catalyst 55 can remove the nitrogen oxides. Moreover, since the downstream catalyst 55 can be caused to reach the above-described "reduced state" after the end of the fuel cut, the particulate collection filter can be regenerated (filter regeneration control can be started).

Further, the air-fuel-ratio control means of the first control apparatus executes the sub feedback control with the weak rich air-fuel ratio AFR used as the downstream target air-fuel ratio even in the post fuel cut period. In other words, in the post fuel cut period, the air-fuel-ratio control means of the first control apparatus uses, as a post fuel cut target air-fuel ratio, an air-fuel ratio shifted toward the rich side from the stoichiometric air-fuel ratio, in order to control the averaged air-fuel ratio of the gas mixture to be supplied to the engine 10 to an air-fuel ratio (weak rich air-fuel ratio AFR) shifted toward the rich side from the stoichiometric air-fuel ratio.

In addition, the air-fuel-ratio control means is configured so as to execute the "post fuel cut feedback control" in such a manner that, when the output value Voxs output from the downstream air-fuel ratio sensor 67 is a value corresponding to a lean-side air-fuel ratio with respect to (or in relation to) the post fuel cut target air-fuel ratio, the air-fuel-ratio control means changes the air-fuel ratio of the gas mixture to be supplied to the engine 10 to a further rich-side air-fuel ratio (richer or smaller air-fuel ratio); and, when the output value Voxs output from the downstream air-fuel ratio sensor 67 is a value corresponding to a rich-side air-fuel ratio in relation to the post fuel cut target air-fuel ratio, the air-fuel-ratio control means changes the air-fuel ratio of the gas mixture to be supplied to the engine to a further lean-side air-fuel ratio (leaner or larger air-fuel ratio).

By virtue of the configuration above, in the post fuel cut period, the averaged air-fuel ratio of the gas mixture to be supplied to the engine 10 is accurately controlled to an "air-fuel ratio (post fuel cut target air-fuel ratio) shifted toward the rich side from the stoichiometric air-fuel ratio" on the basis of the output value Voxs of the downstream air-fuel ratio sensor 67. Accordingly, the filter regeneration control can be assuredly started when a predetermined period of time elapses after the fuel cut end time.

It should be noted that the first control apparatus may be configured such that, in the entirety or a portion of the post fuel cut period, the first control apparatus stops the sub feedback control, temporarily sets the upstream target air-fuel ratio abyfr of the main feedback control to an air-fuel ratio shifted toward the rich side from the stoichiometric air-fuel ratio stoich, and executes the main feedback control. Alternatively, the first control apparatus may be configured such that, in the entirety or a portion of the post fuel cut period, the first control apparatus executes the sub feedback control and the main feedback control, and temporarily sets the downstream target air-fuel ratio (additionally, the upstream target air-fuel ratio in some cases) to an air-fuel ratio shifted toward the rich side from the weak rich air-fuel ratio AFR (i.e, an air-fuel ratio which is richer or smaller than the weak rich air-fuel ratio AFR). That is, in the post fuel cut period, the downstream target air-fuel ratio may be set to the "air-fuel ratio AFR" which falls within the predetermined air-fuel ratio range (window W) and is shifted toward the rich side from the stoichiometric air-fuel ratio by a predetermined amount, as in the case of the first control apparatus, or to an "air-fuel ratio which falls outside the predetermined air-fuel ratio range (window W) and is shifted toward the rich side from the stoichiometric air-fuel ratio by a predetermined amount.

Further, in the first control apparatus, the air-fuel-ratio control means is configured such that, after a "filter regeneration control start point," which is the predetermined second accumulation start time after the filter regeneration control is started, the air-fuel-ratio control means obtains the "second cumulative value tGaSL" corresponding to a cumulative value of an "oxidation component excessive amount" obtained by subtracting an "amount of reduction components" discharged from the engine to the exhaust passage from an "amount of oxidation components" discharged from the engine to the exhaust passage, and ends the filter regeneration control when the obtained second cumulative value tGaSL becomes equal to or greater than the second predetermined value Lth (see steps 650 and 640 of FIG. 6, steps 1545, 1575, 1550, and 1555 of FIG. 15, etc.).

By virtue of the above-described configuration, when an amount of particulates corresponding to the second cumulative value tGaSL have been burned, the regeneration of the particulate collection filter 54 can be temporarily or tentatively stopped. Accordingly, through approriate setting of the second predetermined value Lth, which is to be compared with the second cumulative value tGaSL, it becomes possible to prevent nitrogen oxides from flowing into the downstream catalyst 55 in an amount exceeding the nitrogen oxide removal capacity of the downstream catalyst 55. Thus, it is possible to prevent a large amount of nitrogen oxides from being discharged into the atmosphere. Further, since the "amount of excessive oxidation components" flowing into the particulate collection filter 54 after the start of the filter regeneration control can be obtained as the "second cumulative value tGaSL," the filter regeneration control can be temporarily or tentatively stopped at an appropriate timing.

In addition, the first control apparatus includes main feedback control means (see FIG. 12) for executing the main feedback control in response to an instruction (main-feedback-control-condition satisfaction flag XmainFB), and sub feedback control means (see FIG. 13) for executing the sub feedback control in response to an instruction (sub-feedback-control-condition satisfaction flag XsubFB).

Thus, the first control apparatus can be expressed as including "instruction means" for supplying instructions to the main feedback control means and the sub feedback control means such that,

(1) until the downstream catalyst 55 is determined to have reached the "reduced state," the first control apparatus executes the "ordinary feedback control" by setting the upstream target air-fuel ratio abyfr to the stoichiometric air-fuel ratio stoich, and executing the main and sub feedback controls; and
(2) after a point in time when the downstream catalyst 55 is determined to have reached the "reduced state," the first control apparatus executes the "filter regeneration control" for supplying oxygen to the particulate collection filter 54 to burn particulates collected by the particulate collection filter 54, by,
setting the upstream target air-fuel ratio abyfr to the lean air-fuel ratio aflean (an air-fuel ratio shifted toward the lean side from the stoichiometric air-fuel ratio stoich, an air-fuel ratio leaner or larger than the stoichiometric air-fuel ratio), executing the main feedback control, and
stopping the sub feedback control

(see steps 1570, 1575, 1550, 1555, and 1585 of FIG. 15, FIG. 17 (in particular step 1730), etc.).

Second Embodiment:

Next, a control apparatus for an internal combustion engine according to a second embodiment of the present invention (hereinafter also referred to as the "second control apparatus") will be described. The second control apparatus differs from the first control apparatus only in that the first threshold (first predetermined value) Rth, which serves as the filter-regeneration-control start threshold, and the second threshold (second predetermined value) Lth, which serves as the filter-regeneration-control completion threshold, are changed in accordance with the maximum oxygen storage amount Cmax1 of the upstream catalyst 53. Therefore, these differences will be mainly described below.

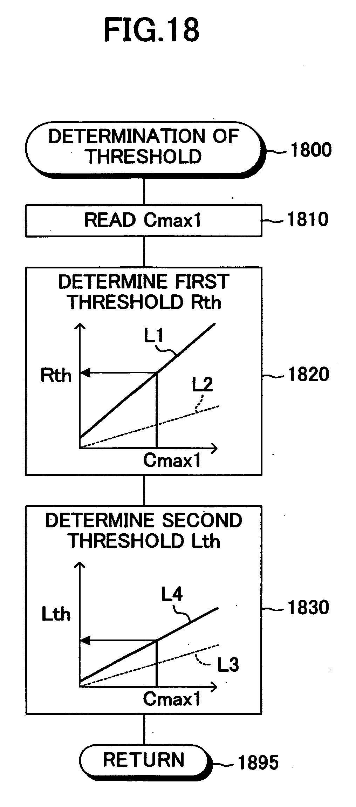

Every time a predetermined period of time elapses, the CPU 71 of the second control apparatus executes not only the routines executed by the CPU 71 of the first control apparatus, but also a threshold determination routine shown in FIG. 18 in the form of a flowchart. Accordingly, at predetermined timing, the CPU 71 starts the processing from step 1800, successively performs the processings of steps 1810 to 1830 described below, and then proceeds to step 1895 so as to end the current execution of the present routine.

Step 1810: the CPU 71 reads out (or fetches) the maximum oxygen storage amount Cmax1 of the upstream catalyst 53. The maximum oxygen storage amount Cmax1 is updated by an unillustrated a "maximum-oxygen-storage-amount obtaining routine" executed separately at suitable interval. In the maximum-oxygen-storage-amount obtaining routine, the CPU 71 obtains the maximum oxygen storage amount Cmax1 by executing, for example, a well known control called "active control" (see Japanese Patent Application Laid-Open (*kokai*) Nos. JP 2005-194981 A, JP 2006-057461 A, JP 2005-207286 A, etc.)

The active control will be described briefly. When predetermined conditions (for example, the engine is in a steady operating state, and a predetermined period of time has elapsed from the point in time when the maximum oxygen storage amount Cmax1 was obtained last time) are satisfied, the CPU 71 sets the air-fuel ratio of the gas mixture to be supplied to the engine to an air-fuel ratio shifted toward the rich side from the stoichiometric air-fuel ratio (an air-fuel ratio richer or smaller than the stoichiometric air-fuel ratio), and then determines whether or not the output value Vosx of the downstream air-fuel ratio sensor 67 has become a value corresponding to the air-fuel ratio shifted toward the rich side from the stoichiometric air-fuel ratio. After that, when the output value Vosx of the downstream air-fuel ratio sensor 67 has changed to a value indicating the air-fuel ratio shifted toward the rich side from the stoichiometric air-fuel ratio (an air-fuel ratio leaner or larger than the stoichiometric air-fuel ratio), the CPU 71 sets the air-fuel ratio of the gas mixture to be supplied to the engine to an air-fuel ratio shifted toward the lean side from the stoichiometric air-fuel ratio, and then determines, through monitoring, whether or not the output value Vosx of the downstream air-fuel ratio sensor 67 has changed to a value corresponding to the air-fuel ratio shifted toward the lean side from the stoichiometric air-fuel ratio.

At a point in time (time ta) when the output value Vosx of the downstream air-fuel ratio sensor 67 is detected to have changed to the value corresponding to the air-fuel ratio shifted toward the lean side from the stoichiometric air-fuel ratio, the CPU 71 again sets the air-fuel ratio of the gas mixture to be supplied to the engine 10 to the rich-side air-fuel ratio. After that, up to a point in time (time tb) when the output value Vosx of the downstream air-fuel ratio sensor 67 again changes to the value corresponding to the air-fuel ratio shifted toward the rich side from the stoichiometric air-fuel ratio, the CPU 71 calculates a change amount ΔO2 of the oxygen storage amount in accordance with Equation (14) descried below, every time a predetermined period of time (calculation period tsample) elapses; and accumulates the change amount ΔO2 in accordance with Equation (15) descried below, to thereby calculate the maximum oxygen storage amount Cmax1 of the upstream catalyst 53.

$$\Delta O2 = 0.23 \cdot mfr \cdot (stoich - abyfrr) \qquad (14)$$

$$Cmax1 = \Sigma \Delta O2 \ (period \ t = ta \ to \ tb) \qquad (15)$$

In Equation (14), the value "0.23" is the weight ratio of oxygen contained in the atmosphere. The mfr represents the total amount of the fuel injection amount Fi within the predetermined period of time (calculation period tsample). The stoich represents the stoichiometric air-fuel ratio (e.g., 14.7). The abyfrr represents an air-fuel ratio measured by the upstream air-fuel ratio sensor 66 in the predetermined period of time "tsample." It should be noted that the abyfrr may be the averaged air-fuel ratio measured by the upstream air-fuel ratio sensor 66 during the predetermined period of time tsample.

Step 1820: the CPU 71 determines the first threshold Rth on the basis of the maximum oxygen storage amount Cmax1 of the upstream catalyst 53 and a first threshold determination map (a sold line L1) shown in the block of step 1820. According to this first threshold determination map, the first threshold Rth is determined to increase as the maximum oxygen storage amount Cmax1 increases. It should be noted that a broken line L2 shows the first cumulative value tGaSR whose cumulative calculation is started from a state in which the oxygen storage amount OSA1 of the upstream catalyst 53 is the maximum oxygen storage amount Cmax1, and which corresponds to the first cumulative value tGaSR at the time when the oxygen storage amount OSA1 reaches "0."

Step 1830: the CPU 71 determines the second threshold Lth on the basis of the maximum oxygen storage amount Cmax1 of the upstream catalyst 53 and a second threshold determination map (a sold line L4) shown in the block of step 1830. According to this second threshold determination map, the second threshold Lth is determined to increase as the maximum oxygen storage amount Cmax1 increases. Further, the second threshold Lth is determined to be smaller than the first threshold Rth for an arbitrary maximum oxygen storage amount Cmax1. It should be noted that a broken line L3 shows the second cumulative value tGaSL whose cumulative calculation is started from a state in which the oxygen storage amount OSA1 of the upstream catalyst 53 is "0," and which corresponds to the second cumulative value tGaSL at the time when the oxygen storage amount OSA1 reaches the maximum oxygen storage amount Cmax1.

As described above, the second control apparatus sets the first threshold Rth such that the greater the maximum oxygen storage amount Cmax1 of the upstream catalyst 53, the greater the first threshold Rth (the first threshold Rth becomes larger, as the maximum oxygen storage amount Cmax1 of the upstream catalyst 53 becomes larger). Further, when the first cumulative value tGaSR is determined to have become equal to or greater than the first threshold Rth, the second control apparatus determines that the downstream catalyst 55 has reached the "reduced state," stops the air-fuel ratio weak rich control (near stoichiometric air-fuel ratio control), and starts the air-fuel ratio lean control (filer regeneration control) (see steps 630 and 660 of FIG. 6 and steps 1565, 1570, 1550, and 1585 of FIG. 15), to thereby regenerate the particulate collection filter 54.

Further, the second control apparatus sets the second threshold Lth such that the greater the maximum oxygen storage amount Cmax1 of the upstream catalyst 53, the greater the second threshold Lth (the second threshold Lth becomes larger, as the maximum oxygen storage amount Cmax1 of the upstream catalyst 53 becomes larger). Further, when the second cumulative value tGaSL is determined to have become equal to or greater than the second threshold Lth, the second control apparatus ends the air-fuel ratio lean control (filer regeneration control), and resumes the air-fuel ratio weak rich control (near stoichiometric air-fuel ratio control) (see steps 650 and 640 of FIG. 6 and steps 1545, 1575, 1550, and 1555 of FIG. 15).

When the fuel cut operation is executed, in general, the oxygen storage amount OSA1 of the upstream catalyst 53 reaches the maximum oxygen storage amount Cmax1 of the upstream catalyst 53, and the oxygen storage amount OSA2 of the downstream catalyst 55 reaches the maximum oxygen storage amount Cmax2 of the downstream catalyst 55. Therefore, excessive reduction components discharged from the engine 10 after the fuel cut end time are first oxidized (consumed) by the upstream catalyst 53. The amount of excessive reduction components consumed by the upstream catalyst 53 depends on the maximum oxygen storage amount Cmax1 of the upstream catalyst 53. Thereafter, when the oxygen storage amount OSA1 of the upstream catalyst 53 becomes substantially "0", the reduction components pass through the particulate collection filter 54 and flow into the downstream catalyst 55. As a result, the state of the downstream catalyst 55 starts to change toward the above-described "reduced state." As is clear from the above description, the amount of excessive reduction components which flow into the downstream catalyst 55 (accordingly, the oxygen storage amount OSA2 of the downstream catalyst 55; i.e., the amount of reduction components substantially held by the downstream catalyst 55), of the amount of excessive reduction components indicated by the first cumulative value tGaSR whose cumulative calculation was started at the fuel cut end time (the point in time at which air-fuel ratio weak rich control was started), changes depending on the maximum oxygen storage amount Cmax1 of the upstream catalyst 53.

Therefore, in the case where the downstream catalyst 55 is determined to have reached the above-described "reduced condition" when the first cumulative value tGaSR whose cumulative calculation was started at the fuel cut end time has become equal to or greater than the first predetermined value (first threshold) Rth as in the second embodiment, the determination as to whether the downstream catalyst 55 has reached the above-described "reduced condition" can be made more accurately by determining the first predetermined value (first threshold) Rth in such a manner that the greater the first predetermined value Rth becomes greater, as the maximum oxygen storage amount Cmax1 of the upstream catalyst 53 becomes greater.

Further, when the filter regeneration control (air-fuel ratio lean control) is started, the downstream catalyst 55 is in the above-described "reduced state." At that time, the oxygen storage amount OSA1 of the upstream catalyst 53 is substantially "0." Accordingly, excessive oxygen (oxidation components) discharged from the engine 10 after start of the air-fuel ratio lean control (filter regeneration control) is first consumed by the upstream catalyst 53, and the oxygen storage amount OSA1 of the upstream catalyst 53 gradually increases and reaches the maximum oxygen storage amount Cmax1. Since oxygen hardly flows to the downstream side of the upstream catalyst 53 until this point in time, the regeneration of the particulate collection filter 54 is not performed.

In other words, the period of time between the start of the filter regeneration control and the "point in time when oxygen is started to be supplied" to the particulate collection filter 54 is a period of time required for the oxygen storage amount OSA1 of the upstream catalyst 53 to reach its maximum oxygen storage amount Cmax1 after the start of the filter regeneration control. That is, the "point in time when oxygen is started to be supplied" to the particulate collection filter after start of the filter regeneration control changes depending on the maximum oxygen storage amount Cmax1 of the upstream catalyst 53. As a result, the "amount of reduction components consumed in the downstream catalyst 55" during the filter regeneration control depends on the maximum oxygen storage amount Cmax1 of the upstream catalyst 53 and the amount of particulates burned in the particulate collection filter 54.

Therefore, the second control apparatus is configured so as to end the filter regeneration control when the "second cumulative value tGaSL" corresponding to the cumulative value of the "oxidation component excessive amount", whose cumulative calculation is started at the start of the filter regeneration control, becomes equal to or greater than the "second predetermined value Lth which increases with the maximum oxygen storage amount Cmax1 of the upstream catalyst 53." Accordingly, the second control apparatus can stops the filter regeneration control at a point in time before the oxygen storage amount OSA2 of the downstream catalyst 55 reaches the maximum oxygen storage amount Cmax2 of the downstream catalyst 55 (at a point in time when the oxygen storage amount OSA2 becomes smaller than the maximum oxygen storage amount Cmax2 by a predetermined amount). As a result, during the filter regeneration control, it becomes possible to prevent nitrogen oxides from flowing into the downstream catalyst 55 in an amount exceeding the nitrogen oxide removal capacity of the downstream catalyst 55. Thus, it can be avoided that a large amount of nitrogen oxides is discharged into the atmosphere.

Further, the second control apparatus can burn particulates collected by the particulate collection filter 54 such that an intended amount of collected particulates are burned.

It should be noted that in the second apparatus, the first predetermined value Rth may be a value obtained by adding a predetermined value Cs1 to the product of a predetermined constant k1 and the maximum oxygen storage amount Cmax1 of the upstream catalyst 53 (Rth = k1·Cmax1 + Cs1). Similarly, the second predetermined value Lth may be a value obtained by adding a predetermined value Cs2 to the product of a predetermined constant k2 and the maximum oxygen storage amount Cmax1 of the upstream catalyst 53 (Lth = k2·Cmax1 + Cs2).

Third Embodiment:

Next, a control apparatus for an internal combustion engine according to a third embodiment of the present invention (hereinafter also referred to as the "third control apparatus") will be described. The third control apparatus differs from the first control apparatus in that the CPU 71 determines whether or not burning of particulates is completed, on the basis of the output value Vosx of the downstream air-fuel ratio sensor 67 after start of the filter regeneration control (air-fuel ratio lean control), and, when the burning of particulates is not completed, the CPU 71 continues the filter regeneration control even when the second cumulative value tGaSL has reached the second threshold Lth.

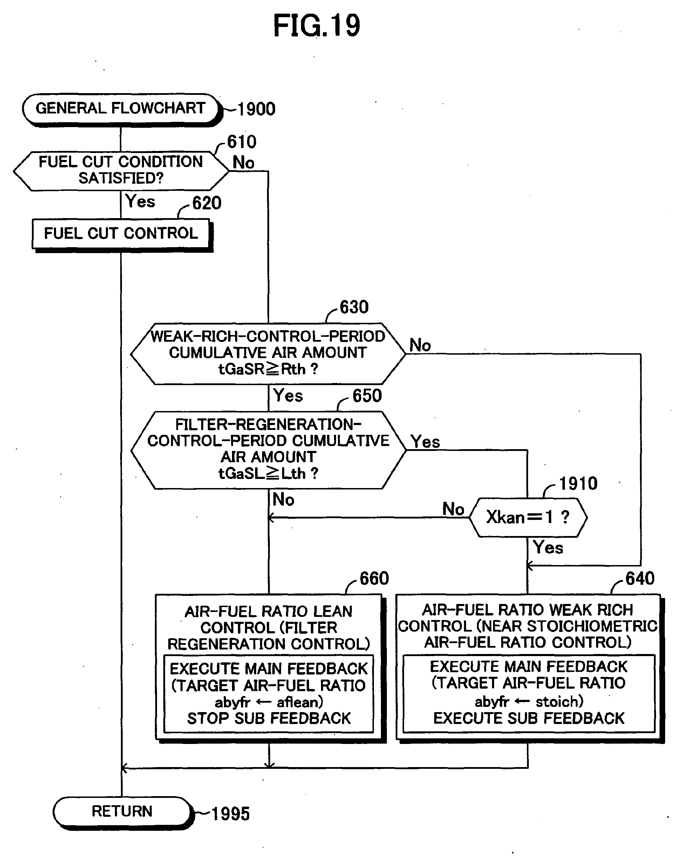

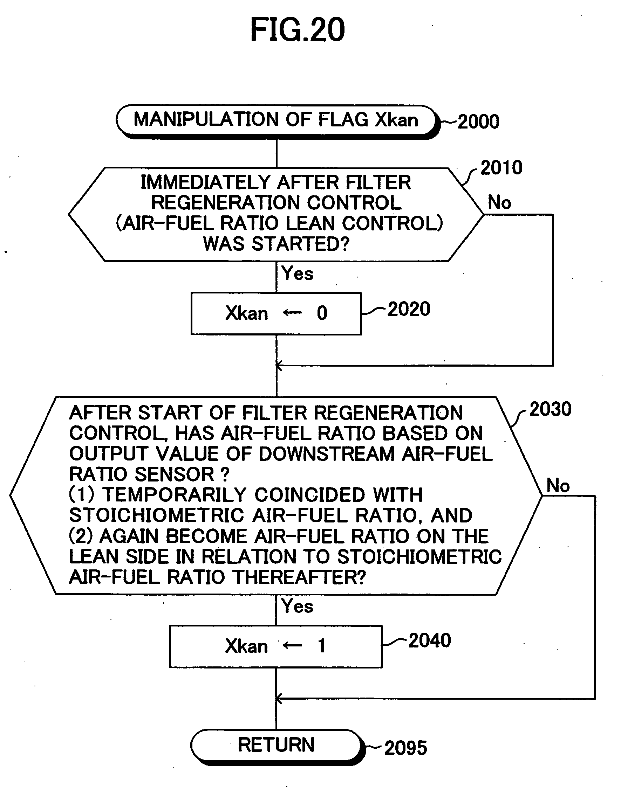

More specifically, the third control apparatus differs from the first control apparatus in that the CPU 71 of the third control apparatus executes routines shown FIGS. 19 and 20 in the form of flowcharts, in place of the routine of FIG. 6 executed by the CPU 71 of the first control apparatus.

This difference will be mainly described below.

The routine shown in FIG. 19 is identical with the routine shown in FIG. 6 except that step 1910 is added. That is, when the weak-rich-control-period cumulative air amount (first cumulative value) tGaSR has become equal to or greater than the filter-regeneration-control start threshold (first threshold; first predetermined value) Rth, the CPU 71 makes a "Yes" determination at step 630, and proceeds to step 650 so as to determine whether or not the filter-regeneration-control-period cumulative air amount (second cumulative value) tGaSL is equal to or greater than the filter-regeneration-control completion threshold (second threshold; second predetermined value) Lth. At that time, if the filter-regeneration-control-period cumulative air amount tGaSL is smaller than the filter-regeneration-control completion threshold Lth, the CPU 71 makes a "No" determination in step 650, and proceeds to step 660 in order to execute the filter regeneration control.

If this state continues for a predetermined period of time, the filter-regeneration-control-period cumulative air amount tGaSL becomes equal to or greater than the filter-regeneration-control completion threshold Lth. At that time, the CPU 71 makes a "Yes" determination at step 650, and proceeds to step 1910 so as to determine whether or not the value of a particulate-burning completion flag Xkan is "1."

The value of this particulate-burning completion flag Xkan is changed by a "routine shown in FIG. 20 in the form of a flowchart" which is executed by the CPU 71 every time a predetermined period of time elapses. That is, the CPU 71 starts the processing from step 2000 of FIG. 20 at predetermined timing, and proceeds to step 2010 so as to determine whether or not the present point in time is immediately after start of the filter regeneration control (air-fuel ratio lean control). If the present point in time is immediately after start of the filter regeneration control, the CPU 71 makes a "Yes" determination at step 2010, proceeds to step 2020 so as to set the value of the particulate-burning completion flag Xkan to "0," and then proceeds to step 2030. In contrast, if the present point in time is not immediately after start of the filter regeneration control, the CPU 71 makes a "No" determination at step 2010, and proceeds directly to step 2030.

Next, in step 2030, the CPU 71 determines whether or not, after the start of the filter regeneration control, the output value Voxs output from the downstream air-fuel ratio sensor 67 (1) has temporarily coincided with a value corresponding to the stoichiometric air-fuel ratio, and (2) again become a value corresponding to an air-fuel ratio on the lean side in relation to (an air-fuel ratio larger than) the stoichiometric air-fuel ratio thereafter.

In other words, the CPU 71 determines whether or not an air-fuel ratio afdlown (= f(Voxs)) indicated by the output value Voxs output from the downstream air-fuel ratio sensor 67 after the start of the filter regeneration control has changed to the stoichiometric air-fuel ratio and then to an air-fuel ratio on the lean side in relation to the stoichiometric air-fuel ratio. In the following description, the determination condition of this step 2030 will be simply referred to as the "particulate-burning completion determination condition."

It should be noted that the particulate-burning completion determination condition may be set to be satisfied when the air-fuel ratio afdown (= f(Voxs)) indicated by the output value Voxs output from the downstream air-fuel ratio sensor 67 after the start of the filter regeneration control has changed to an air-fuel ratio on the lean side in relation to the stoichiometric air-fuel ratio, then to the stoichiometric air-fuel ratio, and then to an air-fuel ratio on the lean side in relation to the stoichiometric air-fuel ratio again.

If the "particulate-burning completion determination condition" is satisfied, the CPU 71 makes a "Yes" determination at step 2030, proceeds to step 2040 so as to set the value of this particulate-burning completion flag Xkan to "1," and then proceeds to step 2095 to end the current execution of the present routine. In contrast, if the "particulate-burning completion determination condition" is not satisfied, the CPU 71 makes a "No" determination at step 2030, and proceeds directly to step 2095 so as to end the current execution of the present routine.

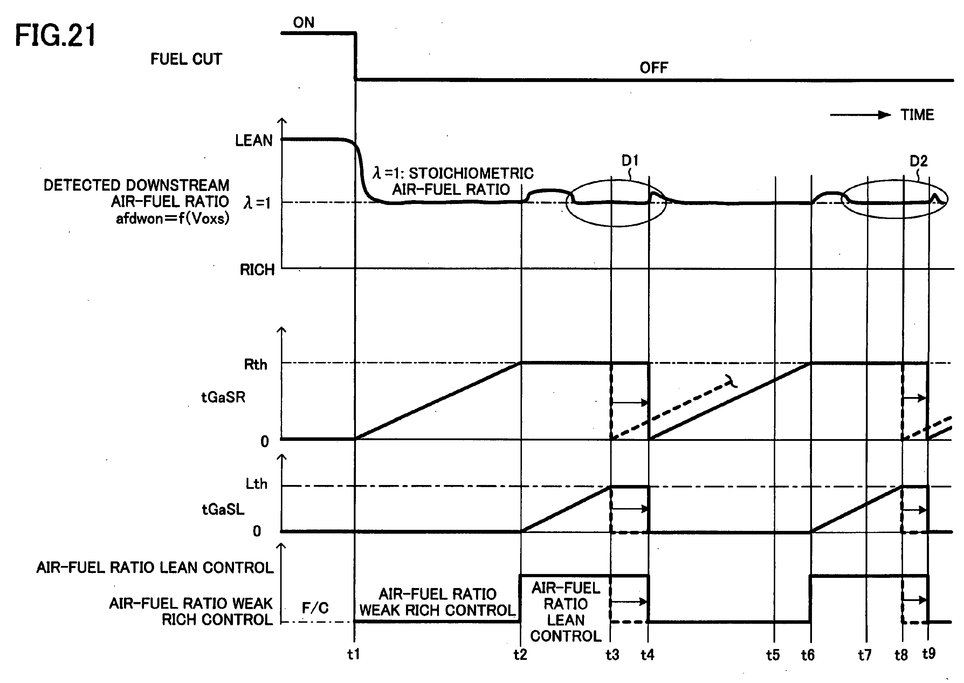

Incidentally, as shown in a period of time t1 to time t4 of FIG. 21, which is a time chart (see, in particular, a portion in an ellipse D1 of FIG. 21), when the filter regeneration control (air-fuel ratio lean control) is started at time t2, oxygen is stored in the upstream catalyst 53, and then started to be supplied to the particulate collection filter 54. However, particulates do not start burning immediately. Therefore, oxygen temporarily flows out of the particulate collection filter 54 without being consumed by the particulate collection filter 54. As a result, immediately after the point in time (time t2) at which the filter regeneration control is started, the output value Voxs output from the downstream air-fuel ratio sensor 67 becomes a value corresponding to an air-fuel ratio on the lean side in relation to (i.e., leaner or larger than) the stoichiometric air-fuel ratio.

When a very short period of time has elapsed, burning of particulates starts in the particulate collection filter 54. Accordingly, oxygen having flowed into the particulate collection filter 54 is consumed within the particulate collection filter 54, and does not flow out to the downstream side of the particulate collection filter 54. Accordingly, the output value Voxs output from the downstream air-fuel ratio sensor 67 coincides with a value corresponding to the stoichiometric air-fuel ratio.

Further, when all the particulates collected by the particulate collection filter 54 have burned after a certain period of time, oxygen having flowed into the particulate collection filter 54 flows out to the downstream side of the particulate collection filter 54, without being consumed within the particulate collection filter 54. Accordingly, the output value Voxs output from the downstream air-fuel ratio sensor 67 again becomes a value corresponding to an air-fuel ratio on the lean side in relation to the stoichiometric air-fuel ratio.

That is, in a period before the "particulate-burning completion determination condition" is satisfied, unburned particulates remain in the particulate collection filter 54, and oxygen does not flow to the downstream side of the particulate collection filter 54, so that the oxygen does not flow into the downstream catalyst 55. Therefore, the oxygen storage amount OSA2 of the downstream catalyst 55 substantially does not increase, and the downstream catalyst 55 substantially maintains the above-described "reduced state." In other words, as shown in a period of time t3 to time t4 of FIG. 21, even after the filter-regeneration-control-period cumulative air amount tGaSL has become equal to or greater than the filter-regeneration-control completion threshold Lth (time t3), nitrogen oxides can be removed by the downstream catalyst 55 if the "particulate-burning completion determination condition" is not satisfied, and therefore, it is possible to continuously supply oxygen to the particulate collection filter 54 to thereby burn particulates, without causing a large amount of nitrogen oxides to be discharged into the atmosphere.

The third control apparatus is based on such a finding. That is, when the filter-regeneration-control-period cumulative air amount tGaSL has become equal to or greater than the filter-regeneration-control completion threshold Lth, the CPU 71 makes a "Yes" determination at step 650 of FIG. 19, and proceeds to step 1910 so as to determine whether or not the value of the particulate-burning completion flag Xkan is "1." In the case where the "particulate-burning completion determination condition" has not yet been satisfied, and thus, the value of the particulate-burning completion flag Xkan is kept "0", the CPU 71 makes a "No" determination at step 1910, and proceeds to step 660 so as to continue the air-fuel ratio lean control (filter regeneration control).

In contrast, in the case where the "particulate-burning completion determination condition" has been satisfied, and thus, the value of the particulate-burning completion flag Xkan is "1", the CPU 71 makes a "Yes" determination at step 1910, and proceeds to step 640 so as to start the air-fuel ratio weak rich control (near stoichiometric air-fuel ratio control).

The above is the general operation of the third control apparatus.

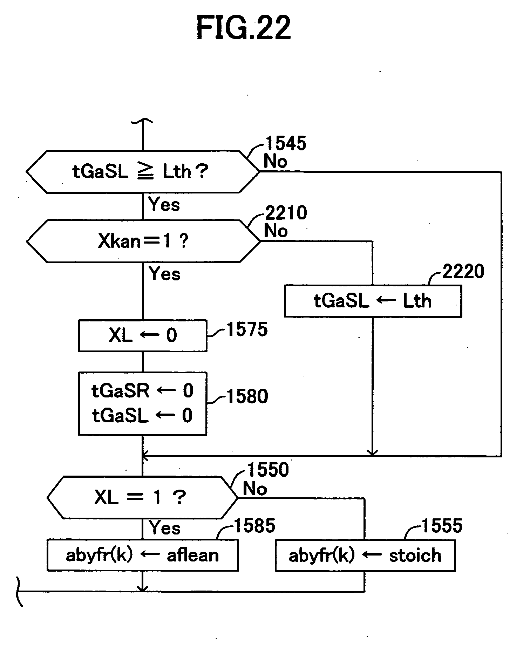

More specifically, the CPU 71 of the third control apparatus executes the routines shown in FIGS. 11 to 14, a routine obtained by replacing a portion of the routine of FIG. 15 by a routine shown by FIG. 22, and the routines shown in FIGS. 16, 17, and 20. Next, only a portion different from the routines executed by the CPU 71 of the first control apparatus will be described.

When the CPU 71 makes a "Yes" determination at step 1545 of the routine of FIG. 15, the CPU 71 proceeds to step 2210 shown in FIG. 22 so as to determine whether or not the value of the particulate-burning completion flag Xkan is "1." If the value of the particulate-burning completion flag Xkan is "0," the CPU 71 makes a "No" determination at step 2210, and proceeds to step 2220 so as to store the filter-regeneration-control completion threshold Lth in a storage area for storing the filter-regeneration-control-period cumulative air amount tGaSL. The CPU 71 then makes a "Yes" determination at step 1550, and proceeds to step 1585 so as to store the above-described lean air-fuel ratio aflean to the storage area for storing the upstream target air-fuel ratio abyfr(k). After that, the CPU 71 proceeds to step 1595 to end the current execution of the present routine. As a result, the upstream target air-fuel ratio abyfr(k) is maintained at the lean air-fuel ratio aflean, whereby the air-fuel ratio lean control (filter regeneration control) is continued.

On the other hand, if the value of the particulate-burning completion flag Xkan is "1" when the CPU 71 proceeds to step 2210, the CPU 71 makes a "Yes" determination at step 2210, and proceeds to steps 1575, 1580, 1550, and 1555, to thereby stop the air-fuel ratio lean control (filter regeneration control), and start the air-fuel ratio weak rich control (near stoichiometric air-fuel ratio control).

As described above, the third control apparatus (air-fuel-ratio control means of the third control) is configured so as to continue the filter regeneration control up to a point in time (lean inversion time; time t4 of FIG. 21) at which the output value Voxs output from the downstream air-fuel ratio sensor 67 increases from a value (0.5 V) corresponding to the stoichiometric air-fuel ratio to a value corresponding to a lean-side air-fuel ratio in relation to the stoichiometric air-fuel ratio after the start of the filter regeneration control.

Accordingly, it is possible to prevent the filter regeneration control from being stopped even when particulates to be burned remain in the particulate collection filter and the downstream catalyst is still in a state in which it can remove nitrogen oxides. Moreover, since the filter regeneration control is stopped at the lean inversion time, it is possible to prevent nitrogen oxides from flowing into the downstream catalyst in an excessive amount or an amount exceeding the reduction capacity of the downstream catalyst due to unnecessary continuation of the filter regeneration control.

Fourth Embodiment:

Next, a control apparatus for an internal combustion engine according to a fourth embodiment of the present invention (hereinafter also referred to as the "fourth control apparatus") will be described. The fourth control apparatus differs from the first control apparatus with respect to time at which the cumulative calculation of the weak-rich-control-period cumulative air amount (first cumulative value) tGaSR is started, and time at which the cumulative calculation of the filter-regeneration-control-period cumulative air amount (second cumulative value) tGaSL is started. In the following description, the weak-rich-control-period cumulative air amount tGaSR of the fourth control apparatus will be referred to as a "post-inversion-weak-rich-control-period cumulative air amount tGaSRH," and the filter-regeneration-control-period cumulative air amount tGaSL of the fourth control apparatus will be referred to as a "post-inversion-filter-regeneration-control-period cumulative air amount tGaSLH.

The fourth control apparatus determines that the downstream catalyst 55 has reached the above-described "reduced state" when the post-inversion-weak-rich-control-period cumulative air amount tGaSRH becomes equal or greater than the filter-regeneration-control start threshold RHth corresponding to the first threshold (first predetermined value), and starts the air-fuel ratio weak lean control (filter regeneration control). The post-inversion-weak-rich-control-period cumulative air amount tGaSRH is maintained at 0 up to "a point in time (first timing)" when the output value Voxs output from the downstream air-fuel ratio sensor 67 first becomes a value corresponding to a rich-side air-fuel ratio in relation to the stoichiometric air-fuel ratio after the fuel cut end time (after start of the air-fuel ratio weak rich control), and thereafter is cumulatively increased after "the point in time (the first timing)."

Moreover, the fourth control apparatus ends the filter regeneration control and resumes the weak rich control when the post-inversion-filter-regeneration-control-period cumulative air amount tGaSLH becomes equal to or greater than the filter-regeneration-control completion threshold LHth corresponding to the second threshold (second predetermined value). The post-inversion-filter-regeneration-control-period cumulative air amount tGaSLH is maintained at 0 up to "a point in time (second timing)" when the output value Voxs output from the downstream air-fuel ratio sensor 67 firstly becomes a value corresponding to a lean-side air-fuel ratio in relation to the stoichiometric air-fuel ratio (or assumes a value corresponding to the stoichiometric air-fuel ratio, and then firstly assumes a value corresponding to a lean-side air-fuel ratio in relation to the stoichiometric air-fuel ratio) after start of the filter regeneration control (air-fuel ratio lean control), and is then cumulatively increased after "the point in time (the second timing)".

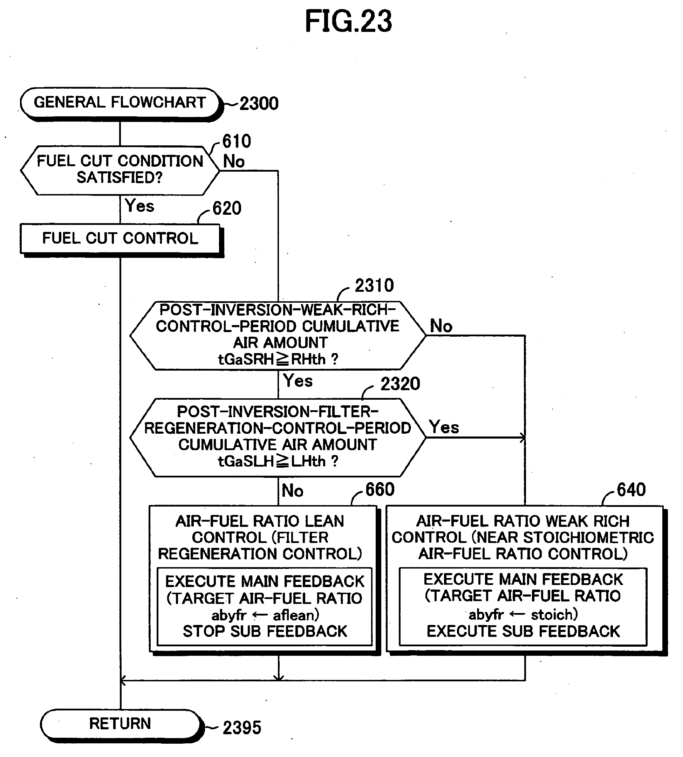

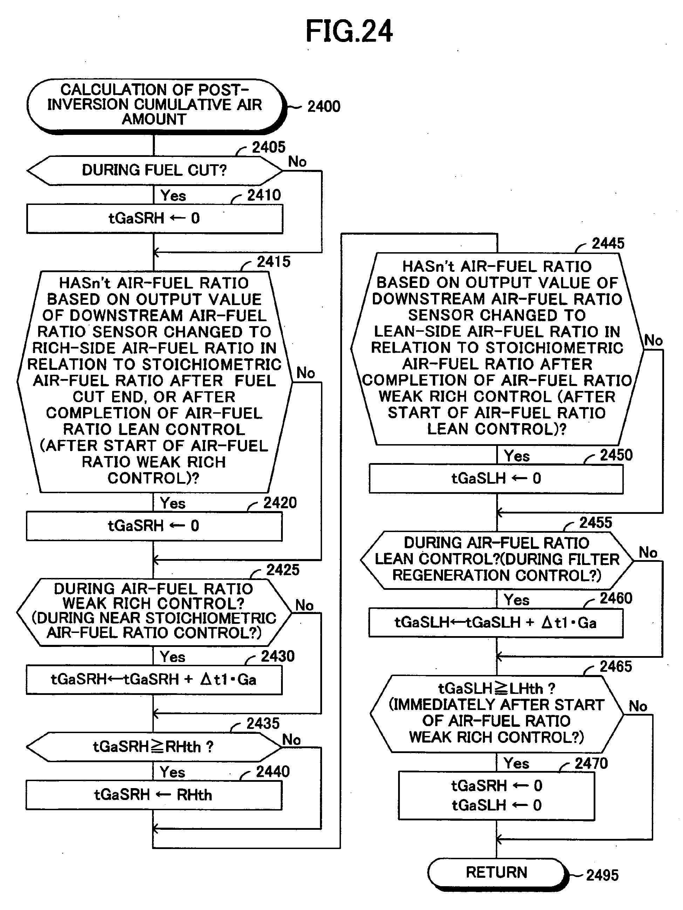

More specifically, the CPU 71 of the fourth control apparatus differs from the CPU 71 of the first control apparatus in that the CPU 71 of the fourth control apparatus executes routines shown in FIGS. 23 and 24 in the form of flowcharts, instead of the routine of FIG. 6 executed by the CPU 71 of the first control apparatus. Accordingly, this difference will be mainly described below.

The routine shown in FIG. 23 differs from the routine shown in FIG. 6 in that step 630 of FIG. 6 is replaced by step 2310, and step 650 of FIG. 6 is replaced by step 2320.

That is, in step 2310, the CPU 71 determines whether or not the post-inversion-weak-rich-control-period cumulative air amount tGaSRH is equal or greater than the filter-regeneration-control start threshold (first predetermined value) RHth. When the fuel cut condition is not satisfied (see step 610) and the post-inversion-weak-rich-control-period cumulative air amount tGaSRH is less than the filter-regeneration-control start threshold RHth, the CPU 71 makes a "No" determination at step 2310, and proceeds to step 640 so as to execute the air-fuel ratio weak rich control (near stoichiometric air-fuel ratio control).

Meanwhile, when the fuel cut condition is not satisfied (see step 610) and the post-inversion-weak-rich-control-period cumulative air amount tGaSRH is equal to or greater than the filter-regeneration-control start threshold RHth, the CPU 71 makes a "Yes" determination at step 2310, and proceeds to step 2320 so as to determine whether or not the post-inversion-filter-regeneration-control-period cumulative air amount tGaSLH becomes equal to or greater than the filter-regeneration-control completion threshold LHth. When the post-inversion-filter-regeneration-control-period cumulative air amount tGaSLH is less than the filter-regeneration-control completion threshold LHth, the CPU 71 makes a "No" determination at step 2320, and proceeds o step 660 so as to execute the air-fuel ratio lean control (filter regeneration control).

In contrast, if the post-inversion-filter-regeneration-control-period cumulative air amount tGaSLH is equal to or greater than the filter-regeneration-control completion threshold LHth when the CPU 71 proceeds to sep 2320, the CPU 71 makes a "Yes" determination at step 2320, and proceeds to step 640 so as to execute the air-fuel ratio weak rich control (near stoichiometric air-fuel ratio control).

Further, the CPU 71 calculates the post-inversion-weak-rich-control-period cumulative air amount tGaSRH and the post-inversion-filter-regeneration-control-period cumulative air amount tGaSLH by executing a routine shown in FIG. 24 in the form of a flowchart, every time a predetermined period time elapses.

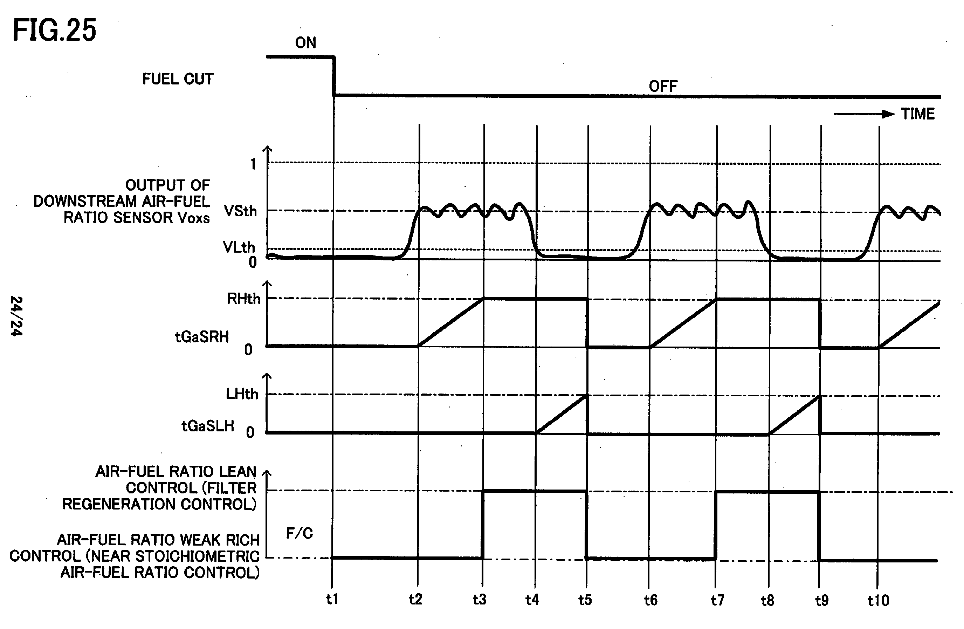

More specifically, the CPU 71 starts the post-inversion cumulative-air-amount calculation routine from step 2400 of FIG. 24 at predetermined timing, and proceeds to step 2405 so as to determine whether or not the present point in time is in a period of fuel cut (in a period in which the fuel cut control condition is satisfied). If the present point in time is in a period of fuel cut, the CPU 71 makes a "Yes" determination at step 2405, and proceeds to step 2410 so as to set the value of the post-inversion-weak-rich-control-period cumulative air amount tGaSRH to "0" (see a period before time t1 of FIG. 25, which is a time chart). Thereafter, the CPU 71 proceeds to step 2415. In contrast, if the present point in time is not in a period of fuel cut, the CPU 71 makes a "No" determination at step 2405, and proceeds directly to step 2415.

It should be noted that both the post-inversion-weak-rich-control-period cumulative air amount tGaSRH and the post-inversion-filter-regeneration-control-period cumulative air amount tGaSLH have been set to "0" by the above-described unillustrated initialization routine. Accordingly, when the fuel cut control is executed for the first time at least after startup of the engine 10 and then the fuel cut end time comes, the CPU 71 makes a "No" determination at each of steps 610 and 2310 of FIG. 23 so as to start the air-fuel ratio weak rich control at step 640.

At step 2415 of FIG. 24, the CPU 71 determines whether or not the air-fuel ratio (afdown = f(Voxs)) based on the output value Voxs of the downstream air-fuel ratio sensor 67 has not yet changed to a rich-side air-fuel ratio with respect to (or in relation to) the stoichiometric air-fuel ratio "after start of the air-fuel ratio weak rich control (i.e., after the fuel cut end or after completion of the air-fuel ratio lean control)." That is, the CPU 71 determines whether or not the output value Voxs has not yet reached a value greater than (a value equal to or greater than) a rich-side threshold VRth (in the present example, VRth = 0.5 V) equal to or greater than a value VSth corresponding to the stoichiometric air-fuel ratio. If the air-fuel ratio afdown based on the output value Voxs of the downstream air-fuel ratio sensor 67 has not yet changed to the rich-side air-fuel ratio in relation to the stoichiometric air-fuel ratio after start of the air-fuel ratio weak rich control, the CPU 71 makes a "Yes" determination at step 2415, and proceeds to step 2420 so as to set the value of the post-inversion-weak-rich-control-period cumulative air amount tGaSRH to "0." As a result, the value of the post-inversion-weak-rich-control-period cumulative air amount tGaSRH is maintained at "0" until the output value Voxs of the downstream air-fuel ratio sensor 67 firstly (i.e., for the first time) changes to a value corresponding to a rich-side air-fuel ratio in relation to the stoichiometric air-fuel ratio after start of the air-fuel ratio weak rich control. After step 2420, the CPU 71 proceeds to step 2425.

In contrast, if the air-fuel ratio afdown based on the output value Voxs of the downstream air-fuel ratio sensor 67 has changed to the rich-side air-fuel ratio in relation to the stoichiometric air-fuel ratio after start of the air-fuel ratio weak rich control (i.e., after the fuel cut end or after completion of the air-fuel ratio lean control), the CPU 71 makes a "No" determination at step 2415, and proceeds directly to step 2425.

At step 2425, the CPU 71 determines whether or not the present point in time is in a period of the air-fuel ratio weak rich control. If the present point in time is in a period of the air-fuel ratio weak rich control, the CPU 71 makes a "Yes" determination at step 2425, and proceeds to step 2430 so as to increase the post-inversion-weak-rich-control-period cumulative air amount tGaSRH by an amount (Ga·Δt1) which is the product of the predetermined period of time Δt1 and the intake air flow rate Ga detected by the air flow meter 61 at the present point in time. Thereafter, the CPU 71 proceeds to step 2435. In contrast, if the present point in time is not in a period of the air-fuel ratio weak rich control, the CPU 71 makes a "No" determination at step 2425, and proceeds directly to step 2435.

The above-mentioned operation of the CPU 71 will be further described with reference to FIG. 25, which is a time chart. Here, it is assumed that the fuel cut control condition was satisfied before time t1 and the fuel cut control has been executed. Therefore, before time t1, the value of the post-inversion-weak-rich-control-period cumulative air amount tGaSRH was set to "0" by the processing of step 2410, and the value of the post-inversion-filter-regeneration-control-period cumulative air amount tGaSLH was set to "0" by the initialization routine.

Further, it is assumed that the fuel cut control ends at time t1. At that time, the oxygen storage amount OSA1 of the upstream catalyst 53 is the maximum oxygen storage amount Cmax1 (or a large value close to the maximum oxygen storage amount Cmax1). Therefore, even when the CPU 71 proceeds from step 2310 of FIG. 23 to step 640 and starts the air-fuel ratio weak rich control, reduction components (HC, CO, etc.) do not flow out of the upstream catalyst 53. As a result, during a short period after time t1, the output value Voxs output from the downstream air-fuel ratio sensor 67 becomes a value corresponding to a lean-side air-fuel ratio in relation to the stoichiometric air-fuel ratio (i.e., a value equal to or less than a lean-side threshold VLth smaller than the value VSth, the value Vsth being a output value of the downstream air-fuel ratio sensor 67 corresponding the stoichiometric air-fuel ratio).

Thereafter, the oxygen storage amount OSA1 of the upstream catalyst 53 becomes approximately "0" immediately before time t2, and therefore, reduction components start to flow out of the upstream catalyst 53. As a result, at time t2, the output value Voxs output from the downstream air-fuel ratio sensor 67 becomes a value corresponding to a rich-side air-fuel ratio in relation to the stoichiometric air-fuel ratio (i.e., a value equal to or greater than the value VSth).

As a result, the CPU 71 makes a "No" determination when it proceeds to step 2415, and does not execute step 2420. Further, the CPU 71 increases the post-inversion-weak-rich-control-period cumulative air amount tGaSRH in steps 2425 and 2430. As a result, after time t2, the post-inversion-weak-rich-control-period cumulative air amount tGaSRH starts to increase from "0."

Thereafter, when time t3 has come, the post-inversion-weak-rich-control-period cumulative air amount tGaSRH reaches the filter-regeneration-control start threshold RHth. Accordingly, after time t3, the CPU 71 makes a "Yes" determination at step 2310 of FIG. 23, and proceeds to step 2320. At this point in time, the post-inversion-filter-regeneration-control-period cumulative air amount tGaSLH is "0", and thus, smaller than the filter-regeneration-control completion threshold LHth. Accordingly, the CPU 71 proceeds from step 2320 to step 660 so as to start the air-fuel ratio lean control (filter regeneration control).

As described above, the fourth control apparatus starts the cumulative calculation of the post-inversion-weak-rich-control-period cumulative air amount tGaSRH at a point in time when reduction components start to flow out of the upstream catalyst 53 due to the fact that the oxygen storage amount OSA1 of the upstream catalyst 53 has reached "0" during the air-fuel ratio weak rich control (i.e., a point in time when the air-fuel ratio afdown based on the output value Voxs of the downstream air-fuel ratio sensor 67 has changed to a rich-side air-fuel ratio in relation to the stoichiometric air-fuel ratio after start of the air-fuel ratio weak rich control (after the fuel cut end or after completion of the air-fuel ratio lean control)). Accordingly, the post-inversion-weak-rich-control-period cumulative air amount tGaSRH does not depend on the maximum oxygen storage amount Cmax1 of the upstream catalyst 53 or the like, and accurately represents the amount of excessive reduction components having flowed into the downstream catalyst 55. In other words, the tGaSRH accurately represents an amount corresponding to the reduction amount of the oxygen storage amount OSA2 of the downstream catalyst 55; i.e., the amount of reduction components held by the downstream catalyst 55. As a result, it is possible to accurately determine that the downstream catalyst 55 has reached the above-described "reduced state."

Next, the processing of step 2435 and subsequent steps of FIG. 24 will be described. In step 2435, the CPU 71 determines whether or not the post-inversion-weak-rich-control-period cumulative air amount tGaSRH is equal to or greater than the filter-regeneration-control start threshold RHth. If the post-inversion-weak-rich-control-period cumulative air amount tGaSRH is equal to or greater than the filter-regeneration-control start threshold RHth, the CPU 71 makes a "Yes" determination at step 2435, and proceeds to step 2440 so as to store (set) the filter-regeneration-control start threshold RHth to a storage area for storing a post-inversion-weak-rich-control-period cumulative air amount tGaSRH. Thereafter, the CPU 71 proceeds to step 2445. In contrast, if the post-inversion-weak-rich-control-period cumulative air amount tGaSRH is less than the filter-regeneration-control start threshold RHth, the CPU 71 makes a "No" determination at step 2435, and proceeds directly to step 2445.

At step 2445, the CPU 71 determines whether or not the air-fuel ratio (afdown = f(Voxs)) based on the output value Voxs of the downstream air-fuel ratio sensor 67 has not yet changed to a lean-side air-fuel ratio in relation to the stoichiometric air-fuel ratio after completion of the air-fuel ratio weak rich control (i.e., after start of the air-fuel ratio lean control). That is, the CPU 71 determines whether or not the output value Voxs of the downstream air-fuel ratio sensor 67 has not yet changed to a value corresponding to a lean-side air-fuel ratio in relation to the stoichiometric air-fuel ratio (i.e., a value equal to or less than the lean-side threshold VLth smaller than the value VSth) after start of the air-fuel ratio lean control. If the air-fuel ratio afdown based on the output value Voxs of the downstream air-fuel ratio sensor 67 has not yet changed to the lean-side air-fuel ratio in relation to the stoichiometric air-fuel ratio after completion of the air-fuel ratio weak rich control, the CPU 71 makes a "Yes" determination in step 2445, and proceeds to step 2450 so as to set the value of the post-inversion-filter-regeneration-control-period cumulative air amount tGaSLH to "0." As a result, the value of the post-inversion-filter-regeneration-control-period cumulative air amount tGaSLH is maintained at "0" until the output value Voxs of the downstream air-fuel ratio sensor 67 firstly (or for the first time) changes to a value corresponding to a lean-side air-fuel ratio in relation to the stoichiometric air-fuel ratio after start of the air-fuel lean control. Threafter, the CPU 71 proceeds to step 2455.

In contrast, if the air-fuel ratio afdown based on the output value Voxs of the downstream air-fuel ratio sensor 67 has changed to the lean-side air-fuel ratio in relation to the stoichiometric air-fuel ratio after start of the air-fuel ratio lean control (i.e., after completion of the air-fuel ratio weak rich control), the CPU 71 makes a "No" determination at step 2445, and proceeds directly to step 2455.

At step 2455, the CPU 71 determines whether or not the present point in time is in a period of the air-fuel ratio lean control (filter regeneration control). If the present point in time is in a period of the air-fuel ratio lean control, the CPU 71 makes a "Yes" determination at step 2455, and proceeds to step 2460 so as to increase the post-inversion-filter-regeneration-control-period cumulative air amount tGaSLH by an amount (Ga·Δt1) which is the product of the predetermined period of time Δt1 and the intake air flow rate Ga detected by the air flow meter 61 at the present point in time. Thereafter, the CPU 71 proceeds to step 2465. In contrast, if the present point in time is not in a period of the air-fuel ratio lean control, the CPU 71 makes a "No" determination at step 2455, and proceeds directly to step 2465.

In addition, at step 2465 the CPU 71 determines whether or not the post-inversion-filter-regeneration-control-period cumulative air amount tGaSLH is equal to or greater than the filter-regeneration-control completion threshold LHth. That is, the CPU 71 determines whether or not the present point in time is immediately after the air-fuel ratio weak rich control has been started. If the post-inversion-filter-regeneration-control-period cumulative air amount tGaSLH is equal to or greater than the filter-regeneration-control completion threshold LHth, the CPU 71 makes a "Yes" determination at step 2465, and proceeds to step 2470 so as to set the post-inversion-weak-rich-control-period cumulative air amount tGaSRH to "0" and set the post-inversion-filter-regeneration-control-period cumulative air amount tGaSLH to "0." Thereafter, the CPU 71 proceeds to step 2495, and ends the current execution of the present routine. In contrast, if the post-inversion-filter-regeneration-control-period cumulative air amount tGaSLH is less than the filter-regeneration-control completion threshold LHth, the CPU 71 makes a "No" determination at step 2465, and proceeds directly to step 2495 to thereby end the current execution of the present routine.

Hereinafter, the above-mentioned operation of the CPU 71 at steps 2435 to 2470 will be further described with reference to FIG. 25. As described above, at time t3, the post-inversion-weak-rich-control-period cumulative air amount tGaSRH reaches the filter-regeneration-control start threshold RHth. Accordingly, the CPU 71 executes the processings of steps 2435 and 2440, so that the post-inversion-weak-rich-control-period cumulative air amount tGaSRH is maintained at the filter-regeneration-control start threshold RHth, as shown in a period after time t3 of FIG. 25.

Since the air-fuel ratio weak rich control has been executed up to time t3, the oxygen storage amount OSA1 of the upstream catalyst 53 becomes substantially "0" at time t3. Therefore, even when the air-fuel ratio lean control is executed after time t3, oxygen substantially does not flow out of the upstream catalyst 53 until the oxygen storage amount OSA1 of the upstream catalyst 53 reaches the maximum oxygen storage amount Cmax1 of the upstream catalyst 53. As a result, in a short period after time t3, the output value Voxs output from the downstream air-fuel ratio sensor 67 becomes a value corresponding to an air-fuel ratio near the stoichiometric air-fuel ratio (i.e., a value greater than the lean-side threshold VLth). Therefore, the processing of step 2450 is repeatedly performed, whereby the post-inversion-filter-regeneration-control-period cumulative air amount tGaSLH is maintained at "0." When a predetermined period of time has elapsed from time t3, becaus of the air-fuel ratio lean control, the oxygen storage amount OSA1 of the upstream catalyst 53 reaches the maximum oxygen storage amount Cmax1. Accordingly, when a short time has elapsed after time t3 and time t4 has come, oxygen starts to flow out of the upstream catalyst 53. As a result, the output value Voxs output from the downstream air-fuel ratio sensor 67 becomes equal to or less than the lean-side threshold VLth.

That is, at time t4, the air-fuel ratio afdown based on the output value Voxs output from the downstream air-fuel ratio sensor 67 becomes an air-fuel ratio shifted toward the lean side from the stoichiometric air-fuel ratio by a predetermined amount.

Accordingly, after time t4, the CPU 71 makes a "No" determination at step 2445, and does not execute the processing of step 2450. Further, the CPU 71 increases the post-inversion-filter-regeneration-control-period cumulative air amount tGaSLH by the processings of steps 2455 and 2460. As a result, the post-inversion-filter-regeneration-control-period cumulative air amount tGaSLH starts to increase from "0" after time t4.

Thereafter, when time t5 has come, the post-inversion-filter-regeneration-control-period cumulative air amount tGaSLH reaches the filter-regeneration-control completion threshold LHth. Accordingly, immediately after time t5, the CPU 71 makes a "Yes" determination at each of steps 2310 and 2320 of FIG. 23, and proceeds to step 640 of FIG. 23 so as to resume the air-fuel ratio weak rich control (i.e., it ends the filter regeneration control).

As described above, the fourth control apparatus starts the cumulative calculation of the post-inversion-filter-regeneration-control-period cumulative air amount tGaSLH at a point in time when oxygen starts to flow out of the upstream catalyst 53 as a result of the fact that the oxygen storage amount OSA1 of the upstream catalyst 53 has reached the maximum oxygen storage amount Cmax1 during the air-fuel ratio lean control (filter regeneration control). In other words, the fourth control apparatus starts the cumulative calculation of the amount tGaSLH at a point in time when the air-fuel ratio afdown based on the output value Voxs of the downstream air-fuel ratio sensor 67 has changed to a lean-side air-fuel ratio in relation to the stoichiometric air-fuel ratio after start of the air-fuel ratio lean control. Accordingly, the post-inversion-filter-regeneration-control-period cumulative air amount tGaSLH does not depend on the maximum oxygen storage amount Cmax1 of the upstream catalyst 53 or the like, and thus, accurately represents the increase amount of the oxygen storage amount OSA2 of the downstream catalyst 55 (the increase amount corresponding to the reduction amount of reduction components of the downstream catalyst 55). As a result, the air-fuel ratio lean control can be stopped before the capacity of the downstream catalyst 55 to remove nitrogen oxides (nitrogen oxide removal capacity) becomes excessively low. Accordingly, it is possible to prevent the amount of nitrogen oxides discharged from the engine 10 to the atmosphere from increasing due to regeneration of the particulate collection filter 54 (i.e., due to performance of the air-fuel ratio lean control).

It should be noted that the fourth control apparatus may be configured to start the cumulative calculation of the post-inversion-weak-rich-control-period cumulative air amount tGaSRH at a point in time when the air-fuel ratio afdown based on the output value Voxs of the downstream air-fuel ratio sensor 67 has changed to a rich-side air-fuel ratio in relation to the stoichiometric air-fuel ratio after start of the air-fuel ratio weak rich control, and start the cumulative calculation of the filter-regeneration-control-period cumulative air amount tGaSL at a point in time when the air-fuel ratio lean control is started as in the first through third control apparatuses.

Similarly, the fourth control apparatus may be configured to start the cumulative calculation of the post-inversion-filter-regeneration-control-period cumulative air amount tGaSLH at a point in time when the air-fuel ratio afdown based on the output value Voxs of the downstream air-fuel ratio sensor 67 has changed to a lean-side air-fuel ratio in relation to the stoichiometric air-fuel ratio after start of the air-fuel ratio lean control, and start the cumulative calculation of the weak-rich-control-period cumulative air amount tGaSR at a point in time when the air-fuel ratio weak rich control is started (the point in time including the fuel cut end time) as in the first through third control apparatuses.

As described above, the fourth control apparatus (air-fuel-ratio control means of the fourth control apparatus) increases reduced-state determination means which sets the accumulation start time (first accumulation start time) of the post-inversion-weak-rich-control-period cumulative air amount tGaSRH, which serves as the first cumulative value tGaSR, to a "rich inversion time"; i.e., a "point in time at which the output value Voxs of the downstream air-fuel ratio sensor 67 has first changed to a value corresponding to a rich-side air-fuel ratio in relation to the stoichiometric air-fuel ratio (an air-fuel ratio shifted toward the rich side from (i.e., an air-fuel ratio smaller than) the stoichiometric air-fuel ratio by a predetermined amount)" after the "fuel cut end time" (see steps 2415 and 2420 of FIG. 24); and determines that the downstream catalyst 55 is in the above-described "reduced state" when the post-inversion-weak-rich-control-period cumulative air amount tGaSRH becomes equal to or greater than the first threshold RHth (see step 2310 and FIG. 24).

The rich inversion time is a point in time at which the oxygen storage amount OSA1 of the upstream catalyst 53 has become substantially "0," and excessive reduction components start to flow into the downstream catalyst 55. Accordingly, the post-inversion-weak-rich-control-period cumulative air amount tGaSRH used by the fourth control apparatus represents the cumulative amount of excessive reduction components having flowed into the downstream catalyst 55, irrespective of the maximum oxygen storage amount Cmax1 of the upstream catalyst 53. As a result, the fourth control apparatus can accurately determine whether or not the downstream catalyst 55 has reached the reduced state.

Further, the fourth control apparatus (air-fuel-ratio control means of the fourth control apparatus) sets the accumulation start time (second accumulation start time) of the post-inversion-filter-regeneration-control-period cumulative air amount tGaSLH, which serves as the second cumulative value tGaSL, to a "lean inversion time"; i.e., a point in time at which the output value Voxs of the downstream air-fuel ratio sensor 67 has first (for the first time) changed to a value corresponding to an air-fuel ratio shifted toward the lean side from (i.e., an air-fuel ratio larger than) the stoichiometric air-fuel ratio by a predetermined amount after start of the filter regeneration control (see step 2445 and 2450 of FIG. 24).

As described above, the lean inversion time is a point in time at which the oxygen storage amount OSA1 of the upstream catalyst 53 has substantially reached to the maximum oxygen storage amount Cmax1, and burning of particulates has substantially ended within the particulate collection filter 54. Accordingly, since the post-inversion-filter-regeneration-control-period cumulative air amount tGaSLH accurately represents the amount of oxidation components having flowed into the downstream catalyst 55 irrespective of the maximum oxygen storage amount Cmax1 of the upstream catalyst 53, the amount of "excessive oxidation components" supplied to the downstream catalyst 55 can be controlled to a desired value. As a result, it is possible to prevent nitrogen oxides from flowing into the downstream catalyst 55 in an amount exceeding the nitrogen oxide removal capacity of the downstream catalyst 55. Thus, the filter regeneration control can be ended before a large amount of nitrogen oxides are discharged to the atmosphere. In other words, regeneration of the particulate collection filter 54 can be performed within a range in which the discharge amount of nitrogen oxides does not increase.

As described above, each of the control apparatuses for the internal combustion engine according to the embodiments of the present invention comprises:

reduced-state determination means (e.g., steps 630 and 2310) for determining whether or not the downstream catalyst 55 has reached a reduced state in which the downstream catalyst can remove a predetermined amount of nitrogen oxides;

rich control means (e.g., step 640), operable when the downstream catalyst 55 is determined to have not yet reached the reduced state, for controlling the air-fuel ratio of the gas mixture to be supplied to the engine such that the averaged air-fuel ratio of the gas mixture to be supplied to the engine becomes a week rich air-fuel ratio deviating toward the rich side from (a week rich air-fuel ratio smaller than) the stoichiometric air-fuel ratio; and

lean control means (e.g., step 660), operable when the downstream catalyst 55 is determined to have reached the reduced state, for controlling the air-fuel ratio of the gas mixture to be supplied to the engine such that the averaged air-fuel ratio of the gas mixture to be supplied to the engine shifts toward the lean side in relation to the stoichiometric air-fuel ratio (i.e., such that averaged air-fuel ratio of the gas mixture to be supplied to the engine is controlled to be an air-fuel ratio larger than the stoichiometric air-fuel ratio).

Accordingly, it is possible to regenerate the particulate collection filter 54, without increasing the discharge amount of nitrogen oxides. It should be noted that the present invention is not limited to the above-described embodiments, and various modifications can be employed within the scope of the present invention. For example, in the above-described embodiments, the filter regeneration control is started when the first cumulative value tGaSR becomes greater than the first predetermined value (first threshold) Rth. However, the above-described embodiments may be modified such that the filter regeneration control is executed when the first cumulative value tGaSR is greater than the first predetermined value (first threshold) Rth, and a cumulative value of the intake air amount having been calculated since the end of the previous (last) filter regeneration control is equal to or greater than a predetermined value  or a cumulative value of operation time of the engine 10 having been calculated since the end of the previous (last) filter regeneration control is equal to or greater than a predetermined value.

Further, the sub feedback control may be such that the air-fuel ratio detected by the upstream air-fuel ratio sensor 66 is outwardly corrected such that the output value Voxs of the downstream air-fuel ratio sensor 67 coincides with the downstream target value as disclosed in Japanese Patent Application Laid-Open (*kokai*) No. JP 2007-278186 A. Further, the sub feedback control may be such that the air-fuel ratio correction efficient determined on the basis of the output value of the upstream air-fuel ratio sensor 66 is changed in accordance with the output value Voxs of the downstream air-fuel ratio sensor 67 as disclosed in Japanese Patent Application Laid-Open (*kokai*) No. JP 2006-010738 A.

**Claims**

1.  A control apparatus for a gasoline internal combustion engine (10) having a particulate collection filter (54) disposed in an exhaust passage (52) of the internal combustion engine and a downstream catalyst (55) which is a three-way catalyst and is disposed in the exhaust passage (52) at a location downstream of the particulate collection filter (54), further comprising:

    reduced-state determination means for determining whether or not the downstream catalyst (55) has reached a reduced state in which the downstream catalyst (55) can remove a predetermined amount of nitrogen oxides; and

    air-fuel-ratio control means (71) for executing near stoichiometric air-fuel ratio control which controls the averaged air-fuel ratio of a gas mixture which contains air and fuel and is supplied to the engine to a first air-fuel ratio within a predetermined air-fuel ratio range where a stoichiometric air-fuel ratio is included, and for executing, when the downstream catalyst (55) is determined to have reached the reduced state, filter regeneration control, over a predetermined period of time, which controls the averaged air-fuel ratio of the gas mixture to be supplied to the engine to a second air-fuel ratio which is on the lean side in relation to the first air-fuel ratio and on the lean side in relation to the stoichiometric air-fuel ratio, to thereby supply oxygen to the particulate collection filter (54) and burn particulates collected by the particulate collection filter (54).

2.  A control apparatus for an internal combustion engine according to claim 1, further comprising:

    a downstream air-fuel ratio sensor (67) which is disposed in the exhaust passage (52) so as to be located between the particulate collection filter (54) and the downstream catalyst (55) and which outputs an output value corresponding to an air-fuel ratio of a gas flowing through a region where the sensor (67) is disposed, wherein the air-fuel-ratio control means (71) executes the near stoichiometric air-fuel ratio control by executing sub feedback control in such a manner that, when the output value output from the downstream air-fuel ratio sensor

(67) is a value corresponding to a lean-side air-fuel ratio in relation to a downstream target air-fuel ratio set as the first air-fuel ratio, the air-fuel-ratio control means changes the air-fuel ratio of the gas mixture to be supplied to the engine to a further rich-side air-fuel ratio, and, when the output value output from the downstream air-fuel ratio sensor (67) is a value corresponding to a rich-side air-fuel ratio in relation to the downstream target air-fuel ratio, the air-fuel-ratio control means changes the air-fuel ratio of the gas mixture to be supplied to the engine to a further lean-side air-fuel ratio; and

the air-fuel-ratio control means executes the filter regeneration control by executing lean maintaining control in such a manner that, even when the output value output from the downstream air-fuel ratio sensor (67) is a value corresponding to a lean-side air-fuel ratio in relation to the downstream target air-fuel ratio, the air-fuel-ratio control means maintains the averaged air-fuel ratio of the gas mixture to be supplied to the engine at the second air-fuel ratio, without changing the air-fuel ratio of the gas mixture to be supplied to the engine to a further rich-side air-fuel ratio.

3. A control apparatus for an internal combustion engine according to claim 2, wherein the air-fuel-ratio control means stops the sub feedback control in a period in which the filter regeneration control is executed.

4. A control apparatus for an internal combustion engine according to claim 1, further comprising:

a downstream air-fuel ratio sensor (67) which is disposed in the exhaust passage (52) to be located between the particulate collection filter (54) and the downstream catalyst (55) and which outputs an output value corresponding to an air-fuel ratio of a gas flowing through a region where the sensor is disposed, wherein the air-fuel-ratio control means continues the filter regeneration control up to a point in time when the output value output from the downstream air-fuel ratio sensor (67) becomes equal to a value corresponding to a lean-side air-fuel ratio in relation to the stoichiometric air-fuel ratio after the output value has become equal to a value corresponding to the stoichiometric air-fuel ratio after start of the filter regeneration control.

5. A control apparatus for an internal combustion engine according to any one of claims 2 to 4, wherein the reduced-state determination means obtains a first cumulative value corresponding to a cumulative value of a reduction component excessive amount obtained by subtracting, from an amount of reduction components, which are unburned substances discharged from the engine to the exhaust passage (52), an amount of oxidation components which are discharged from the engine and oxidize the reduction components, and determines on the basis of the first cumulative value whether or not the downstream catalyst (55) has reached the reduced state.

6. A control apparatus for an internal combustion engine according to claim 1, wherein the reduced-state determination means obtains a first cumulative value corresponding to a cumulative value of a reduction component excessive amount obtained by subtracting, from an amount of reduction components, which are unburned substances discharged from the engine to the exhaust passage (52), an amount of oxidation components which are discharged from the engine and oxidize the reduction components, and determines on the basis of the first cumulative value whether or not the downstream catalyst (55) has reached the reduced state.

7. A control apparatus for an internal combustion engine according to claim 6, further comprising:

fuel cut means for stopping supply of fuel to the engine when the engine enters a predetermined fuel-cut operating state, wherein the reduced-state determination means obtains the first cumulative value whose cumulative calculation is started at a predetermined first accumulation start time after a fuel cut end time at which stoppage of supply of fuel to the engine by the fuel cut means is canceled and supply of fuel to the engine is resumed; determines whether or not the first cumulative value has become equal to or greater than a first predetermined value; and determine that the downstream catalyst (55) has reached the reduced state when the first cumulative value is determined to have become equal to or greater than the first predetermined value.

8. A control apparatus for an internal combustion engine according to claim 7, wherein the air-fuel-ratio control means controls the averaged air-fuel ratio of the gas mixture to be supplied to the engine to an air-fuel ratio shifted toward the rich side from the stoichiometric air-fuel ratio in a post fuel cut period, which is a period between the fuel cut end time and a point in time when the first cumulative value becomes equal to or greater than the first predetermined value.

9. A control apparatus for an internal combustion engine according to claim 8, further comprising:

a downstream air-fuel ratio sensor (67) which is disposed in the exhaust passage (52) to be located between the particulate collection filter (54) and the downstream catalyst (55) and which outputs an output value corresponding to an air-fuel ratio of a gas flowing through a region where the sensor is disposed, wherein in the post fuel cut period, the air-fuel-ratio control means selects, as a post fuel cut target air-fuel ratio, either an air-fuel ratio which falls within the predetermined air-fuel ratio range and is shifted toward the rich side from the stoichiometric air-fuel ratio or an air-fuel ratio which falls outside the predetermined air-fuel ratio range and is shifted toward the rich side from the stoichiometric air-fuel ratio; and the air-fuel-ratio control means executes post fuel cut feedback control in such a manner that,

when the output value output from the downstream air-fuel ratio sensor (67) is a value corresponding to a lean-side air-fuel ratio in relation to the post fuel cut target air-fuel ratio, the air-fuel-ratio control means changes the air-fuel ratio of the gas mixture to be supplied to the engine to a further rich-side air-fuel ratio; and,

when the output value output from the downstream air-fuel ratio sensor (67) is a value corresponding to a rich-side air-fuel ratio in relation to the post fuel cut target air-fuel ratio, the air-fuel-ratio control means changes the air-fuel ratio of the gas mixture to be supplied to the engine to a further lean-side air-fuel ratio,

whereby the averaged air-fuel ratio of the gas mixture to be supplied the engine is controlled to an air-fuel ratio shifted toward the rich side from the stoichiometric air-fuel ratio.

10. A control apparatus for an internal combustion engine according to claim 9, wherein the post fuel cut target air-fuel ratio is set to an air-fuel ratio which falls within the predetermined air-fuel ratio range and is shifted toward the rich side from the stoichiometric air-fuel ratio by a predetermined amount, and the first air-fuel ratio is set to be equal to the post fuel cut target air-fuel ratio.

11. A control apparatus for an internal combustion engine according to any one of claims 8 to 10, further comprising:

an upstream catalyst (53) which is a three-way catalyst and which is disposed in the exhaust passage (52) to be located upstream of the particulate collection filter (54), wherein the reduced-state determination means sets the first accumulation start time to the fuel cut end time, obtains a maximum oxygen storage amount of the upstream catalyst (53), and determines the first predetermined value such that the first predetermined value becomes larger as the obtained maximum oxygen storage amount of the upstream catalyst (53) is larger.

12. A control apparatus for an internal combustion engine according to claim 8, further comprising:

a downstream air-fuel ratio sensor (67) which is disposed in the exhaust passage (52) to be located between the particulate collection filter (54) and the downstream catalyst (55) and which outputs an output value corresponding to an air-fuel ratio of a gas flowing through a region where the sensor is disposed; and an upstream catalyst (53) which is a three-way catalyst and which is disposed in the exhaust passage (52) to be located upstream of the particulate collection filter (54), wherein the reduced-state determination means sets the first accumulation start time to a rich inversion time, which is a point in time when the output value output from the downstream air-fuel ratio sensor (67) has become a value corresponding to a rich-side air-fuel ratio in relation to the stoichiometric air-fuel ratio for the first time after the fuel cut end time.

13. A control apparatus for an internal combustion engine according to claim 9 or 10, further comprising:

an upstream catalyst (53) which is a three-way catalyst and which is disposed in the exhaust passage (52) to be located upstream of the particulate collection filter (54), wherein the reduced-state determination means sets the first accumulation start time to a rich inversion time, which is a point in time when the output value output from the downstream air-fuel ratio sensor (67) has become a value corresponding to an air-fuel ratio deviating toward the rich side from the stoichiometric air-fuel ratio for the first time after the fuel cut end time.

14. A control apparatus for an internal combustion engine according to claim 1, wherein, from a predetermined second accumulation start time after start of the filter regeneration control, the air-fuel-ratio control means obtains a second cumulative value corresponding to a cumulative value of an oxidation component excessive amount obtained by subtracting, from an amount of oxidation components discharged from the engine to the exhaust passage (52), an amount of reduction components which are unburned substances discharged from the engine and reduce the oxidation components; and the air-fuel-ratio control means ends the filter regeneration control when the obtained second cumulative value becomes equal to or greater than a second predetermined value.

**15.** A control apparatus for an internal combustion engine according to claim 14, wherein the air-fuel-ratio control means sets the second accumulation start time to a point in time when the filter regeneration control is started.

**16.** A control apparatus for an internal combustion engine according to claim 15, further comprising:

an upstream catalyst (53) which is a three-way catalyst and which is disposed in the exhaust passage (52) to be located upstream of the particulate collection filter (54), wherein the air-fuel-ratio control means obtains a maximum oxygen storage amount of the upstream catalyst (53), and determines the second predetermined value such that the second predetermined value becomes larger, as the obtained maximum oxygen storage amount of the upstream catalyst (53) is larger.

**17.** A control apparatus for an internal combustion engine according to claim 14, further comprising:

an upstream catalyst (53) which is a three-way catalyst and which is disposed in the exhaust passage (52) to be located upstream of the particulate collection filter (54); and
a downstream air-fuel ratio sensor (67) which is disposed in the exhaust passage (52) to be located between the particulate collection filter (54) and the downstream catalyst (55) and which outputs an output value corresponding to an air-fuel ratio of a gas flowing through a region where the sensor is disposed, wherein
the air-fuel-ratio control means sets the second accumulation start time to a lean inversion time, which is a point in time when the output value output from the downstream air-fuel ratio sensor (67) has become a value corresponding to an air-fuel ratio shifted toward the lean side from the stoichiometric air-fuel ratio by a predetermined amount, for the first time after the start of the filter regeneration control.

**18.** A control apparatus for an internal combustion engine according to any one of claims 14 to 17, wherein the air-fuel-ratio control means obtains, as the second cumulative value, a value corresponding to a cumulative value of intake air amount of the engine from the second accumulation start time.

**19.** A control apparatus for an internal combustion engine according to claim 1, further comprising:

an upstream catalyst (53) which is a three-way catalyst disposed in an exhaust passage (52) of the internal combustion engine;
an upstream air-fuel ratio sensor (66) which is disposed in the exhaust passage (52) at a location upstream of the upstream catalyst (53) and which outputs an output value corresponding to an air-fuel ratio of a gas flowing through a region where the upstream air-fuel ratio sensor (66) is disposed;
a downstream air-fuel ratio sensor (67) which is disposed in the exhaust passage (52) at a location between the particulate collection filter (54) and the downstream catalyst (55) and which outputs an output value corresponding to an air-fuel ratio of a gas flowing through a region where the downstream air-fuel ratio sensor (67) is disposed;
sub feedback control means for executing sub feedback control in response to an instruction, the sub feedback control changing the air-fuel ratio of the gas mixture to be supplied to the engine to a further rich-side air-fuel ratio when the output value output from the downstream air-fuel ratio sensor (67) is a value corresponding to a lean-side air-fuel ratio in relation to a downstream target air-fuel ratio, which is an air-fuel ratio shifted toward the rich side from the stoichiometric air-fuel ratio by a predetermined amount, and changing the air-fuel ratio of the gas mixture to be supplied to the engine to a further lean-side air-fuel ratio when the output value output from the downstream air-fuel ratio sensor (67) is a value corresponding to a rich-side air-fuel ratio in relation to the downstream target air-fuel ratio; and
instruction means for supplying instructions to the main feedback control means and the sub feedback control means such that, until the downstream catalyst (55) is determined to have reached the reduced state, the upstream target air-fuel ratio is set to the stoichiometric air-fuel ratio, and the main and sub feedback controls are executed to thereby execute ordinary feedback control; and, after a point in time when the downstream catalyst (55) is determined to have reached the reduced state, filter regeneration control is executed over a predetermined period of time in such a manner that the upstream target air-fuel ratio is set to a lean air-fuel ratio, which is an air-fuel ratio shifted toward the lean side from the stoichiometric air-fuel ratio, the main feedback control is executed, and the sub feedback control is stopped, whereby oxygen is supplied to the particulate collection filter (54), and particulates collected by the particulate collection filter (54) are burned.

20. A control apparatus for an internal combustion engine according to claim 19, wherein the reduced-state determination means is configured such that, after a predetermined first accumulation start time during the ordinary feedback control, the reduced-state determination means obtains a first cumulative value corresponding to a cumulative value of a reduction component excessive amount obtained by subtracting, from an amount of reduction components which are unburned substances discharged from the engine to the exhaust passage (52), an amount of oxidation components which are discharged from the engine and oxidize the reduction components; determines whether or not the first cumulative value has become equal to or greater than a first predetermined value; and determines that the downstream catalyst (55) has reached the reduced state when the first cumulative value is determined to have become equal to or greater than the first predetermined value.

21. A control apparatus for an internal combustion engine according to claim 20, further comprising:

fuel cut means for stopping supply of fuel to the engine when the engine enters a predetermined fuel-cut operating state, wherein
the instruction means supplies the instructions to the main feedback control means and the sub feedback control means such that the ordinary feedback control is executed after the fuel cut end time, at which the stoppage of supply of fuel to the engine by the fuel cut means is canceled and the supply of fuel to the engine is resumed; and
the reduced-state determination means sets the first accumulation start time to either the fuel cut end time or a rich inversion time which is a point in time when the  output value output from the downstream air-fuel ratio sensor (67) has first become a value corresponding to a rich-side air-fuel ratio in relation to the stoichiometric air-fuel ratio after the fuel cut end time.

22. A control apparatus for an internal combustion engine according to any one of claims 8 to 13, 20, and 21, wherein the reduced-state determination means obtains, as the first cumulative value, a value corresponding to a cumulative value of intake air amount of the engine from the first accumulation start time.

23. A control apparatus for an internal combustion engine according to claim 1, further comprising:

an upstream catalyst (53) which is a three-way catalyst disposed in an exhaust passage (52) of the internal combustion engine (10); and
rich control means, operable when the downstream catalyst (55) is determined to have not yet reached the reduced state, for controlling the air-fuel ratio of the gas mixture to be supplied to the engine such that the averaged air-fuel ratio of the gas mixture to be supplied to the engine becomes a week rich air-fuel ratio deviating toward the rich side from the stoichiometric air-fuel ratio.

**Patentansprüche**

1. Steuervorrichtung für einen Benzinverbrennungsmotor (10) mit einem Partikulatsammelfilter (54), der in einem Abgaskanal (52) des Verbrennungsmotors angeordnet ist, und einem stromabwärtigen Katalysator (55), der ein Drei-Wege-Katalysator ist und in dem Abgaskanal (52) an einem Ort stromabwärtig des Partikulatsammelfilters (54) angeordnet ist, wobei die Vorrichtung des Weiteren folgendes aufweist:

eine Reduziertzustandsbestimmungseinrichtung zum Bestimmen, ob der stromabwärtige Katalysator (55) einen reduzierten Zustand erreicht hat oder nicht, bei dem der stromabwärtige Katalysator (55) eine vorbestimmte Menge an Stickoxiden entfernen kann; und
eine Luft-Kraftstoff-Verhältnis-Steuereinrichtung (71) zum Ausführen einer annähernd-stöchiometrisch-Luft-Kraftstoff-Verhältnis-Steuerung, die das durchschnittlich gestaltete Luft-Kraftstoff-Verhältnis eines Gasgemisches, das Luft und Kraftstoff enthält, steuert und zu dem Verbrennungsmotor in einem ersten Luft-Kraftstoff-Verhältnis innerhalb eines vorbestimmten Luft-Kraftstoff-Verhältnisbereiches, in dem ein stöchiometrisches Luft-Kraftstoff-Verhältnis umfasst ist, liefert, und zum Ausführen, wenn bestimmt worden ist, dass der stromabwärtige Katalysator (55) den reduzierten Zustand erreicht hat, einer Filterregenerationssteuerung über eine vorbestimmte Zeitspanne, die das durchschnittlich gestaltete Luft-Kraftstoff-Verhältnis des Gasgemisches, das zu dem Verbrennungsmotor geliefert wird, zu einem zweiten Luft-Kraftstoff-Verhältnis steuert, das an der mageren Seite in Bezug auf das erste Luft-Kraftstoff-Verhältnis und an der mageren Seite in Bezug auf  das stöchiometrische Luft-Kraftstoff-Verhältnis ist, um dadurch Sauerstoff zu dem Partikulatsammelfilter (54) zu liefern und durch den Partikulatsammelfilter (54) gesammelte Partikulate zu verbrennen.

2. Steuervorrichtung für einen Verbrennungsmotor gemäß Anspruch 1, die des Weiteren folgendes aufweist:

einen stromabwärtigen Luft-Kraftstoff-Verhältnissensor (67), der in dem Abgaskanal (52) so angeordnet ist, dass er sich zwischen dem Partikulatsammelfilter (54) und dem stromabwärtigen Katalysator (55) befindet, und der einen Abgabewert ausgibt, der einem Luft-Kraftstoff-Verhältnis eines Gases entspricht, das durch einen Bereich strömt, in welchem der Sensor (67) angeordnet ist, wobei
die Luft-Kraftstoff-Verhältnis-Steuereinrichtung (71) die annähernd -stöchiometrisch-Luft-Kraftstoff-Verhältnis-Steuerung ausführt, indem eine Nebenrückführsteuerung in einer derartigen Weise ausgeführt wird, dass, wenn der von dem stromabwärtigen Luft-Kraftstoff-Verhältnissensor (67) ausgegebene Ausgabewert ein Wert ist, der einem Luft-Kraftstoff-Verhältnis der mageren Seite entspricht in Bezug auf ein stromabwärtiges Soll-Luft-Kraftstoff-Verhältnis, das als das erste Luft-Kraftstoff-Verhältnis festgelegt ist, die Luft-Kraftstoff-Verhältnis-Steuereinrichtung das Luft-Kraftstoff-Verhältnis des Gasgemisches, das zu dem Verbrennungsmotor geliefert wird, zu einem Luft-Kraftstoff-Verhältnis ändert, das noch weiter an der fetten Seite ist, und, wenn der von dem stromabwärtigen Luft-Kraftstoff-Verhältnissensor (67) abgegebene Abgabewert ein Wert ist, der einem Luft-Kraftstoff-Verhältnis der fetten Seite entspricht in Bezug auf das stromabwärtige Soll-Luft-Kraftstoff-Verhältnis, die Luft-Kraftstoff-Verhältnis-Steuereinrichtung das Luft-Kraftstoff-Verhältnis des Gasgemisches, das zu dem Verbrennungsmotor geliefert wird, zu einem Luft-Kraftstoff-Verhältnis ändert, das noch weiter an der mageren Seite ist; und
die Luft-Kraftstoff-Verhältnis-Steuereinrichtung die Filterregenerationssteuerung ausführt, indem eine Magerhaltesteuereinrichtung in einer derartigen Weise ausgeführt wird, dass, selbst wenn der von dem stromabwärtigen Luft-Kraftstoff-Verhältnissensor (67) abgegebene Abgabewert ein Wert ist, der einem Luft-Kraftstoff-Verhältnis der mageren Seite entspricht in Bezug auf das stromabwärtige Soll-Luft-Kraftstoff-Verhältnis, die Luft-Kraftstoff-Verhältnis-Steuereinrichtung das durchschnittlich gestaltete Luft-Kraftstoff-Verhältnis des Gasgemisches, das zu dem Verbrennungsmotor geliefert wird, bei dem zweiten Luft-Kraftstoff-Verhältnis hält, ohne das Luft-Kraftstoff-Verhältnis des Gasgemisches, das zu dem Verbrennungsmotor geliefert wird, zu einem Luft-Kraftstoff-Verhältnis zu ändern, das noch weiter an der fetten Seite ist.

3. Steuervorrichtung für einen Verbrennungsmotor gemäß Anspruch 2, wobei die Luft-Kraftstoff-Verhältnis-Steuereinrichtung die Nebenrückführsteuerung in einer Zeitspanne anhält, in der die Filterregenerationssteuerung ausgeführt wird.

4. Steuervorrichtung für einen Verbrennungsmotor gemäß Anspruch 1, die des Weiteren folgendes aufweist:

einen stromabwärtigen Luft-Kraftstoff-Verhältnissensor (67), der in dem Abgaskanal (52) so angeordnet ist, dass er sich zwischen dem Partikulatsammelfilter (54) und dem stromabwärtigen Katalysator (55) befindet, und der einen Abgabewert ausgibt, der einem Luft-Kraftstoff-Verhältnis eines Gases entspricht, das durch einen Bereich strömt, in welchem der Sensor angeordnet ist, wobei
die Luft-Kraftstoff-Verhältnis-Steuereinrichtung die Filterregenerationssteuerung bis zu einem Zeitpunkt fortsetzt, bei dem der von dem stromabwärtigen Luft-Kraftstoff-Verhältnissensor (67) abgegebene Abgabewert gleich einem Wert wird, der einem Luft-Kraftstoff-Verhältnis der mageren Seite entspricht in Bezug auf das stöchiometrische Luft-Kraftstoff-Verhältnis, nachdem der Abgabewert gleich einem Wert geworden ist, der dem stöchiometrischen Luft-Kraftstoff-Verhältnis nach dem Start der Filterregenerationssteuerung entspricht.

5. Steuervorrichtung für einen Verbrennungsmotor gemäß einem der Ansprüche 2 bis 4, wobei die Reduziertzustandsbestimmungseinrichtung einen ersten kumulativen Wert erlangt, der einem kumulativen Wert einer Reduktionskomponentenüberschussmenge entspricht, die erlangt wird, indem von einer Menge an Reduktionskomponenten, die nicht verbrannte Substanzen sind, die von dem Verbrennungsmotor zu dem Abgaskanal (52) abgegeben werden, eine Menge an Oxidationskomponenten, die von dem Verbrennungsmotor abgegeben werden und die die Reduktionskomponenten oxidieren, subtrahiert wird, und die auf der Basis des ersten kumulativen Wertes bestimmt, ob der stromabwärtige Katalysator (55) den reduzierten Zustand erreicht hat oder nicht.

6. Steuervorrichtung für einen Verbrennungsmotor gemäß Anspruch 1, wobei die Reduziertzustandsbestimmungseinrichtung einen ersten kumulativen Wert erlangt, der einem kumulativen Wert einer Reduktionskomponentenüberschussmenge entspricht, die erlangt wird, indem von einer Menge an Reduktionskomponenten, die nicht verbrannte Substanzen sind, die von dem Verbrennungsmotor zu dem Abgaskanal (52) abgegeben werden, eine Menge an Oxidationskomponenten, die von dem Verbrennungsmotor abgegeben werden und die die Reduktionskomponenten oxidieren, subtrahiert wird, und die auf der Basis des ersten kumulativen Wertes bestimmt, ob der stromabwärtige Katalysator (55) den reduzierten Zustand erreicht hat oder nicht.

7. Steuervorrichtung für einen Verbrennungsmotor gemäß Anspruch 6, die des Weiteren folgendes aufweist:

eine Kraftstoffabschalteinrichtung zum Anhalten der Lieferung von Kraftstoff zu dem Verbrennungsmotor, wenn der Verbrennungsmotor in einen vorbestimmten Kraftstoffabschaltbetriebszustand eintritt, wobei die Reduziertzustandsbestimmungseinrichtung den ersten kumulativen Wert erlangt, dessen kumulative Berechnung bei einer vorbestimmten ersten Kommunikationsstartzeit gestartet wird nach einer Kraftstoffabschaltendzeit, bei der das Anhalten der Lieferung von Kraftstoff zu dem Verbrennungsmotor durch die Kraftstoffabschalteinrichtung aufgehoben wird, und die Lieferung von Kraftstoff zu dem Verbrennungsmotor wieder aufgenommen wird; bestimmt, ob der erste kumulative Wert gleich wie oder größer als der erste vorbestimmte Wert geworden ist oder nicht; und bestimmt, dass der stromabwärtige Katalysator (55) den reduzierten Zustand erreicht hat, wenn der erste kumulative Wert so bestimmt wird, dass er gleich wie oder größer als der erste vorbestimmte Wert geworden ist.

8. Steuervorrichtung für einen Verbrennungsmotor gemäß Anspruch 7, wobei die Luft-Kraftstoff-Verhältnis-Steuereinrichtung das durchschnittlich gestaltete Luft-Kraftstoff-Verhältnis des Gasgemisches, das zu dem Verbrennungsmotor geliefert wird, zu einem Luft-Kraftstoff-Verhältnis, das zu der fetten Seite von dem stöchiometrischen Luft-Kraftstoff-Verhältnis verschoben ist, in einer Nachkraftstoffabschaltperiode steuert, die eine Periode zwischen der Kraftstoffabschaltendzeit und einem Zeitpunkt ist, bei dem der erste kumulative Wert gleich wie oder größer als der erste vorbestimmte Wert geworden ist.

9. Steuervorrichtung für einen Verbrennungsmotor gemäß Anspruch 8, die des Weiteren folgendes aufweist:

einen stromabwärtigen Luft-Kraftstoff-Verhältnissensor (67), der in dem Abgaskanal (52) so angeordnet ist, dass er sich zwischen dem Partikulatsammelfilter (54) und dem stromabwärtigen Katalysator (55) befindet, und der einen Abgabewert ausgibt, der einem Luft-Kraftstoff-Verhältnis eines Gases entspricht, das durch einen Bereich strömt, an dem der Sensor angeordnet ist, wobei
in der Nachkraftstoffabschaltperiode die Luft-Kraftstoff-Verhältnis-Steuereinrichtung als ein Nachkraftstoffabschalt-Soll-Luft-Kraftstoff-Verhältnis entweder ein Luft-Kraftstoff-Verhältnis, das in den vorbestimmten Luft-Kraftstoff-Verhältnisbereich fällt und zu der fetten Seite von dem stöchiometrischen Luft-Kraftstoff-Verhältnis verschoben ist, oder ein Luft-Kraftstoff-Verhältnis, das aus dem vorbestimmten Luft-Kraftstoff-Verhältnisbereich herausfällt und zu der fetten Seite von dem stöchiometrischen Luft-Kraftstoff-Verhältnis verschoben ist, auswählt; und die Luft-Kraftstoff-Verhältnis-Steuereinrichtung die Nachkraftstoffabschaltrückführsteuerung in einer derartigen Weise ausführt, dass,
wenn der von dem stromabwärtigen Luft-Kraftstoff-Verhältnissensor (67) abgegebene Abgabewert ein Wert ist, der einem Luft-Kraftstoff-Verhältnis der mageren Seite entspricht in Bezug auf das Nachkraftstoffabschalt-Soll-Luft-Kraftstoff-Verhältnis, die Luft-Kraftstoff-Verhältnis-Steuereinrichtung das Luft-Kraftstoff-Verhältnis des Gasgemisches, das zu dem Verbrennungsmotor geliefert wird, zu einem Luft-Kraftstoff-Verhältnis ändert, das noch weiter an der fetten Seite ist; und
wenn der von dem stromabwärtigen Luft-Kraftstoff-Verhältnissensor (67) abgegebene Abgabewert ein Wert ist, der einem Luft-Kraftstoff-Verhältnis der fetten Seite in Bezug auf das Nachkraftstoffabschalt-Soll-Luft-Kraftstoff-Verhältnis entspricht, die Luft-Kraftstoff-Verhältnis-Steuereinrichtung das Luft-Kraftstoff-Verhältnis des Gasgemisches, das zu dem Verbrennungsmotor geliefert wird, zu einem Luft-Kraftstoff-Verhältnis ändert, das noch weiter an der mageren Seite ist,
wodurch das durchschnittlich gestaltete Luft-Kraftstoff-Verhältnis des Gasgemisches, das zu dem Verbrennungsmotor geliefert wird, zu einem Luft-Kraftstoff-Verhältnis gesteuert wird, das zu der fetten Seite hin von dem stöchiometrischen Luft-Kraftstoff-Verhältnis verschoben ist.

10. Steuervorrichtung für einen Verbrennungsmotor gemäß Anspruch 9, wobei das Nachkraftstoffabschalt-Soll-Luft-Kraftstoff-Verhältnis auf ein Luft-Kraftstoff-Verhältnis festgelegt ist, das in den vorbestimmten Luft-Kraftstoff-Verhältnisbereich fällt und zu der fetten Seite hin von dem stöchiometrischen Luft-Kraftstoff-Verhältnis um einen vorbestimmten Betrag verschoben ist, und das erste Luft-Kraftstoff-Verhältnis so festgelegt ist, dass es gleich dem Nachkraftstoffabschalt-Soll-Luft-Kraftstoff-Verhältnis ist.

11. Steuervorrichtung für einen Verbrennungsmotor gemäß einem der Ansprüche 8 bis 10, die des Weiteren aufweist:

einen stromaufwärtigen Katalysator (53), der ein Drei-Wege-Katalysator ist und der in dem Abgaskanal (52) so angeordnet ist, dass er sich stromaufwärtig des Partikulatsammelfilters (54) befindet, wobei
die Reduziertzustandsbestimmungseinrichtung die erste Akkumulationsstartzeit auf die Kraftstoffabschaltendzeit festlegt, eine maximale Sauerstoffspeichermenge des stromaufwärtigen Katalysators (53) erlangt, und den ersten vorbestimmten Wert derart bestimmt, dass der erste vorbestimmte Wert größer wird, wenn die erlangte maximale Sauerstoffspeichermenge des stromaufwärtigen Katalysators (53) größer ist.

**12.** Steuervorrichtung für einen Verbrennungsmotor gemäß Anspruch 8, die des Weiteren folgendes aufweist:

einen stromabwärtigen Luft-Kraftstoff-Verhältnissensor (67), der in dem Abgaskanal (52) so angeordnet ist, dass er sich zwischen dem Partikulatsammelfilter (54) und dem stromabwärtigen Katalysator (55) befindet, und der einen Abgabewert ausgibt, der einem Luft-Kraftstoff-Verhältnis eines Gases entspricht, das durch einen Bereich strömt, in welchem der Sensor angeordnet ist; und
einen stromaufwärtigen Katalysator (53), der ein Drei-Wege-Katalysator ist und der in dem Abgaskanal (52) so angeordnet ist, dass er sich stromaufwärtig des Partikulatsammelfilters (54) befindet, wobei die Reduziertzustandsbestimmungseinrichtung die erste Akkumulationsstartzeit auf eine Fettinversionszeit festlegt, die ein Zeitpunkt ist, bei dem der von dem stromabwärtigen Luft-Kraftstoff-Verhältnissensor (67) abgegebene Abgabewert ein Wert, der einem Luft-Kraftstoff-Verhältnis der fetten Seite in Bezug auf das stöchiometrische Luft-Kraftstoff-Verhältnis entspricht, das erste Mal nach der Kraftstoffabschaltendzeit geworden ist.

**13.** Steuervorrichtung für einen Verbrennungsmotor gemäß Anspruch 9 oder 10, die des Weiteren folgendes aufweist:

einen stromaufwärtigen Katalysator (53), der ein Drei-Wege-Katalysator ist und der in dem Abgaskanal (52) so angeordnet ist, dass er sich stromaufwärtig des Partikulatsammelfilters (54) befindet, wobei die Reduziertzustandsbestimmungseinrichtung die erste Akkumulationsstartzeit auf eine Fettinversionszeit festlegt, die einen Zeitpunkt ist, bei dem der von den stromabwärtigen Luft-Kraftstoff-Verhältnissensor (67) abgegebene Abgabewert ein Wert, der einem Luft-Kraftstoff-Verhältnis entspricht, das zu der fetten Seite von dem stöchiometrischen Luft-Kraftstoff-Verhältnis abweicht, das erste Mal nach der Kraftstoffabschaltendzeit geworden ist.

**14.** Steuervorrichtung für einen Verbrennungsmotor gemäß Anspruch 1, wobei, von einer vorbestimmten zweiten Akkumulationsstartzeit nach dem Beginn der Filterregenerationssteuerung, die Luft-Kraftstoff-Verhältnis-Steuereinrichtung einen zweiten kumulativen Wert erlangt, der einem kumulativen Wert einer Oxidationskomponentenüberschussmenge entspricht, die erlangt wird, indem von einer Menge an Oxidationskomponente, die von dem Verbrennungsmotor zu dem Abgaskanal (52) abgegeben werden, eine Menge an Reduktionskomponenten, die nicht verbrannte Substanzen sind, die von dem Verbrennungsmotor abgegeben werden, und die die Oxidationskomponenten reduzieren, subtrahiert wird; und die Luft-Kraftstoff-Verhältnis-Steuereinrichtung die Filterregenerationssteuerung beendet, wenn der erlangte zweite kumulative Wert gleich wie oder größer als ein zweiter vorbestimmter Wert wird.

**15.** Steuervorrichtung für einen Verbrennungsmotor gemäß Anspruch 14, wobei die Luft-Kraftstoff-Verhältnis-Steuereinrichtung die zweite Akkumulationsstartzeit auf einen Zeitpunkt einstellt, bei dem die Filterregenerationssteuerung gestartet wird.

**16.** Steuervorrichtung für einen Verbrennungsmotor gemäß Anspruch 15, die des Weiteren folgendes aufweist:

einen stromaufwärtigen Katalysator (53), der ein Drei-Wege-Katalysator ist und der in dem Abgaskanal (52) so angeordnet ist, dass er sich stromaufwärtig des Partikulatsammelfilters (54) befindet, wobei die Luft-Kraftstoff-Verhältnis-Steuereinrichtung eine maximale Sauerstoffspeichermenge des stromaufwärtigen Katalysators (53) erlangt, und den zweiten vorbestimmten Wert derart bestimmt, dass der zweite vorbestimmte Wert größer wird, wenn die erlangte maximale Sauerstoffspeichermenge des stromaufwärtigen Katalysators (53) größer wird.

**17.** Steuervorrichtung für einen Verbrennungsmotor gemäß Anspruch 14, die des Weiteren folgendes aufweist:

einen stromaufwärtigen Katalysator (53), der ein Drei-Wege-Katalysator ist und der in dem Abgaskanal (52) so angeordnet ist, dass er sich stromaufwärtig des Partikulatsammelfilters (54) befindet; und
einen stromabwärtigen Luft-Kraftstoff-Verhältnissensor (67), der in dem Abgaskanal (52) so angeordnet ist, dass er sich zwischen dem Partikulatsammelfilter (54) und dem stromabwärtigen Katalysator (55) befindet, und der einen Abgabewert ausgibt, der einem Luft-Kraftstoff-Verhältnis eines Gases entspricht, das durch einen Bereich strömt, in welchem der Sensor angeordnet ist, wobei die Luft-Kraftstoff-Verhältnis-Steuereinrichtung die zweite Akkumulationsstartzeit auf eine Magerumkehrzeit einstellt, die ein Zeitpunkt ist, bei dem der von dem stromabwärtigen Luft-Kraftstoff-Verhältnissensor (67) abgegebene Abgabewert ein Wert, der einem Luft-Kraftstoff-Verhältnis entspricht, das zu der mageren Seite von dem stöchiometrischen Luft-Kraftstoff-Verhältnis um einen vorbestimmten Betrag verschoben ist, das erste Mal nach dem Beginn der Filterregenerationssteuerung geworden ist.

18. Steuervorrichtung für einen Verbrennungsmotor gemäß einem der Ansprüche 14 bis 17, wobei die Luft-Kraftstoff-Verhältnis-Steuereinrichtung als den zweiten kumulativen Wert einen Wert erlangt, der einem kumulativen Wert der Einlassluftmenge des Verbrennungsmotors von der zweiten Akkumulationsstartzeit entspricht.

19. Steuervorrichtung für einen Verbrennungsmotor gemäß Anspruch 1, die des Weiteren folgendes aufweist:

einen stromaufwärtigen Katalysator (53), der ein Drei-Wege-Katalysator ist, der in einem Abgaskanal (52) des Verbrennungsmotors angeordnet ist;
einen stromaufwärtigen Luft-Kraftstoff-Verhältnissensor (66), der in dem Abgaskanal (52) an einem Ort angeordnet ist, der stromaufwärts des stromaufwärtigen Katalysators (53) ist, und der einen Abgabewert ausgibt, der einem Luft-Kraftstoff-Verhältnis eines Gases entspricht, das durch einen Bereich strömt, in welchem der stromaufwärtige Luft-Kraftstoff-Verhältnissensor (66) angeordnet ist;
einen stromabwärtigen Luft-Kraftstoff-Verhältnissensor (67), der in dem Abgaskanal (52) an einem Ort zwischen dem Partikulatsammelfilter (54) und dem stromabwärtigen Katalysator (55) angeordnet ist, und der einen Abgabewert ausgibt, der einem Luft-Kraftstoff-Verhältnis eines Gases entspricht, das durch einen Bereich strömt, in welchem der stromabwärtige Luft-Kraftstoff-Verhältnissensor (67) angeordnet ist;
eine Nebenrückführsteuereinrichtung zum Ausführen einer Nebenrückführsteuerung im Ansprechen auf einen Befehl, wobei die Nebenrückführsteuerung das Luft-Kraftstoff-Verhältnis eines Gasgemisches, das zu dem Verbrennungsmotor geliefert wird, zu einem Luft-Kraftstoff-Verhältnis ändert, das sich an der noch weiter fetten Seite befindet, wenn der von dem stromabwärtigen Luft-Kraftstoff-Verhältnissensor (67) abgegebene Abgabewert ein Wert ist, der einem Luft-Kraftstoff-Verhältnis der mageren Seite in Bezug auf ein stromabwärtiges Soll-Luft-Kraftstoff-Verhältnis entspricht, das ein Luft-Kraftstoff-Verhältnis ist, das zu der fetten Seite hin von dem stöchiometrischen Luft-Kraftstoff-Verhältnis um einen vorbestimmten Betrag verschoben ist, und das Luft-Kraftstoff-Verhältnis des Gasgemisches, das zu dem Verbrennungsmotor geliefert wird, zu einem Luft-Kraftstoff-Verhältnis der noch weiter mageren Seite ändert, wenn der von dem stromabwärtigen Luft-Kraftstoff-Verhältnissensor (67) abgegebene Abgabewert ein Wert ist, der einem Luft-Kraftstoff-Verhältnis der fetten Seite in Bezug auf das stromabwärtige Soll-Luft-Kraftstoff-Verhältnis entspricht; und
eine Befehlseinrichtung zum Liefern von Befehlen zu der Hauptrückführsteuereinrichtung und der Nebenrückführsteuereinrichtung in derartiger Weise, dass bestimmt wird, dass der stromabwärtige Katalysator (55) den reduzierten Zustand erreicht hat, das stromaufwärtige Soll-Luft-Kraftstoff-Verhältnis auf das stöchiometrische Luft-Kraftstoff-Verhältnis festgelegt wird, und die Hauptrückführsteuerung und die Nebenrückführsteuerung ausgeführt werden, um dadurch eine gewöhnliche Rückführsteuerung auszuführen; und, nach einem Zeitpunkt, bei dem bestimmt wird, dass der stromabwärtige Katalysator (55) den reduzierten Zustand erreicht hat, eine Filterregenerationssteuerung über eine vorbestimmte Zeitspanne in einer derartigen Weise ausgeführt wird, dass das stromaufwärtige Soll-Luft-Kraftstoff-Verhältnis auf ein mageres Luft-Kraftstoff-Verhältnis festgelegt wird, das ein Luft-Kraftstoff-Verhältnis ist, das zu der mageren Seite von dem stöchiometrischen Luft-Kraftstoff-Verhältnis verschoben ist, die Hauptrückführsteuerung ausgeführt wird, und die Nebenrückführsteuerung angehalten wird, wodurch Sauerstoff zu dem Partikulatsammelfilter (54) geliefert wird und durch den Partikulatsammelfilter (54) gesammelte Partikulate verbrannt werden.

20. Steuervorrichtung für einen Verbrennungsmotor gemäß Anspruch 19, wobei die Reduziertzustandsbestimmungseinrichtung derart aufgebaut ist, dass, nach einer vorbestimmten ersten Akkumulationsstartzeit während der gewöhnlichen Rückführsteuerung, die Reduziertzustandsbestimmungseinrichtung einen ersten kumulativen Wert erlangt, der einem kumulativen Wert einer Reduktionskomponentenüberschussmenge entspricht, die erlangt wird, indem von einer Menge an Reduktionskomponenten, die nicht verbrannte Substanzen sind, die von dem Verbrennungsmotor zu dem Abgaskanal (52) abgegeben werden, eine Menge an Oxidationskomponenten, die von dem Verbrennungsmotor abgegeben werden und die die Reduktionskomponenten oxidieren, subtrahiert wird; sie bestimmt, ob der erste kumulative Wert gleich wie oder größer als der erste vorbestimmte Wert geworden ist oder nicht; und sie bestimmt, dass der stromabwärtige Katalysator (55) den reduzierten Zustand erreicht hat, wenn bestimmt wird, dass der erste kumulative Wert gleich wie oder größer als der erste vorbestimmte Wert geworden ist.

21. Steuervorrichtung für einen Verbrennungsmotor gemäß Anspruch 20, die des Weiteren folgendes aufweist:

eine Kraftstoffabschalteinrichtung zum Anhalten der Lieferung von Kraftstoff zu dem Verbrennungsmotor, wenn der Verbrennungsmotor in einen vorbestimmten Kraftstoffabschaltbetriebszustand eintritt, wobei
die Befehlseinrichtung die Befehle zu der Hauptrückführsteuereinrichtung und der Nebenrückführeinrichtung derart liefert, dass die gewöhnliche Rückführsteuerung nach der Kraftstoffabschaltendzeit ausgeführt wird, bei der das Anhalten der Lieferung des Kraftstoffs zu dem Verbrennungsmotor durch die Kraftstoffabschalteinrichtung aufgehoben ist und die Lieferung an Kraftstoff zu dem Verbrennungsmotor wieder aufgenommen wird; und
die Reduziertzustandsbestimmungseinrichtung die erste Kumulationsstartzeit auf entweder die Kraftstoffabschaltendzeit oder eine Fettinversionszeit einstellt, die ein Zeitpunkt ist, bei dem der von dem stromabwärtigen Luft-Kraftstoff-Verhältnissensor (67) abgegebene Abgabewert zuerst ein Wert, der einen Luft-Kraftstoff-Verhältnis der fetten Seite in Bezug auf das stöchiometrische Luft-Kraftstoff-Verhältnis entspricht, nach der Kraftstoffabschaltendzeit geworden ist.

22. Steuervorrichtung für einen Verbrennungsmotor gemäß einem der Ansprüche 8 bis 13, 20 oder 21, wobei die Reduziertzustandsbestimmungseinrichtung als den ersten kumulativen Wert einen Wert erlangt, der einem kumulativen Wert der Einlassluftmenge des Verbrennungsmotors von der ersten Akkumulationsstartzeit entspricht.

23. Steuervorrichtung für einen Verbrennungsmotor gemäß Anspruch 1, die des Weiteren folgendes aufweist:

einen stromaufwärtigen Katalysator (53), der ein Drei-Wege-Katalysator ist, der in einem Abgaskanal (52) des Verbrennungsmotors (10) angeordnet ist; und
eine Fettsteuereinrichtung die betreibbar ist, wenn bestimmt wird, dass der stromabwärtige Katalysator (55) den reduzierten Zustand noch nicht erreicht hat, zum Steuern des Luft-Kraftstoff-Verhältnisses des Gasgemisches, das zu dem Verbrennungsmotor geliefert wird, in derartige Weise, dass das durchschnittlich gestaltete Luft-Kraftstoff-Verhältnis des Gasgemisches, das zu dem Verbrennungsmotor geliefert wird, ein schwach fettes Luft-Kraftstoff-Verhältnis wird, das zu der fetten Seite hin von dem stöchiometrischen Luft-Kraftstoff-Verhältnis abweicht.

## Revendications

1. Équipement de commande pour un moteur à combustion interne à essence (10) ayant un filtre de collecte de particules (54) disposé dans un conduit d'échappement (52) du moteur à combustion interne et un pot catalytique aval (55) qui est un pot catalytique à trois voies et qui est disposé dans le conduit d'échappement (52) à un emplacement en aval du filtre de collecte de particules (54), comprenant en outre :

un moyen de détermination d'état réduit destiné à déterminer si le pot catalytique aval (55) a atteint un état réduit dans lequel le pot catalytique aval (55) peut éliminer une quantité prédéterminée d'oxydes d'azote ; et
un moyen (71) de commande de rapport air-carburant destiné à exécuter une commande de rapport air-carburant presque stoechiométrique qui commande le rapport air-carburant moyen d'un mélange gazeux qui contient de l'air et du carburant et qui est délivré au moteur dans un premier rapport air-carburant à l'intérieur d'une plage prédéterminée de rapports air-carburant où est inclus le rapport air-carburant stoechiométrique, et à exécuter, lorsqu'il est déterminé que le pot catalytique aval (55) a atteint l'état réduit, une commande de régénération de filtre, sur une période prédéterminée de temps, qui commande le rapport air-carburant moyen du mélange gazeux à délivrer au moteur dans un second rapport air-carburant qui est du côté pauvre par rapport au premier rapport air-carburant et du côté pauvre par rapport au rapport air-carburant stoechiométrique, pour délivrer ainsi de l'oxygène au filtre de collecte de particules (54) et pour brûler les particules collectées par le filtre de collecte de particules (54).

2. Équipement de commande selon la revendication 1 pour un moteur à combustion interne, comprenant en outre :

un capteur (67) de rapport air-carburant aval qui est disposé dans le conduit d'échappement (52) de façon à être situé entre le filtre de collecte de particules (54) et le pot catalytique aval (55) et qui sort une valeur de sortie correspondant au rapport air-carburant du gaz s'écoulant dans la région où est disposé le capteur (67), dans lequel le moyen (71) de commande de rapport air-carburant exécute la commande de rapport air-carburant presque stoechiométrique en exécutant une commande secondaire de réaction de manière que, lorsque la valeur de sortie, sortie du capteur (67) de rapport air-carburant aval, est une valeur correspondant à un rapport air-carburant du côté pauvre par rapport à un rapport air-carburant cible aval fixé comme étant le premier rapport air-carburant, le moyen de commande de rapport air-carburant change le rapport air-carburant du mélange gazeux à délivrer au moteur pour un rapport air-carburant du côté riche et, lorsque la valeur de sortie, sortie du capteur (67) de rapport air-carburant aval, est une valeur correspondant à un rapport air-carburant du côté riche par rapport au rapport air-carburant cible aval, le moyen de commande de rapport air-carburant change le rapport air-carburant du mélange gazeux à délivrer au moteur pour un rapport air-carburant davantage du côté pauvre, et

dans lequel le moyen de commande de rapport air-carburant exécute la commande de régénération de filtre en exécutant une commande de maintien pauvre de manière que, même lorsque la valeur de sortie, sortie du capteur (67) de rapport air-carburant aval, est une valeur correspondant à un rapport air-carburant du côté pauvre par rapport au rapport air-carburant cible aval, le moyen de commande de rapport air-carburant maintient le rapport air-carburant moyen du mélange gazeux à délivrer au moteur au second rapport air-carburant, sans changer le rapport air-carburant du mélange gazeux à délivrer au moteur pour un rapport air-carburant davantage du côté riche.

3. Équipement de commande selon la revendication 2 pour un moteur à combustion interne, dans lequel le moyen de commande de rapport air-carburant arrête la commande secondaire de réaction dans une période dans laquelle est exécutée la commande de régénération de filtre.

4. Équipement de commande selon la revendication 1 pour un moteur à combustion interne, comprenant en outre :

un capteur (67) de rapport air-carburant aval qui est disposé dans le conduit d'échappement (52) de façon à être situé entre le filtre de collecte de particules (54) et le pot catalytique aval (55) et qui sort une valeur de sortie correspondant au rapport air-carburant du gaz s'écoulant dans la région où est disposé le capteur, dans lequel le moyen de commande de rapport air-carburant continue la commande de régénération de filtre jusqu'à un point dans le temps où la valeur de sortie, sortie du capteur (67) de rapport air-carburant aval, devient égale à une valeur correspondant à un rapport air-carburant du côté pauvre par rapport au rapport air-carburant stoechiométrique après que la valeur de sortie est devenue égale à une valeur correspondant au rapport air-carburant stoechiométrique après le début de la commande de régénération de filtre.

5. Équipement de commande selon l'une quelconque des revendications 2 à 4 pour un moteur à combustion interne, dans lequel le moyen de détermination d'état réduit obtient une première valeur cumulative correspondant à une valeur cumulative d'une quantité excessive de composants de réduction en soustrayant, d'une quantité de composants de réduction, qui sont des substances non brûlées évacuées du moteur dans le conduit d'échappement (52), une quantité de composants d'oxydation qui sont évacués du moteur et qui oxydent les composants de réduction, et détermine sur la base de la première valeur cumulative si le pot catalytique aval (55) a ou non atteint l'état réduit.

6. Équipement de commande selon la revendication 1 pour un moteur à combustion interne, dans lequel le moyen de détermination d'état réduit obtient une première valeur cumulative correspondant à une valeur cumulative d'une quantité excessive de composants de réduction en soustrayant, d'une quantité de composants de réduction, qui sont des substances non brûlées évacuées du moteur dans le conduit d'échappement (52), une quantité de composants d'oxydation qui sont évacués du moteur et qui oxydent les composants de réduction, et détermine sur la base de la première valeur cumulative si le pot catalytique aval (55) a ou non atteint l'état réduit.

7. Équipement de commande selon la revendication 6 pour un moteur à combustion interne, comprenant en outre :

un moyen de coupure du carburant destiné à arrêter la délivrance de carburant au moteur lorsque le moteur entre dans un état prédéterminé de fonctionnement avec carburant coupé, dans lequel le moyen de détermination d'état réduit obtient la première valeur cumulative dont le calcul cumulatif est démarré à un premier instant prédéterminé de début de cumul après un instant de fin de coupure de carburant auquel est annulé l'arrêt de délivrance de carburant au moteur par le moyen de coupure de carburant et auquel la délivrance de carburant au moteur est reprise ; détermine si la première valeur cumulative est ou non devenue égale ou supérieure à une première valeur prédéterminée ; et détermine que le pot catalytique aval (55) a atteint l'état réduit lorsqu'il est déterminé que la première valeur cumulative est devenue égale ou supérieure à la première valeur prédéterminée.

8. Équipement de commande selon la revendication 7 pour un moteur à combustion interne, dans lequel le moyen de commande de rapport air-carburant commande le rapport air-carburant moyen du mélange gazeux à délivrer au moteur à un rapport air-carburant décalé vers le côté riche par rapport au rapport air-carburant stoechiométrique dans une période postérieure à la coupure de carburant, qui est une période entre l'instant de fin de coupure de carburant et un point dans le temps où la première valeur cumulative devient égale ou supérieure à la première valeur prédéterminée.

9.  Équipement de commande selon la revendication 8 pour un moteur à combustion interne, comprenant en outre :

   un capteur (67) de rapport air-carburant aval qui est disposé dans le conduit d'échappement (52) de façon à être situé entre le filtre de collecte de particules (54) et le pot catalytique aval (55) et qui sort une valeur de sortie correspondant au rapport air-carburant du gaz s'écoulant dans la région où est disposé le capteur,
   dans lequel, dans la période postérieure à la coupure de carburant, le moyen de commande de rapport air-carburant choisit, comme rapport air-carburant cible postérieur à la coupure de carburant, soit un rapport air-carburant qui tombe à l'intérieur de la plage prédéterminée de rapports air-carburant et qui est décalé vers le côté riche par rapport au rapport air-carburant stoechiométrique soit un rapport air-carburant qui tombe à l'extérieur de la plage prédéterminée de rapports air-carburant et qui est décalé vers le côté riche par rapport au rapport air-carburant stoechiométrique ; et dans lequel le moyen de commande de rapport air-carburant exécute une commande de réaction postérieure à la coupure de carburant de manière que :

      lorsque la valeur de sortie, sortie du capteur (67) de rapport air-carburant aval, est une valeur correspondant à un rapport air-carburant du côté pauvre par rapport au rapport air-carburant cible postérieur à la coupure de carburant, le moyen de commande de rapport air-carburant change le rapport air-carburant du mélange gazeux à délivrer au moteur pour un rapport air-carburant davantage du côté riche ; et
      lorsque la valeur de sortie, sortie du capteur (67) de rapport air-carburant aval, est une valeur correspondant à un rapport air-carburant du côté riche par rapport au rapport air-carburant cible postérieur à la coupure de carburant, le moyen de commande de rapport air-carburant change le rapport air-carburant du mélange gazeux à délivrer au moteur pour un rapport air-carburant davantage du côté pauvre,
      ce par quoi le rapport air-carburant moyen du mélange gazeux à délivrer au moteur est commandé à un rapport air-carburant décalé vers le côté riche par rapport au rapport air-carburant stoechiométrique.

10.  Équipement de commande selon la revendication 9 pour un moteur à combustion interne, dans lequel le rapport air-carburant cible postérieur à la coupure de carburant est fixé à un rapport air-carburant qui tombe à l'intérieur de la plage prédéterminée de rapports air-carburant et est décalé, d'une quantité prédéterminée, vers le côté riche par rapport au rapport air-carburant stoechiométrique, et le premier rapport air-carburant est fixé de façon à être égal au rapport air-carburant cible postérieur à la coupure de carburant.

11.  Équipement de commande selon l'une quelconque des revendications 8 à 10 pour un moteur à combustion interne, comprenant en outre :

   un pot catalytique amont (53) qui est un pot catalytique à trois voies et qui est disposé dans le conduit d'échappement (52) de façon à être situé en amont du filtre de collecte de particules (54),
   dans lequel le moyen de détermination d'état réduit fixe le premier instant de début de cumul à l'instant de fin de coupure de carburant, obtient une quantité maximale d'emmagasinage d'oxygène du pot catalytique amont (53), et détermine la première valeur prédéterminée de façon que la première valeur prédéterminée devienne plus grande lorsque la quantité maximale obtenue d'emmagasinage d'oxygène du pot catalytique amont (53) est plus grande.

12.  Équipement de commande selon la revendication 8 pour un moteur à combustion interne, comprenant en outre :

   un capteur (67) de rapport air-carburant aval qui est disposé dans le conduit d'échappement (52) de façon à être situé entre le filtre de collecte de particules (54) et le pot catalytique aval (55) et qui sort une valeur de sortie correspondant à un rapport air-carburant du gaz s'écoulant dans la région où est disposé le capteur ; et
   un pot catalytique amont (53) qui est un pot catalytique à trois voies et qui est disposé dans le conduit d'échappement (52) de façon à être situé en amont du filtre de collecte de particules (54),
   dans lequel le moyen de détermination d'état réduit fixe le premier instant de début de cumul à un instant d'inversion riche, qui est un point dans le temps où la valeur de sortie, sortie du capteur (67) de rapport air-carburant aval, est devenue une valeur correspondant à un rapport air-carburant du côté riche par rapport au rapport air-carburant stoechiométrique pour la première fois après l'instant de fin de coupure de carburant.

13.  Équipement de commande selon la revendication 9 ou 10 pour un moteur à combustion interne, comprenant en outre :

un pot catalytique amont (53) qui est un pot catalytique à trois voies et qui est disposé dans le conduit d'échappement (52) de façon à être situé en amont du filtre de collecte de particules (54),

dans lequel le moyen de détermination d'état réduit fixe le premier instant de début de cumul à un instant d'inversion riche, qui est un point dans le temps où la valeur de sortie, sortie du capteur (67) de rapport air-carburant aval, est devenue une valeur correspondant à un écart de rapport air-carburant vers le côté riche par rapport au rapport air-carburant stoechiométrique pour la première fois après l'instant de fin de coupure de carburant.

14. Équipement de commande selon la revendication 1 pour un moteur à combustion interne, dans lequel, à partir d'un second instant prédéterminé de début de cumul après le début de la commande de régénération de filtre, le moyen de commande de rapport air-carburant obtient une seconde valeur cumulative correspondant à une valeur cumulative d'une quantité excessive de composants d'oxydation obtenue en soustrayant, de la quantité de composants d'oxydation évacués du moteur dans le conduit d'échappement (52), la quantité de composants de réduction qui sont des substances non brûlées évacuées du moteur et qui réduisent les composants d'oxydation ; et dans lequel le moyen de commande de rapport air-carburant met fin à la commande de régénération de filtre lorsque la seconde valeur cumulative obtenue devient égale ou supérieure à une seconde valeur prédéterminée.

15. Équipement de commande selon la revendication 14 pour un moteur à combustion interne, dans lequel le moyen de commande de rapport air-carburant fixe le second instant de début de cumul à un point dans le temps où démarre la commande de régénération de filtre.

16. Équipement de commande selon la revendication 15 pour un moteur à combustion interne, comprenant en outre :

un pot catalytique amont (53) qui est un pot catalytique à trois voies et qui est disposé dans le conduit d'échappement (52) de façon à être situé en amont du filtre de collecte de particules (54), dans lequel le moyen de commande de rapport air-carburant obtient une quantité maximale d'emmagasinage d'oxygène du pot catalytique amont (53), et détermine la seconde valeur prédéterminée de façon que la seconde valeur prédéterminée devienne plus grande lorsque la quantité maximale obtenue d'emmagasinage d'oxygène du pot catalytique amont (53) est plus grande.

17. Équipement de commande selon la revendication 14 pour un moteur à combustion interne, comprenant en outre :

un pot catalytique amont (53) qui est un pot catalytique à trois voies et qui est disposé dans le conduit d'échappement (52) de façon à être situé en amont du filtre de collecte de particules (54) ; et
un capteur (67) de rapport air-carburant aval qui est disposé dans le conduit d'échappement (52) de façon à être situé entre le filtre de collecte de particules (54) et le pot catalytique aval (55) et qui sort une valeur de sortie correspondant à un rapport air-carburant du gaz s'écoulant dans la région où est disposé le capteur,
dans lequel le moyen de commande de rapport air-carburant fixe le second instant de début de cumul à instant d'inversion pauvre, qui est un point dans le temps où la valeur de sortie, sortie du capteur (67) de rapport air-carburant aval, est devenue une valeur correspondant à un rapport air-carburant décalé, d'une quantité prédéterminée, vers le côté pauvre par rapport au rapport air-carburant stoechiométrique, pour la première fois après le début de la commande de régénération de filtre.

18. Équipement de commande selon l'une quelconque des revendications 14 à 17 pour un moteur à combustion interne, dans lequel le moyen de commande de rapport air-carburant obtient, comme seconde valeur cumulative, une valeur correspondant à la valeur cumulative de la quantité d'air d'admission du moteur à partir du second instant de début de cumul.

19. Équipement de commande selon la revendication 1 pour un moteur à combustion interne, comprenant en outre :

un pot catalytique amont (53) qui est un pot catalytique à trois voies disposé dans le conduit d'échappement (52) du moteur à combustion interne ;
un capteur (66) de rapport air-carburant amont qui est disposé dans le conduit d'échappement (52) à un emplacement en amont du pot catalytique amont (53) et qui sort une valeur de sortie correspondant à un rapport air-carburant du gaz s'écoulant dans la région où est disposé le capteur (66) de rapport air-carburant amont ;
un capteur (67) de rapport air-carburant aval qui est disposé dans le conduit d'échappement (52) à un emplacement entre le filtre de collecte de particules (54) et le pot catalytique aval (55) et qui sort une valeur de sortie correspondant à un rapport air-carburant du gaz s'écoulant dans la région où est disposé le capteur (67) de rapport air-carburant aval ;

un moyen de commande secondaire de réaction destiné à exécuter une commande secondaire de réaction en réponse à une instruction, la commande secondaire de réaction changeant le rapport air-carburant du mélange gazeux à délivrer au moteur pour un rapport air-carburant davantage du côté riche lorsque la valeur de sortie, sortie du capteur (67) de rapport air-carburant aval, est une valeur correspondant à un rapport air-carburant du côté pauvre par rapport à un rapport air-carburant cible aval, qui est un rapport air-carburant décalé, d'une quantité prédéterminée, vers le côté riche par rapport au rapport air-carburant stoechiométrique, et changeant le rapport air-carburant du mélange gazeux à délivrer au moteur pour un rapport air-carburant davantage du côté pauvre lorsque la valeur de sortie, sortie du capteur (67) de rapport air-carburant aval, est une valeur correspondant à un rapport air-carburant du côté riche par rapport au rapport air-carburant cible aval ; et

un moyen d'instruction destiné à délivrer des instructions au moyen de commande principale de réaction et au moyen de commande secondaire de réaction de façon que, jusqu'à ce qu'il soit déterminé que le pot catalytique aval (55) a atteint l'état réduit, le rapport air-carburant cible amont est fixé au rapport air-carburant stoechiométrique, et les commandes principale et secondaire de réaction sont exécutées pour exécuter ainsi une commande ordinaire de réaction ; et, après un point dans le temps où il est déterminé que le pot catalytique aval (55) a atteint l'état réduit, la commande de régénération de filtre est exécutée sur une période prédéterminée de temps de manière que le rapport air-carburant cible amont est fixé à un rapport air-carburant pauvre, qui est un rapport air-carburant décalé vers le côté pauvre par rapport au rapport air-carburant stoechiométrique, la commande principale de réaction est exécutée, et la commande secondaire de réaction est arrêtée, ce par quoi de l'oxygène est délivré au filtre de collecte de particules (54) et les particules collectées par le filtre de collecte de particules (54) sont brûlées.

20. Équipement de commande selon la revendication 19 pour un moteur à combustion interne, dans lequel le moyen de détermination d'état réduit est constitué de façon que, après un premier instant prédéterminé de début de cumul durant la commande ordinaire de réaction, le moyen de détermination d'état réduit obtient une première valeur cumulative correspondant à une valeur cumulative d'une quantité excessive de composants de réduction obtenue en soustrayant, de la quantité de composants de réduction qui sont des substances non brûlées évacuées du moteur dans le conduit d'échappement (52), une quantité de composants d'oxydation qui sont évacués du moteur et qui oxydent les composants de réduction ; détermine si la première valeur cumulative est ou non devenue égale ou supérieure à une première valeur prédéterminée ; et détermine que le pot catalytique aval (55) a atteint l'état réduit lorsqu'il est déterminé que la première valeur cumulative est devenue égale ou supérieure à la première valeur prédéterminée.

21. Équipement de commande selon la revendication 20 pour un moteur à combustion interne, comprenant en outre :

un moyen de coupure du carburant destiné à arrêter la délivrance de carburant au moteur lorsque le moteur entre dans un état prédéterminé de fonctionnement avec carburant coupé,

dans lequel le moyen d'instruction délivre les instructions au moyen de commande principale de réaction et au moyen de commande secondaire de réaction de façon que la commande ordinaire de réaction soit exécutée après l'instant de fin de coupure de carburant, auquel est annulé l'arrêt de délivrance de carburant au moteur par le moyen de coupure de carburant et auquel est reprise la délivrance de carburant au moteur, et

dans lequel le moyen de détermination d'état réduit fixe le premier instant de début de cumul soit à l'instant de fin de coupure de carburant soit à un instant d'inversion riche qui est un point dans le temps où la valeur de sortie, sortie du capteur (67) de rapport air-carburant aval, est devenue en premier une valeur correspondant à un rapport air-carburant du côté riche par rapport au rapport air-carburant stoechiométrique après l'instant de fin de coupure de carburant.

22. Équipement de commande selon l'une quelconque des revendications 8 à 13, 20 et 21 pour un moteur à combustion interne, dans lequel le moyen de détermination d'état réduit obtient, comme première valeur cumulative, une valeur cumulative correspondant à la valeur cumulative de la quantité d'air d'admission du moteur à partir du premier instant de début de cumul.

23. Équipement de commande selon la revendication 1 pour un moteur à combustion interne, comprenant en outre :

un pot catalytique amont (53) qui est un pot catalytique à trois voies disposé dans le conduit d'échappement (52) du moteur à combustion interne (10) ; et,

un moyen de commande riche, utilisable lorsqu'il est déterminé que le pot catalytique aval (55) n'a pas encore atteint l'état réduit, pour commander le rapport air-carburant du mélange gazeux à délivrer au moteur de façon que le rapport air-carburant moyen du mélange gazeux à délivrer au moteur devienne un rapport air-carburant légèrement riche s'écartant en direction du côté riche par rapport au rapport air-carburant staechiométrique.

# FIG.1

# FIG.2

EP 2 063 090 B1

# FIG.3

# FIG.4

# FIG.5

EP 2 063 090 B1

# FIG.6

GENERAL FLOWCHART — 600

FUEL CUT CONDITION SATISFIED? — 610
No

Yes

FUEL CUT CONTROL — 620

WEAK-RICH-CONTROL-PERIOD CUMULATIVE AIR AMOUNT tGaSR $\geq$ Rth ? — 630
No

Yes

FILTER-REGENERATION-CONTROL-PERIOD CUMULATIVE AIR AMOUNT tGaSL $\geq$ Lth ? — 650
Yes

No

AIR-FUEL RATIO LEAN CONTROL (FILTER REGENERATION CONTROL) — 660

EXECUTE MAIN FEEDBACK (TARGET AIR-FUEL RATIO abyfr $\leftarrow$ aflean) STOP SUB FEEDBACK

AIR-FUEL RATIO WEAK RICH CONTROL (NEAR STOICHIOMETRIC AIR-FUEL RATIO CONTROL) — 640

EXECUTE MAIN FEEDBACK (TARGET AIR-FUEL RATIO abyfr $\leftarrow$ stoich) EXECUTE SUB FEEDBACK

RETURN — 695

63

# FIG.7

# FIG.8

# FIG.9

$$KF = \frac{Fbaset(k-N)}{Fbaseb(k-N)} = \frac{(abyfs(k) \cdot Fi(k-N)) \diagup abyfr(k-N)}{Fbaseb(k-N)}$$

Fbaset: TRUE INJECTION AMOUNT REQUIRED FOR OBTAINING
TARGET AIR-FUEL RATIO

EP 2 063 090 B1

# FIG.10

# FIG.11

CALCULATION OF Fi AND
INJECTION — 1100

OBTAIN Mc(k) FROM NE,Ga,MapMc — 1105

OBTAIN abyfr(k) — 1110

Fbaseb(k)←Mc(k)/abyfr(k) — 1115

FUEL CUT
CONDITION SATISFIED? — 1120 — Yes

No

READ KF CORRESPONDING TO
OPERATION STATE — 1125

Fbase←KF·Fbaseb(k) — 1130

Fi(k)←Fbase·KFmain + Fisub — 1135

INSTRUCT INJECTION OF FUEL OF
Fi(k) — 1140

RETURN — 1195

# FIG.12

CALCULATION OF MAIN FEEDBACK
CORRECTION VALUE KFmain ~1200

abyfrtgt(k) ← $\alpha$ ·abyfrtgtold + (1−$\alpha$)·abyfr(k−N) ~1205

abyfrtgtold ← abyfrtgt(k) ~1210

XmainFB = 1 ? ~1215 → No

Yes

abyfs(k)←Mapabyfs(Vabyfs) ~1220

Daf ← abyfrtgt(k) − abyfs(k) ~1225

OBTAIN DafHi BY PERFORMING
HIGH−PASS FILTER PROCESSING ON Daf ~1230

KFmain ← 1 ~1240

KFmain ← 1 + GpHi·DafHi ~1235

KF ← 1 ~1245

RETURN ~1295

# FIG.13

CALCULATION OF SUB FEEDBACK
CORRECTION VALUE Fisub ~1300

XsubFB = 1 ? ~1305

No

Yes

DVoxs←Voxsref-Voxs ~1310

OBTAIN DVoxslow BY PERFORMING LOW-PASS
FILTER PROCESSING ON DVoxs ~1315

DDVoxslow←(DVoxslow-DVoxslow1)/Δt ~1320

Fisub←Kp·DVoxslow+Ki·SDVoxslow+Kd·DDVoxslow ~1325

SDVoxslow←SDVoxslow+DVoxslow ~1330

DVoxslow1←DVoxslow ~1335

Fisub←0 ~1340

SDVoxslow ← 0 ~1345

RETURN ~1395

# FIG.14

CALCULATION OF BASE
CORRECTION VALUE KF ~1400

1405
XmainFB = 1 ? —— No

Yes

Fbaset(k−N) ← (abyfs(k)・Fi(k−N))／abyfr(k−N) ~1410

KFnew ← Fbaset(k−N)／Fbaseb(k−N) ~1415

READ, AS KFold, KF IN ACCORDANCE WITH
OPERATION RANGE ~1420

KF ← $\beta$・KFold + (1−$\beta$)・KFnew ~1425

STORE KF WHILE RELATING IT TO OPERATION
RANGE ~1430

RETURN ~1495

# FIG.15

DETERMINATION OF MAIN
FEEDBACK TARGET VALUE — 1500

DURING FUEL CUT? — 1505
No

Yes — 1510

XFKI ← 0

— 1515

XL ← 0

— 1520

tGaSR ← 0
tGaSL ← 0

WAS FUEL CUT
PERFORMED LAST TIME? — 1525
No

Yes

XFKI ← 1 — 1530

tGaSR ≧ Rth ? — 1535
No

Yes

tGaSR ← Rth — 1560

IMMEDIATELY AFTER
tGaSR HAS REACHED Rth? — 1565
No

Yes

XL ← 1 — 1570

tGaSL ≧ Lth ? — 1545
No

Yes

XL ← 0 — 1575

tGaSR ← 0
tGaSL ← 0 — 1580

XL = 1 ? — 1550
No

Yes — 1585

abyfr(k) ← aflean

abyfr(k) ← stoich — 1555

RETURN — 1595

# FIG.16

$$\boxed{\begin{array}{c}\text{CALCULATION OF}\\\text{CUMULATIVE AIR AMOUNT}\end{array}}\quad 1600$$

$$XFKI=1\:? \xrightarrow{\text{No}} \quad 1605$$

Yes ⟶ 1610

$$tGaSR \leftarrow tGaSR + \Delta t1 \cdot Ga$$

$$XL=1\:? \xrightarrow{\text{No}} \quad 1615$$

Yes ⟶ 1620

$$tGaSL \leftarrow tGaSL + \Delta t1 \cdot Ga$$

$$\boxed{RETURN}\quad 1695$$

# FIG.17

DETERMINATION OF
FEEDBACK CONDITION ~1700

UPSTREAM AIR-FUEL
RATIO SENSOR
ACTIVATED? ~1705 — No

Yes

NOT IN FUEL CUT
OPERATION? ~1710 — No

Yes

XmainFB ← 1 ~1715

XmainFB ← 0 ~1720

DOWNSTREAM
AIR-FUEL RATIO
SENSOR ACTIVATED? ~1725 — No

Yes

XL= 0 ? ~1730 — No

Yes

IS UPSTREAM TARGET
AIR-FUEL RATIO abyfr(k) IS
STOICHIOMETRIC AIR-FUEL
RATIO stoich? ~1735 — No

Yes

XsubFB ← 1 ~1740

XsubFB ← 0 ~1745

RETURN ~1795

74

# FIG.18

**DETERMINATION OF THRESHOLD** ~1800

**READ Cmax1** ~1810

**DETERMINE FIRST THRESHOLD Rth** ~1820

L1

Rth

L2

Cmax1

**DETERMINE SECOND THRESHOLD Lth** ~1830

L4

Lth

L3

Cmax1

**RETURN** ~1895

# FIG.19

GENERAL FLOWCHART ~1900

610
FUEL CUT CONDITION SATISFIED? — No

Yes — 620

FUEL CUT CONTROL

630
WEAK-RICH-CONTROL-PERIOD CUMULATIVE AIR AMOUNT tGaSR≧Rth ? — No

Yes — 650

FILTER-REGENERATION-CONTROL-PERIOD CUMULATIVE AIR AMOUNT tGaSL≧Lth ? — Yes

No

1910
No — Xkan=1 ?

Yes

660
AIR-FUEL RATIO LEAN CONTROL (FILTER REGENERATION CONTROL)

EXECUTE MAIN FEEDBACK (TARGET AIR-FUEL RATIO abyfr ← aflean) STOP SUB FEEDBACK

640
AIR-FUEL RATIO WEAK RICH CONTROL (NEAR STOICHIOMETRIC AIR-FUEL RATIO CONTROL)

EXECUTE MAIN FEEDBACK (TARGET AIR-FUEL RATIO abyfr ← stoich) EXECUTE SUB FEEDBACK

RETURN ~1995

# FIG.20

MANIPULATION OF FLAG Xkan —2000

2010
IMMEDIATELY AFTER FILTER REGENERATION CONTROL (AIR-FUEL RATIO LEAN CONTROL) WAS STARTED?

No

Yes

Xkan ← 0 —2020

2030
AFTER START OF FILTER REGENERATION CONTROL, HAS AIR-FUEL RATIO BASED ON OUTPUT VALUE OF DOWNSTREAM AIR-FUEL RATIO SENSOR ?
(1) TEMPORARILY COINCIDED WITH STOICHIOMETRIC AIR-FUEL RATIO, AND
(2) AGAIN BECOME AIR-FUEL RATIO ON THE LEAN SIDE IN RELATION TO STOICHIOMETRIC AIR-FUEL RATIO THEREAFTER?

No

Yes

Xkan ← 1 —2040

RETURN —2095

# FIG.21

# FIG.22

```
                    ↑

            ⟨ tGaSL ≧ Lth ? ⟩——1545
                  │          No ─────────────────────┐
                  │ Yes                               │
            ⟨ Xkan＝1 ? ⟩——2210                        │
                  │        No ──────────┐             │
                  │ Yes                 │             │
                  │                     │  ┌──────2220 │
                  │                     │  │ tGaSL ← Lth │
             ┌──────────┐               │  └───────────┘ │
             │ XL ← 0   │——1575         │        │       │
             └──────────┘               │        │       │
            ┌──────────────┐            │        │       │
            │ tGaSR ← 0    │——1580      └────────┘       │
            │ tGaSL ← 0    │                 │           │
            └──────────────┘                 ↓           │
                  │ ←──────────────────────────────────┘
                  │
            ⟨ XL = 1 ? ⟩——1550
                  │      No ──────────────┐
                  │ Yes ——1585            │         ——1555
        ┌────────────────────┐   ┌────────────────────┐
        │ abyfr(k) ← aflean  │   │ abyfr(k) ← stoich  │
        └────────────────────┘   └────────────────────┘
                  │                       │
          ↙───────┴───────────────────────┘
                  ↓
```

# FIG.23

GENERAL FLOWCHART ~2300

FUEL CUT CONDITION SATISFIED? — 610 — No

Yes — 620

FUEL CUT CONTROL

POST-INVERSION-WEAK-RICH-CONTROL-PERIOD CUMULATIVE AIR AMOUNT $tGaSRH \geqq RHth$ ? — 2310 — No

Yes — 2320

POST-INVERSION-FILTER-REGENERATION-CONTROL-PERIOD CUMULATIVE AIR AMOUNT $tGaSLH \geqq LHth$ ? — Yes

No — 660

**AIR-FUEL RATIO LEAN CONTROL (FILTER REGENERATION CONTROL)**

EXECUTE MAIN FEEDBACK (TARGET AIR-FUEL RATIO $abyfr \leftarrow aflean$) STOP SUB FEEDBACK

640

**AIR-FUEL RATIO WEAK RICH CONTROL (NEAR STOICHIOMETRIC AIR-FUEL RATIO CONTROL)**

EXECUTE MAIN FEEDBACK (TARGET AIR-FUEL RATIO $abyfr \leftarrow stoich$) EXECUTE SUB FEEDBACK

RETURN ~2395

# FIG.24

CALCULATION OF POST-INVERSION CUMULATIVE AIR AMOUNT — 2400

2405
DURING FUEL CUT?  No

Yes  2410
tGaSRH ← 0

2415
HASn't AIR-FUEL RATIO BASED ON OUTPUT VALUE OF DOWNSTREAM AIR-FUEL RATIO SENSOR CHANGED TO RICH-SIDE AIR-FUEL RATIO IN RELATION TO STOICHIOMETRIC AIR-FUEL RATIO AFTER FUEL CUT END, OR AFTER COMPLETION OF AIR-FUEL RATIO LEAN CONTROL (AFTER START OF AIR-FUEL RATIO WEAK RICH CONTROL)?  No

Yes  2420
tGaSRH ← 0

2425
DURING AIR-FUEL RATIO WEAK RICH CONTROL? (DURING NEAR STOICHIOMETRIC AIR-FUEL RATIO CONTROL?)  No

Yes  2430
tGaSRH ← tGaSRH + Δt1·Ga

2435
tGaSRH ≧ RHth ?  No

Yes  2440
tGaSRH ← RHth

2445
HASn't AIR-FUEL RATIO BASED ON OUTPUT VALUE OF DOWNSTREAM AIR-FUEL RATIO SENSOR CHANGED TO LEAN-SIDE AIR-FUEL RATIO IN RELATION TO STOICHIOMETRIC AIR-FUEL RATIO AFTER COMPLETION OF AIR-FUEL RATIO WEAK RICH CONTROL (AFTER START OF AIR-FUEL RATIO LEAN CONTROL)?  No

Yes  2450
tGaSLH ← 0

2455
DURING AIR-FUEL RATIO LEAN CONTROL?(DURING FILTER REGENERATION CONTROL?)  No

Yes  2460
tGaSLH ← tGaSLH + Δt1·Ga

2465
tGaSLH ≧ LHth ? (IMMEDIATELY AFTER START OF AIR-FUEL RATIO WEAK RICH CONTROL?)  No

Yes  2470
tGaSRH ← 0
tGaSLH ← 0

RETURN — 2495

# FIG.25

EP 2 063 090 B1

**EP 2 063 090 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005240719 A
- WO 2002086301 A
- EP 1953358 A
- JP 2005194981 A
- JP 2006057461 A
- JP 2005207286 A
- JP 2007278186 A
- JP 2006010738 A